(19) Europäisches Patentamt
European Patent Office
Office européen des brevets

(11) **EP 3 214 429 B1**

(12) **EUROPEAN PATENT SPECIFICATION**

(45) Date of publication and mention
of the grant of the patent:
**03.03.2021 Bulletin 2021/09**

(21) Application number: **15855294.3**

(22) Date of filing: **19.05.2015**

(51) Int Cl.:
**G01N 21/53** *(2006.01)*          **G01N 15/14** *(2006.01)*
**G01N 15/02** *(2006.01)*          **G01N 15/00** *(2006.01)*

(86) International application number:
**PCT/JP2015/002513**

(87) International publication number:
**WO 2016/067484 (06.05.2016 Gazette 2016/18)**

(54) **PARTICLE DETECTION SENSOR**

PARTIKELDETEKTIONSSENSOR

CAPTEUR DE DÉTECTION DE PARTICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2014 JP 2014223788
31.10.2014 JP 2014223802**

(43) Date of publication of application:
**06.09.2017 Bulletin 2017/36**

(73) Proprietor: **Panasonic Intellectual Property
Management Co., Ltd.
Osaka-shi, Osaka 540-6207 (JP)**

(72) Inventors:
• **WATABE, Yoshifumi
Osaka-shi, Osaka 540-6207 (JP)**

• **MATSUNAMI, Hirotaka
Osaka-shi, Osaka 540-6207 (JP)**
• **AKASAKA, Osamu
Osaka-shi, Osaka 540-6207 (JP)**
• **OKITA, Atsushi
Osaka-shi, Osaka 540-6207 (JP)**
• **NOMURA, Kentaro
Osaka-shi, Osaka 540-6207 (JP)**

(74) Representative: **Müller-Boré & Partner
Patentanwälte PartG mbB
Friedenheimer Brücke 21
80639 München (DE)**

(56) References cited:
**EP-A1- 2 388 569          EP-A1- 2 620 762
WO-A1-2013/022971     JP-A- H06 130 014
JP-A- H11 339 153         JP-B2- 3 731 338**

**Description**

TECHNICAL FIELD

The present invention relates to a particle detection sensor.

BACKGROUND ART

Conventionally, scattered light particle detection sensors that detect particles by detecting light that has been scattered (scattered light) by airborne (in gas) particles (aerosol) are known (for example, see Patent Literature (PTL) 1).
The scattered light particle detection sensor disclosed in PTL 1 is a scattered light particle detection sensor including a light projecting element and a light receiving element disposed in a housing (optical chamber). This sensor introduces a gas to be measured into the housing, irradiates the introduced gas with light from the light projecting element, and detects the presence or absence of particles contained in the gas using the scattered light. For example, airborne dust, pollen, smoke, and PM 2.5 (fine particulate matter) can be detected.
EP 2 388 569 A1 describes sensors and methods for high-sensitivity optical particle counting and sizing. In particular, a method of compensating a single-particle optical sizing sensor for sizing particles in a relatively concentrated fluid suspension sample for turbidity of said suspension sample is described. The sensor operates on a light extinction principle whereby a photo-detector produces a signal having a baseline voltage level and a response to blockage of light by a particle as a downwardly extending pulse from said baseline voltage level.

Citation List

Patent Literature

[PTL 1] Japanese Patent No. 3731338
[PTL 2] Japanese Unexamined Patent Application Publication No.

SUMMARY OF THE INVENTION

TECHNICAL PROBLEMS

However, in order to calculate mass concentration, which is the mass of particles included in a unit volume of gas, with a scattered light particle detection sensor, there is a need to further increase particle detection precision.
In view of this, the present invention has a first object to provide a particle detection sensor capable of increasing particle detection precision.
Moreover, a scattered light particle detection sensor is known that includes a light trap across from the light projecting element or the light receiving element for reducing the generation of stray light (for example, see PTL 2).
However, with such as configuration, there may be differences in properties between sensors. In this case, even when then same gas is introduced, there is a concern that the differences in properties may lead to varied detection results between the particle detection sensors. Therefore, the present invention has a second object to provide a particle detection sensor developed to overcome the above described problem by inhibiting varied detection results resulting from differences in properties between sensors and increasing particle detection precision.

SOLUTIONS TO PROBLEMS

According to the present invention a particle detection sensor according to claim 1 is provided.

ADVANTAGEOUS EFFECT OF INVENTION

The particle detection sensor according to the present invention is capable of increasing particle detection precision.

BRIEF DESCRIPTION OF DRAWINGS

FIG. 1 is a block diagram illustrating one example of the configuration of an air purifier including a particle detection sensor according to the embodiment.

FIG. 2 is a perspective view of a sensor according to the embodiment.

FIG. 3 is an exploded perspective view of the sensor according to the embodiment.

FIG. 4 is a cross sectional view illustrating the inside of the housing of the sensor according to the embodiment.

FIG. 5 is a block diagram illustrating a configuration of a signal converter according to the embodiment and related configurations.

FIG. 6 is a flow chart of operations performed by a processor according to the embodiment.

FIG. 7 is a waveform diagram illustrating one example of an analog signal output from a light receiving element according to the embodiment.

FIG. 8A is a waveform diagram illustrating one example of the detection signal according to the embodiment.

FIG. 8B is a waveform diagram illustrating one example of the detection signal according to the embodiment.

FIG. 8C is a waveform diagram illustrating one example of the detection signal according to the embodiment.

FIG. 9 is a flow chart illustrating particle detection processing according to the embodiment.

FIG. 10 illustrates one example of the relationship between the peak value for each particle diameter and distance according to the embodiment.

FIG. 11 is a block diagram for illustrating the initial setting processing of a correction coefficient in a memory, in a manufacturing process of the particle detection sensor according to the embodiment.

FIG. 12 is a flow chart illustrating the initial setting processing of a correction coefficient in a manufacturing process of the particle detection sensor according to the embodiment.

FIG. 13 is a graph for illustrating a correction coefficient calculated by a writer according to the embodiment.

FIG. 14 is a flow chart illustrating peak value counting processing according to the embodiment.

FIG. 15 illustrates one example of the peak value count for each peak value segment according to the embodiment.

FIG. 16 illustrates one example of the particle count for each particle diameter segment according to the embodiment.

FIG. 17 is a block diagram illustrating one example of the configuration of an air purifier including a particle detection sensor according to Variation 1 of the embodiment.

FIG. 18 is a block diagram illustrating one example of the configuration of an air purifier including a particle detection sensor according to Variation 2 of the embodiment.

FIG. 19 is a waveform diagram illustrating one example of a detection signal according to Variation 2 of the embodiment.

FIG. 20 is a flow chart illustrating particle detection processing according to Variation 2 of the embodiment.

FIG. 21 is a flow chart illustrating mass concentration calculation processing according to Variation 2 of the embodiment.

FIG. 22 is a graph illustrating one example of a particle distribution according to Variation 2 of the embodiment.

FIG. 23 is a graph illustrating one example of normalized particle mass according to Variation 2 of the embodiment.

FIG. 24 is a graph illustrating the passage ratio characteristics for a typical PM2.5 particle apparatus used for calculating the mass concentration of PM2.5 in particle detection sensor according to Variation 3 of the embodiment.

FIG. 25 is a block diagram illustrating one example of the configuration of part of a particle detection sensor according to Variation 4 of the embodiment.

FIG. 26 is a circuit diagram illustrating one example of the configuration of an amplifier according to Variation 4 of the embodiment.

FIG. 27A is a graph illustrating output voltage from the amplifier according to Variation 4 of the embodiment.

FIG. 27B is a graph illustrating output voltage from the amplifier according to Variation 4 of the embodiment.

FIG. 28 is a schematic diagram schematically illustrating the connective relationship between the amplifier, determiner, and DA converter according to Variation 4 of the embodiment.

FIG. 29 is a graph illustrating the output from the determiner and the output from the DA converter according to Variation 4 of the embodiment.

FIG. 30 is a block diagram illustrating one example of the configuration of part of a particle detection sensor according to Variation 5 of the embodiment.

FIG. 31 is a circuit diagram illustrating one example of an IV converter according to Variation 5 of the embodiment.

FIG. 32 is a circuit diagram illustrating one example of an amplifier according to Variation 5 of the embodiment.

FIG. 33 schematically illustrates digital data when AGC is not performed by a gain controller and when AGC is performed by the gain controller for both fine and coarse particles, according to Variation 5 of the embodiment.

FIG. 34 is a block diagram illustrating one example of the configuration of part of a particle detection sensor according to Variation 6 of the embodiment.

FIG. 35 schematically illustrates waveforms for an output voltage and waveforms for an input voltage of an amplifier according to Variation 6 of the embodiment.

FIG. 36 illustrates advantageous effects achieved by the particle detection sensor according to Variation 6 of the embodiment.

FIG. 37 illustrates advantageous effects achieved by another example of a particle detection sensor according to Variation 6 of the embodiment.

FIG. 38 is a block diagram illustrating another example of the configuration of part of the particle detection sensor according to Variation 6 of the embodiment.

FIG. 39 is a graph illustrating an urban air quality particle distribution.

FIG. 40 is an external view of an air purifier including a particle detection sensor according to the embodiment.

FIG. 41 is an external view of a smoke detector including a particle detection sensor according to the embodiment.

FIG. 42 is an external view of a ventilation fan including a particle detection sensor according to the embodiment.

FIG. 43 is an external view of an air conditioner including a particle detection sensor according to the embodiment.

DESCRIPTION OF EXEMPLARY EMBODIMENT(S)

Hereinafter, for example, a particle detection sensor according to an embodiment of the present invention will be described with reference to the drawings. Note that the embodiment described below shows a specific, preferred example of the present invention. The numerical values, shapes, materials, elements, the arrangement and connection of the elements, steps, order of the steps, etc., indicated in the following embodiment are mere examples, and therefore are not intended to limit the present invention. Therefore, among the elements in the following embodiment, those not recited in the independent claim defining the most generic part of the present invention are described as optional elements.

Note that the respective figures are schematic diagrams and are not necessarily precise illustrations. Additionally, like structural elements share like reference numbers, and as such, overlapping description may be omitted or abridged.

EMBODIMENT

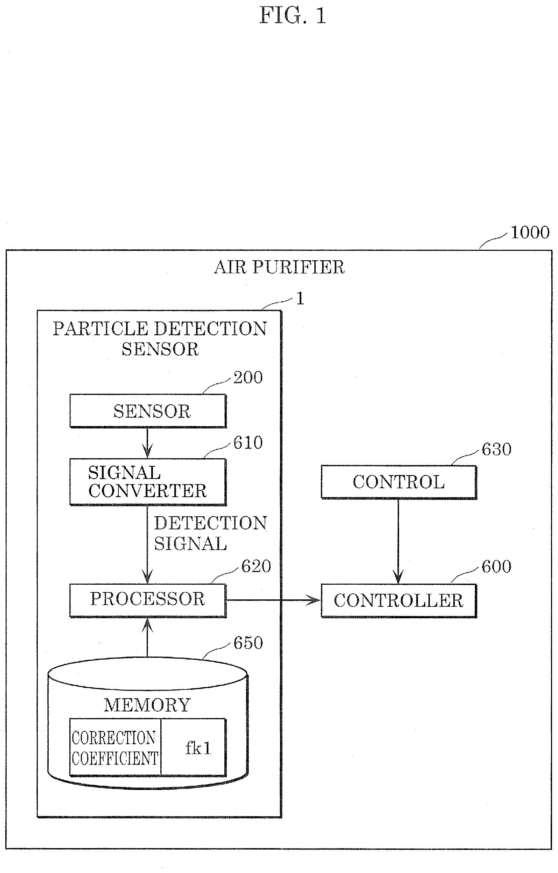

The particle detection sensor according to an embodiment will be described with reference to FIG. 1 through FIG. 16. In this embodiment, the particle detection sensor is exemplified as being included in an air purifier.

(1. Air Purifier Configuration)

First, the configuration of the air purifier according to the embodiment will be described. FIG. 1 is a block diagram illustrating one example of the configuration of air purifier 1000 including particle detection sensor 1 according to the embodiment.

As illustrated in FIG. 1, air purifier 1000 includes particle detection sensor 1 including sensor 200, signal converter 610, and processor 620, and in this embodiment, air purifier 1000 further includes control 630 and controller 600. Moreover, in this embodiment, particle detection sensor 1 further includes memory 650.

In this embodiment, sensor 200 is a sensor that outputs a signal indicating the strength of scattered light scattered by particles. Details regarding the configuration of sensor 200 will be described later.

Signal converter 610 is configured using a circuit including an A/D converter (analog-to-digital converter) and a noise filter. Signal converter 610 converts a signal of the analog signal output from sensor 200 and removed of noise into a digital signal, and outputs the digital signal to processor 620. Note that signal converter 610 is not required; A/D conversion and noise removal processing may be performed by processor 620.

Processor 620 is exemplified as a CPU (central processing unit) or microprocessor, or a computer system including memory, such as RAM (random access memory) and ROM (read only memory). A computer program for calculating the mass concentration of the particles is stored in the memory. The CPU or microprocessor calculates the mass concentration of the particles by operating in accordance with the computer program. Processor 620 calculates the mass concentration for airborne particles in gas using a detection signal. Details regarding operations performed by processor 620 will be described later.

Control 630 is configured of, for example, buttons employing a ratchet mechanism for the user to change the settings of air purifier 1000, such as setting the fan speed, tuning on and off the humidifier function, and setting a timer.

Controller 600 controls operations performed by air purifier 1000. Controller 600 adjusts fan speed in accordance with, for example, the mass concentration output from processor 620 when air purifier 1000 is set to automatic mode, for example. Moreover, controller 600 may be configured to display on a display (not illustrated in the drawings) provided on the housing of air purifier 1000, for example, the current fan speed and/or whether or not particles (house dust) have been detected.

Memory 650 is, for example, memory that stores correction coefficient fk1. For example, memory 650 stores a value dependent on the sensitivity of particle detection sensor 1 installed in memory 650 as the correction coefficient fk1.

Here, correction coefficient fk1 is, for example, a value calculated based on the analog signal output from sensor 200 when a reference particle having a predetermined diameter is introduced into sensor 200, and is generated by being written during a manufacturing process of particle detection sensor 1. In other words, initialization of correction coefficient fk1 takes place during a manufacturing process of particle detection sensor 1. Note that the initial setting processing for the correction coefficient in a manufacturing process will be described later.

(1-1. Overall Configuration of Sensor)

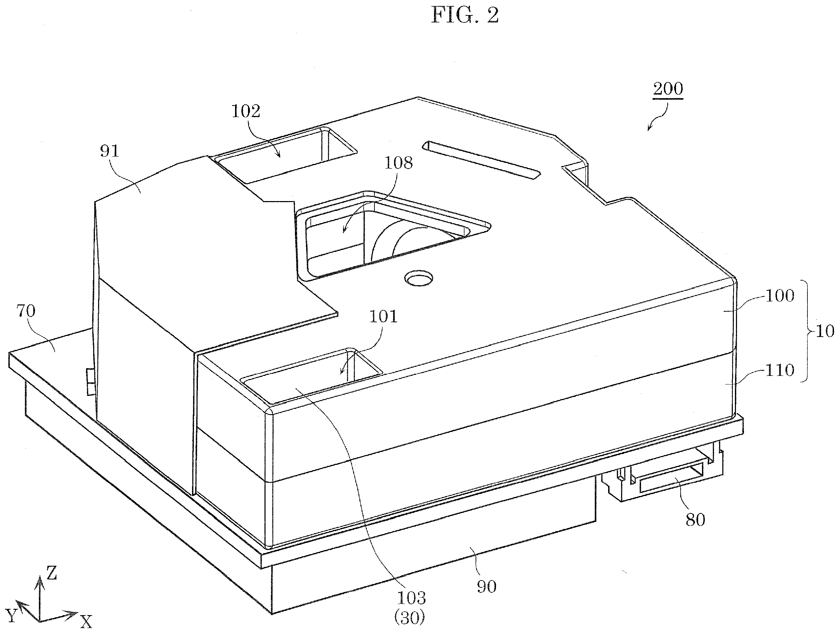

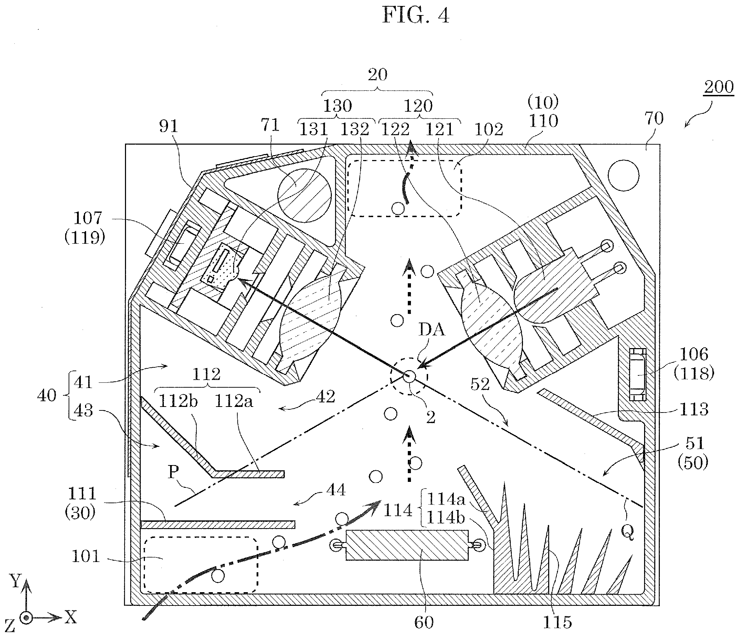

Next, the configuration of sensor 200 according to the embodiment will be described with reference to FIG. 2 through FIG. 4. FIG. 2 through FIG. 4 are a perspective view illustrating one example of sensor 200 according to the embodiment, an exploded view, and cross sectional view illustrating one example of the inside of the housing, respectively. More specifically, FIG. 4 is a birds-eye perspective view illustrating the interior structures of back cover 110 and front cover 100 according to this embodiment.

Sensor 200 is disposed such that inlet 101 is located below outlet 102. More specifically, sensor 200 is disposed such that the Y axis direction indicated in FIG. 2 points vertically upward. Note that sensor 200 is a low-profile, approximate cuboid, and the X and Y axis directions correspond to the two directions parallel to two intersecting edges of the cuboid. Moreover, the Z axis direction corresponds to the thickness direction of sensor 200. In this embodiment, sensor 200 has a size that fits within a X: 52 mm, Y 45 mm, Z: 22 mm space.

As indicated in FIG. 2 and FIG. 4, sensor 200 is a scattered light particle detection sensor including housing 10 and optical system 20 disposed inside housing 10. In this embodiment, sensor 200 is a scattered light particle detection sensor. More specifically, sensor 200 detects the presence or absence of particles 2 by optical system 20 emitting light into detection area DA in housing 10 and receiving scattered light scattered by particle 2 (aerosol) passing through detection area DA. Moreover, sensor 200 is not limited to the detection of the presence or absence of particles 2, and may detect the number of particles 2 or the size of particles 2, for example. Note that particles 2, which are the detection target of sensor 200, are, for example, fine dust, pollen, smoke, or PM2.5 particles that are 5 $\mu$m or smaller.

Housing 10 is a housing (case) that covers optical system 20 and detection area DA. Housing 10 covers optical system 20 and detection area DA so as to prevent optical system 20 and detection area DA from being irradiated with external light.

Housing 10 includes inlet 101 for introducing particles 2 into the interior of housing 10, and outlet 102 for expelling the introduced particles 2 out of housing 10. In this embodiment, as indicated by the bold, dotted arrows in FIG. 4, gas containing particles 2 enters through inlet 101, passes through the interior of housing 10 (for example, detection area DA), and then exits through outlet 102. Details regarding the structure of housing 10 will be described later.

Optical system 20 optically detects particles 2 that enter housing 10 through inlet 101 and pass through detection area DA covered by housing 10. In this embodiment, optical system 20 includes light projection system 120 and light reception system 130 disposed such that their optical axes (optical axis P and optical axis Q) intersect one another in detection area DA covered by housing 10, and particles 2 that pass through detection area DA are detected using light output by light projection system 120. Light projection system 120 includes light projecting element 121 and projection lens 122. Light reception system 130 includes light receiving element 131 and light receiving lens 132. Details regarding the structure of optical system 20 will be described later.

Detection area (light scattering section) DA is an aerosol detection area (aerosol measurement section) for detecting particles 2 contained in the gas to be measured. In this embodiment, detection area DA is an area including an intersection point at which optical axis P of light projection system 120 and optical axis Q of light reception system 130 intersect. Detection area DA is, for example, 2 mm in diameter. The gas to be measured enters via inlet 101 of housing 10, travels through detection area DA, and then exits through outlet 102.

As illustrated in FIG. 2 through FIG. 4, sensor 200 further includes dust blocking wall 30, first light trap 40, second light trap 50, heater device 60, circuit board 70, connector 80, first shield cover 90, and second shield cover 91.

Dust blocking wall 30 is a wall disposed between inlet 101 and detection area DA, and blocks dust larger than particles 2 from entering detection area DA. Here, the dust to be blocked from entering detection area DA is, for example, dust having a particle diameter of at least 2 $\mu$m.

Moreover, dust blocking wall 30 is a wall disposed between inlet 101 and first light trap 40, and is a first gas guiding wall that guides the gas so as not to enter first light trap 40. Details regarding the structure of dust blocking wall 30 will be described later.

First light trap 40 traps light that is output from light projection system 120 and passes through detection area DA. More specifically, first light trap 40 absorbs light that enters first light trap 40 so as to keep the light from escaping light trap 40. In this embodiment, first light trap 40 includes a wedge-shaped closed space, but may have a labyrinth structure.

In this embodiment, first light trap 40 is disposed across detection area DA from light projection system 120. More specifically, first light trap 40 includes first closed spaces 41 and 43 from which light that has entered does not easily escape. First closed spaces 41 and 43 include first openings 42 and 44. First light trap 40 divides light that is output from light projection system 120 and passes through detection area DA so as to cause the light to pass through first openings 42 and 44, an traps the light.

Second light trap 50 traps light not trapped by first light trap 40. Second light trap 50 includes second closed space 51 from which light that has entered does not easily escape. The second closed space includes second opening 52. For example, second light trap 50 traps light that is output from light projection system 120 and does not pass through detection area DA (i.e., leak light), and traps light that enters first light trap 40 and exits first light trap 40.

In this embodiment, second light trap 50 is disposed across detection area DA from light reception system 130. Second light trap 50 is, for example, a labyrinth structure including a plurality of wedge-shaped protrusions 115.

Heater device 60 is one example of an air flow generation unit that generates air flow in housing 10 by causing gas containing particles 2 that has entered via inlet 101 to flow through detection area DA. In this embodiment, heater device 60 is a heater that is disposed in the bottom portion of housing 10 and heats gas. More specifically, as illustrated in FIG. 4, heater device 60 generates an upward air flow (flow of gas in the positive direction along the Y axis) in housing 10 by heating the gas containing particles 2, and guides the gas containing particles 2 to detection area DA. Heater device 60 is, for example, a low cost heater resistor. Note that in FIG. 4, the bold, dotted arrows indicate one example of the air flow.

Circuit board 70 is a printed-wiring circuit board on which a control circuit for sensor 200 is formed. For example, the control circuit controls the output of light by light projection system 120, the processing of an electric signal based on an optical signal received by light reception system 130, and heating of the gas by heater device 60. For example, the control circuit detects the presence or absence of particles 2, the size of particles 2, and the number of particles 2, and outputs the detection result to an external device via connector 80.

Circuit board 70 is, for example, a rectangular flat plate, has one major surface (front surface) fixed to housing 10. One or more circuit elements (circuit components) making up the control circuit are mounted on the other major surface (rear surface). Note that the electrode terminals of light projecting element 121, light receiving element 131, and heater device 60 (heater resistor) pass through back cover 110 of housing 10 and circuit board 70, and are soldered to the back surface of circuit board 70. With this, light projecting element 121, light receiving element 131, and heater device 60 (heater resistor) are each electrically connected to the control circuit, and are operationally controlled by the control circuit.

The plurality of circuit elements include, for example, a resistor, capacitor, coil, diode, or transistor. Electrolytic capacitor 71, which is one of the plurality of circuit elements, is provided on the front surface of circuit board 70 and disposed inside housing 10, as illustrated in FIG. 4.

This makes it possible to reduce the number of circuit elements disposed on the back side of circuit board 70 by effectively employing the space inside housing 10. This in turn makes it possible to reduce the size of the space allotted for circuit elements on the back side of circuit board 70, and reduce the size of first shield cover 90. As a result, it is possible to reduce the overall size of sensor 200.

Connector 80 is a connector for connecting the control circuit (circuit board 70) of sensor 200 and an external control circuit or power circuit. Connector 80 is mounted to the back side of circuit board 70. For example, sensor 200 operates off power supplied from an external source via connector 80.

First shield cover 90 is a metal cover for protecting the control circuit from external noise. First shield cover 90 is attached to the back side of circuit board 70.

Second shield cover 91 is a metal cover for protecting light receiving element 131 of light reception system 130 from external noise. Second shield cover 91 covers an area of the front surface, top surface, and left surface of housing 10 in which light receiving element 131 is disposed.

Note that first shield cover 90 and second shield cover 91 are, for example, made from tin.

Hereinafter, each element included in sensor 200 will be described in detail.

(1-2. Configuration of Sensor Housing)

Housing 10 is the main body of sensor 200, and detection area DA, optical system 20, dust blocking wall 30, first light trap 40, second light trap 50, and heater device 60 are disposed in housing 10. In this embodiment, housing 10 is configured of two components: front cover 100 and back cover 110.

Housing 10 has light blocking properties. For example, at least the inner surfaces of housing 10 are painted black so housing 10 can absorb stray light. More specifically, the inner surfaces of housing 10 have a high absorbency with respect to light and specularly reflect light. Note that the inner surfaces of housing 10 may reflect a portion of the light in a scattering manner rather than specularly.

Here, stray light is light other than scattered light scattered by particle 2, and more specifically, is light that that is output by light projection system 120 and travels through housing 10 without being scattered by particle 2 in detection area DA. Moreover, stray light includes external light that has entered housing 10 via inlet 101 or outlet 102 from outside housing 10.

Housing 10 is, for example, injection formed using a resin material such as ABS resin. More specifically, front cover 100 and back cover 110 are each injection formed using a resin material and then assembled together to form housing 10. Here, for example, the inner surfaces of housing 10 can be made to be black by using a black pigment resin or a resin added with a black dye. Alternatively, the inner surfaces of housing 10 can be made to be black by applying a black paint to the inner surfaces after the injection forming process. Moreover, stray light can be absorbed by processing the inner surfaces of housing 10 to have a textured surface.

As illustrated in FIG. 2, housing 10 is a low profile polyhedron and includes front surface part 10a, rear surface part 10b, bottom surface part 10c, top surface part 10d, left surface part 10e, and right surface part 10f. More specifically, housing 10 is a prismatic body whose bottom surface has a substantially seven-sided shape achieved by cutting the top right and top left corners of a rectangle.

Front surface part 10a, rear surface part 10b, bottom surface part 10c, top surface part 10d, left surface part 10e, and right surface part 10f form the front surface, rear surface, bottom surface, top surface, left surface, and right surface, respectively, of housing 10. Front surface part 10a is the bottom part of front cover 100, and rear surface part 10b is the bottom part of back cover 110. Bottom surface part 10c, top surface part 10d, left surface part 10e, and right surface part 10f are formed by assembling the peripheral parts of front cover 100 and back cover 110.

Front surface part 10a and rear surface part 10b have substantially the same shape, and more specifically, are substantially seven-sided flat plates. Bottom surface part 10c is a substantially rectangular flat plate disposed perpendicular to front surface part 10a and rear surface part 10b. Top surface part 10d, left surface part 10e, and right surface part 10f are disposed perpendicular to front surface part 10a and rear surface part 10b, and are plate-shaped components that bend inward in a plan view.

Note that this shape of housing 10 is one example, and housing 10 is not limited to this shape. For example, the bottom surface (front surface part 10a and rear surface part 10b) of housing 10 may be a rectangular cuboid and, alternatively, may be a circular column.

A side surface of housing 10 includes inlet 101 and outlet 102, as illustrated in FIG. 2 through FIG. 4. More specifically, inlet 101 and outlet 102 are provided in front surface part 10a of housing 10.

Inlet 101 is an opening of a predetermined shape and is provided in a side surface (front surface part 10a) of housing 10, and gas containing particles 2 enters into housing 10 via this opening. For example, inlet 101 is, but not limited to, a substantially rectangular 12 mm x 5.5 mm opening. For example, inlet 101 may be a circular or elliptical opening.

In this embodiment, inlet 101 is not provided directly below detection area DA, but is provided in a bottom corner of front cover 100, as illustrated in FIG. 4. With this, external light entering through inlet 101 can be inhibited from reaching detection area DA.

Outlet 102 is an opening of a predetermined shape and is provided in a side surface of housing 10, and gas containing particles 2 exits housing 10 via this opening. For example, outlet 102 is, but not limited to, a substantially rectangular 12 mm x 5.5 mm opening. For example, outlet 102 may be a circular or elliptical opening. The size of outlet 102 is, for example, the same as the size of inlet 101.

In this embodiment, outlet 102 is provide directly above detection area DA and in the center of the upper portion of front cover 100, as illustrated in FIG. 4. With this, the air flow generated by heater device 60 can be smoothly expelled out through outlet 102.

Note that inlet 101 and outlet 102 are provided in front surface part 10a of housing 10, but are not limited to this example. For example, inlet 101 may be provided in rear surface part 10b, bottom surface part 10c, left surface part 10e, or right surface part 10f of housing 10. Moreover, outlet 102 may be provided in rear surface part 10b, top surface part 10d, left surface part 10e, or right surface part 10f of housing 10.

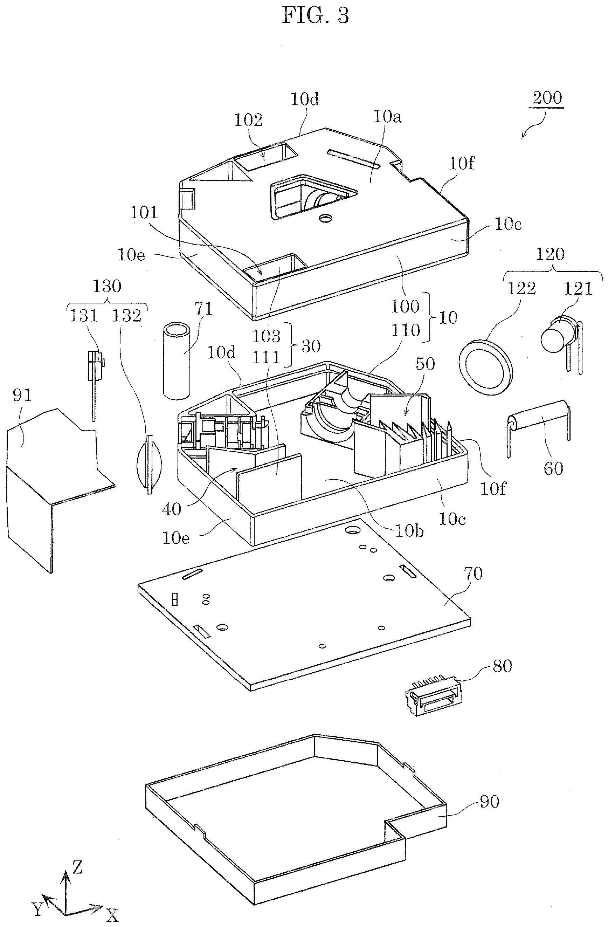

Housing 10 includes internal structures (for example, ribs of a predetermined shape) for forming dust blocking wall 30, first light trap 40, and second light trap 50. More specifically, as illustrated in FIG. 3, front cover 100 includes first wall 103 standing upright on the inner surface. Moreover, as illustrated in FIG. 4, back cover 110 includes second wall 111 standing upright on the inner surface. First wall 103 and second wall 111 form dust blocking wall 30, which reduces the entering of dust into the interior of the housing.

Back cover 110 further includes first reflective wall 112, second reflective wall 113, third reflective wall 114, and a plurality of wedge-shaped protrusions 115 standing upright on the inner surface. First reflective wall 112 forms first light trap 40 along with second wall 111. Second reflective wall 113, third reflective wall 114, and wedge-shaped protrusions 115 form second light trap 50.

First reflective wall 112 has a bend. More specifically, as illustrated in FIG. 4, first reflective wall 112 includes flat plate-shaped first reflective component 112a and flat plate-shaped second reflective component 112b. Third reflective wall 114 includes flat plate-shaped first reflective component 114a and flat plate-shaped second reflective component 114b.

As illustrated in FIG. 4, front cover 100 includes engaging component 106 and engaging component 107. Moreover, as illustrated in FIG. 4, back cover 110 includes component to be engaged 118 and component to be engaged 119. When front cover 100 and back cover 110 are assembled together, engaging component 106 engages component to be engaged 118, and engaging component 107 engages component to be engaged 119. This fixes front cover 100 and back cover 110 together. Note that the locations, number, and shape of engaging component 106 and engaging component 107 as well as component to be engaged 118 and component to be engaged 119 are not limited to any specific example.

Front surface part 10a of housing 10 further includes cleaning window 108. More specifically, cleaning window 108 is a trapezoidal through-hole provided in the central region of front cover 100. Cleaning window 108 is provided to remove dust and grime attached to the inside of projection lens 122, light receiving lens 132, and housing 10. For example, the inside of housing 10 can be cleaned by inserting, for example, a cotton swab into housing 10 through cleaning window 108. When sensor 200 is operating, cleaning window 108 is covered with a covering component (not illustrated in the drawings) so external light does not reach detection area DA through cleaning window 108.

In this embodiment, first wall 103, engaging component 106, and engaging component 107 are integrally formed with front cover 100. Moreover, second wall 111, first reflective wall 112, second reflective wall 113, third reflective wall 114, plurality of wedge-shaped protrusions 115, component to be engaged 118, and component to be engaged 119 are integrally formed with back cover 110.

(1-3. Configuration of Optical System including Sensor)

As illustrated in FIG. 2 through FIG. 4, optical system 20 is disposed on back cover 110 of housing 10, and when sandwiched with front cover 100, is stored inside housing 10. As illustrated in FIG. 4, light projection system 120 and light reception system 130 are disposed such that their optical axes (optical axis P and optical axis Q) intersect.

Light projection system 120 outputs and focuses light on detection area DA. Light projection system 120 includes light projecting element 121 and projection lens 122.

Light projecting element 121 is a light source (light emitting element) that emits light of a predetermined wavelength, and is, for example, a solid-state light emitting element such as a light emitting diode (LED) or a semiconductor laser. The optical axis of light projecting element 121 is aligned with optical axis P of light projection system 120, and, for example, passes through detection area DA.

A light emitting element that emits, ultraviolet light, blue light, green light, red light, or infrared light can be used as light projecting element 121. In this case, light projecting element 121 may be configured to emit mixed waves of two or more wavelengths. In this embodiment, taking into account the scattering strength of the light scattered by particle 2, for example, a bullet-shaped LED that outputs light having a peak wavelength in a range of from 500 nm to 700 nm, both inclusive, is used as light projecting element 121.

Note that the shorter the wavelength of light emitted by light projecting element 121 is, the easier it is to detect small diameter particles. Moreover, the method of controlling the emission of light by light projecting element 121 is not limited to a particular method; light emitted by light projecting element 121 may be continuous or pulsed light achieved by driving light projecting element 121 with direct current. Moreover, the output magnitude (intensity) of light projecting element 121 may be temporally adjusted.

Projection lens 122 is disposed in front of light projecting element 121 and transmits light (light projection beam) from light projecting element 121 toward detection area DA. In other words, light from light projecting element 121 reaches detection area DA after passing through projection lens 122. Particles 2 passing through detection area DA scatter light from light projecting element 121.

Projection lens 122 is, for example, a condenser lens that condenses (focuses) light from light projecting element 121 onto detection area DA, and is, for example, a transparent resin lens made of polycarbonate (PC) or a glass lens. For example, the focal point of projection lens 122 is in detection area DA.

Light reception system 130 receives scattered light, which is light from light projection system 120 that has been scattered by particle 2 in detection area DA. Note that in FIG. 4, the bold, solid arrows indicate one example of a path of light. Light reception system 130 includes light receiving element 131 and light receiving lens 132.

Light receiving element 131 receives at least a portion of scattered light, which is light from light projecting element 121 that has been scattered by particle 2 in detection area DA. More specifically, light receiving element 131 is a photoelectric conversion element that converters received light into an electric signal, and in this embodiment, includes at least one of a photodiode and a phototransistor which have a sensitivity to light projected by light projecting element 121. Note that light receiving element 131 may include, for example, a photo IC diode or a photomultiplier tube. The optical axis of light receiving element 131 is aligned with optical axis Q of light reception system 130, and, for example, passes through detection area DA.

Light receiving lens 132 is disposed between light receiving element 131 and detection area DA, and configured to focus light received from the detection area DA side onto light receiving element 131. More specifically, light receiving lens 132 is a condenser lens that condenses scattered light scattered by particle 2 in detection area DA onto light receiving element 131, and is, for example, a transparent resin lens made of, for example, PC, or a glass lens. For example, the focal point of light receiving lens 132 is in detection area DA and on the surface of light receiving element 131.

(2. Operations Performed by Particle Detection Sensor)

Next, operations performed by particle detection sensor 1 according to this embodiment will be described.

(2-1. Particle Detection Mechanism)

First, the particle detection mechanism of particle detection sensor 1 will be described.

Controller 600 heats the air in housing 10 using heater device 60 ahead of obtaining the detection signal. When the air is heated by heater device 60, upward air flow generates in housing 10 whereby air is pulled in through inlet 101 and pushed out of housing 10 through outlet 102. Accordingly, fine particles contained in gas enter housing 10 through inlet 101, pass through particle detection area DA, and exit housing 10 through outlet 102.

Light projecting element 121 projects light toward detection area DA. Light from light projecting element 121 is scattered after striking particles passing through detection area DA.

Scattered light scattered toward light reception system 130 (a portion of the scattered light) is received by light receiving element 131 through light receiving lens 132. Light receiving element 131 outputs a signal in accordance with the intensity of the received light to signal converter 610.

Scattered light scattered toward first light trap 40 (a different portion of the scattered light) is trapped by first light trap 40 and does not reach light reception system 130.

With this configuration, particle detection sensor 1 can detect particles contained in the gas.

(2-2. Operations Performed by the Signal Converter)

(2-2-1. Analog Signal Processing)

Signal converter 610 performs various signal processing on the current signal output from sensor 200 to perform analog signal processing for outputting an analog voltage signal based on the current signal. Here, various signal processing includes, for example, I/V conversion of converting current (I) to voltage (V), bandpass filter processing of passing an input signal through a desired frequency band, and amplification processing of amplifying and outputting an input signal.

Note that signal converter 610 is not limited to performing the various processing exemplified above as the analog signal processing, and may further perform other signal processing (such as highpass filter processing, lowpass filter processing, and attenuation processing).

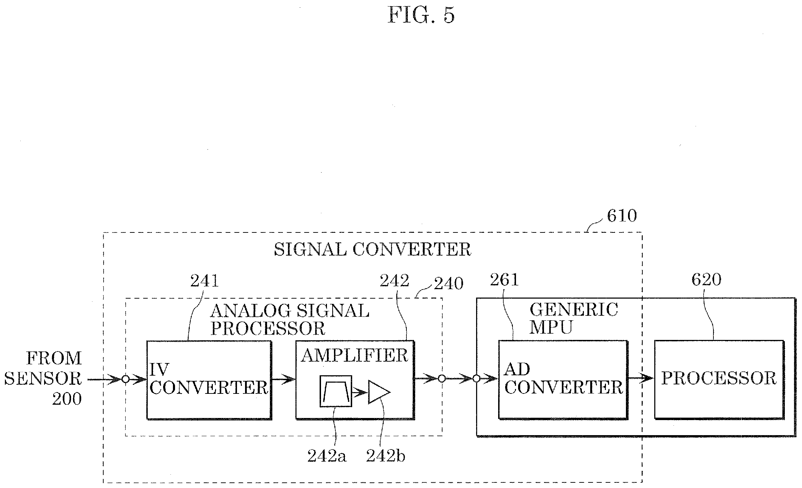

Next, the configuration of signal converter 610 will be described with reference to FIG. 5. FIG. 5 is a block diagram illustrating signal converter 610 according to this embodiment and configurations related to signal converter 610. More specifically, FIG. 5 illustrates the configurations of signal converter 610 and processor 620.

As illustrated in FIG. 5, signal converter 610 includes analog signal processor 240, which performs the analog signal processing described above and includes IV converter 241 and amplifier 242. Moreover, signal converter 610 further includes AD converter 261 that converts the analog voltage signal output from analog signal processor 240 into digital data.

(2-2-2. IV Converter)

IV converter 241 converts (IV converts) current output from light receiving element 131 into voltage. In other words, IV converter 241 converts the current signal output from sensor 200 into a voltage signal. By converting the current signal into a voltage signal, the design of amplifier 242 connected to a later stage of IV converter 241 can be simplified.

(2-2-3. Amplifier)

Amplifier 242 amplifies a predetermined band of the voltage signal converted by IV converter 241. More specifically, frequency components in a predetermined band among frequency components included in the voltage signal are amplified at a higher amplification rate than frequency components in other bands. Here, the predetermined band is, for example, a band whose central frequency is frequency fl corresponding to velocity v1 of gas flowing in the particle flow channel of sensor 200 and whose bandwidth is fbw. Note that fbw may be a predetermined frequency, and may be a frequency appropriately set according to the noise floor of the voltage signal. In other words, amplifier 242 amplifies the voltage signal converted by IV converter 241 and converts the voltage signal including a pulse waveform corresponding to the particles.

As illustrated in FIG. 5, amplifier 242 includes bandpass filter 242a that passes frequency components in a predetermined band among frequency components included in the voltage signal output from IV converter 241, and amplifier 242b that amplifies a signal made from the frequency components passed through bandpass filter 242a. Note that the connection order of bandpass filter 242a and amplifier 242b is not particularly limited; amplifier 242b may be connected at an earlier stage than bandpass filter 242a.

With this configuration, analog signal processor 240 outputs a voltage signal based on the current signal output from sensor 200.

(2-2-4. AD Converter)

AD converter 261 samples and quantizes the voltage signal amplified by amplifier 242. In other words, AD converter 261 AD (analog to digital) converts the analog voltage signal output from analog signal processor 240 to generate time-series digital data corresponding to the voltage signal. In other words, AD converter 261 generates time-series digital data based on the current signal output from sensor 200.

More specifically, AD converter 261 is an AD converter module preintegrated into a generic MPU, and converts a voltage signal input into the analog input terminal of the generic MPU into digital data. For example, AD converter 261 samples, at a predetermined sampling cycle, a voltage signal in a range of 0.0 to 5.0V input into a terminal set as the analog input terminal of a generic MPU, and converts the voltage of the sampled voltage signal into a 10 bit digital value to generate the digital data.

Note that the range of the voltage input into the analog input terminal of the generic MPU is not limited to the above example. For example, the maximum value of the input voltage may be a voltage specified from outside the generic MPU (for example, 3.3V). Moreover, the number of bits of the digital data generated by AD converter 261 is not limited to the above example. For example, the digital data may be 8-bit or 12-bit data.

(2-2-5. Generic MPU Configuration)

The generic MPU further includes processor 620 and calculates the diameter of particles contained in gas flowing though the particle flow channel in sensor 200 using the analog voltage signal output from analog signal processor 240. The generic MPU is, for example, realized as a system LSI circuit, which is an integrated circuit, and may be realized as a plurality of chips each corresponding to a different one of the configurations to be described hereinafter, or a single chip including a portion or all of the configurations.

Moreover, the generic MPU is not limited to a system LSI circuit, and may be realized as a dedicated circuit or a generic processor. A field programmable gate array (FPGA) that is programmable after manufacturing of the LSI circuit, or a reconfigurable processor whose connections and settings regarding circuit cells in the LSI circuit are reconfigurable, may be used.

Such a generic MPU can perform various types of analysis on particles contained in the gas flowing through the particle flow channel in sensor 200 using the digital data generated by AD converter 261. These various types of analysis include, for example, calculating the diameter of the particles and identifying the particles.

(2-2-6. Power Supply)

Although not illustrated in the drawings, particle detection sensor 1 includes a power supply that supplies power to components (for example, sensor 200 and signal converter 610). This power supply is configured of, for example, a regulator that converts voltage supplied from outside particle detection sensor 1 into a predetermined voltage.

(2-3. Operations Performed by the Processor)

Processor 620 detects the peak of the time-series digital data (hereinafter referred to as "peak search"), and the detected peak value is the peak value corresponding to the detected particle.

Moreover, processor 620 may regularly calculate (peak search) the above-described peak of the digital data, and, alternatively, may calculate it only when a predetermined condition is satisfied.

Next, operations performed by processor 620 according to this embodiment will be described.

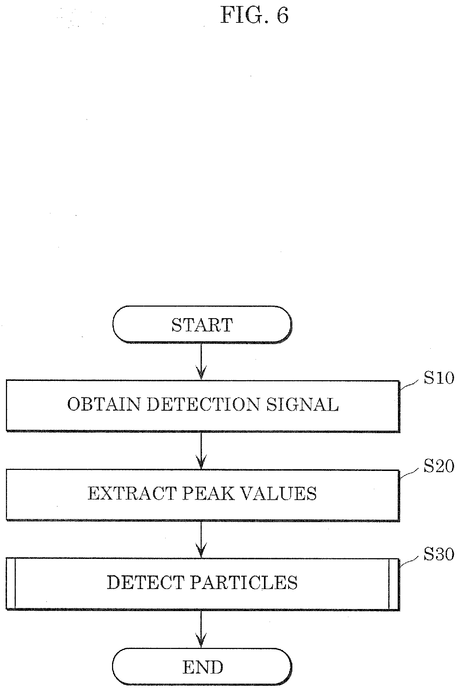

FIG. 6 is a flow chart of operations performed by processor 620 according to the embodiment.

As illustrated in FIG. 6, first, processor 620 obtains a detection signal from signal converter 610 (S10). As described above, signal converter 610 converts the analog signal output from light receiving element 131 into the detection signal, which is a digital signal.

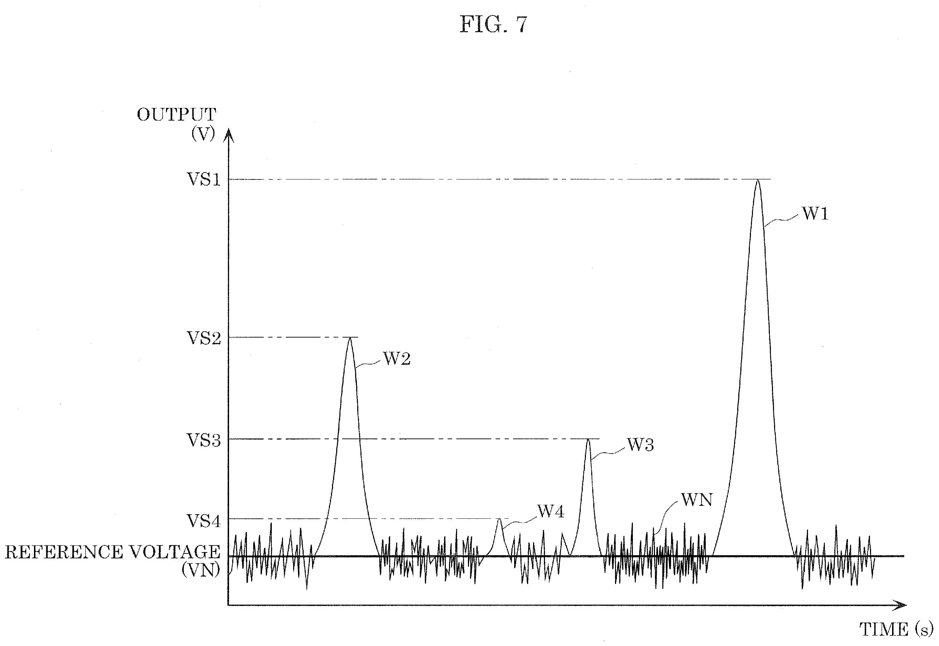

FIG. 7 is a waveform diagram illustrating one example of the analog signal output from light receiving element 131. The waveform illustrated in FIG. 7 includes a waveform indicating the strength of the scattered light scattered by four particles. More specifically, the waveform includes waveform W1 having peak value VS1, waveform W2 having peak value VS2, waveform W3 having peak value VS3, and waveform W4 having peak value VS4. Further, the waveform includes noise waveform WN of noise floor VN.

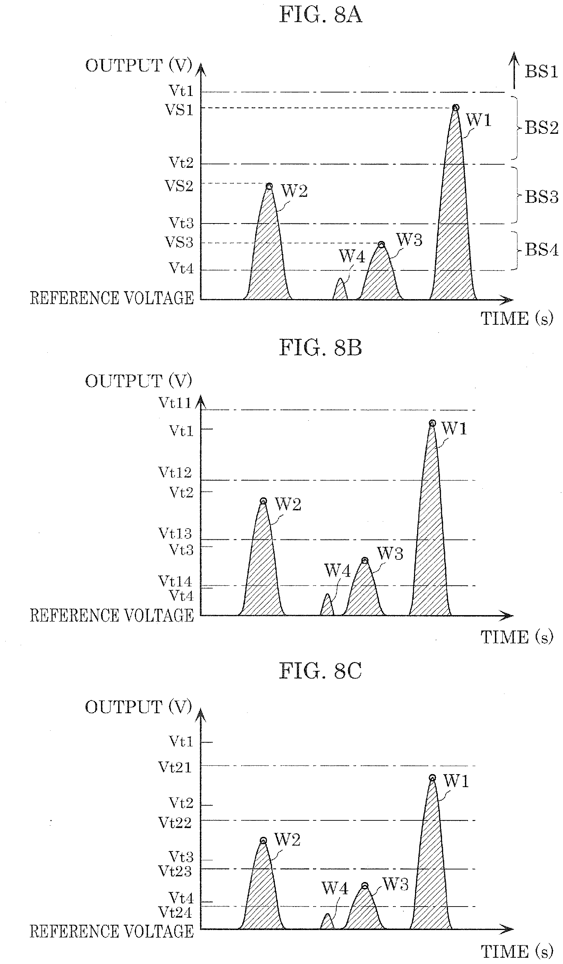

This sort of analog signal is, for example, filtered to remove noise waveform WN and analog-to-digital converted by signal converter 610 to convert the signal into a detection signal such as is shown in FIG. 8A through FIG. 8C, and obtained by processor 620. FIG. 8A through FIG. 8C are waveform diagrams illustrating examples of detection signals. FIG. 8B illustrates an example when the sensitivity of particle detection sensor 1 is higher than in FIG. 8A, and FIG. 8C illustrates an example when the sensitivity of particle detection sensor 1 is lower than in FIG. 8A.

The detection signals illustrated in the above drawings are signals obtained by sampling and quantizing the above described analog signal, and are, for example, 10-bit time-series digital data. Note that the detection signals have a step-shaped waveform, but in FIG. 8A through FIG. 8C, the width of the step is illustrated as being extremely small (appearing as a curved line). Detection signals converted in this manner include a waveform indicating the strength of the scattered light scattered by particles and incident on light receiving element 131.

Next, processor 620 extracts a plurality of peak values from the waveform of the detection signal (S20).

Here, selection of the peak value extraction method is arbitrary. As described above, since the detection signal here is a digital signal, the digital value to be determined is compared with the previous and subsequent digital values, and when the digital value to be determined is larger than the previous and subsequent digital values, the digital value to be determined may be extracted as the peak value. Note that when the detection signal is an analog signal, when sampling is performed at regular time intervals and the sampling value to be determined is greater than the previous and subsequent sampling values, the sampling value to be determined may be extracted as the peak value. In the examples illustrated in FIG. 7 and FIG. 8A through FIG. 8C, four peak values VS1 through VS4 can be extracted.

Next, processor 620 detects particles contained in gas using the extracted peak values (S30). More specifically, the mass concentration of particles contained in gas is calculated by detecting the particles contained in the gas. Note that hereinafter "mass concentration of particles contained in gas" is also referred to simply as "mass concentration."

(2-4. Particle Detection Processing (Particle Detection Method))

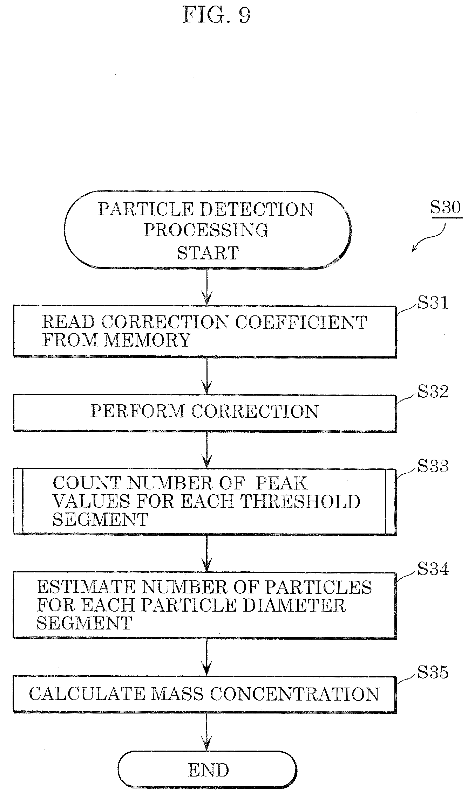

Hereinafter, detailed processes performed in the particle detection processing (S30) will be described. FIG. 9 is a flow chart illustrating the particle detection processing according to the embodiment.

First, processor 620 reads correction coefficient fk1 from memory 650 (S31).

Then, processor 620 corrects the relative relationship between the plurality of peak values extracted from the waveform of the detection signal and the one or more thresholds (first threshold) that delimit the plurality of peak value segments (to be described later) (S32). In this embodiment, processor 620 corrects the relative relationship by reading correction coefficient fk1 from memory 650. Details regarding the correction processing performed by processor 620 will be described later.

Next, processor 620 counts the number of peak values extracted for each peak value segment, which will be described later, using the corrected relative relationship (S33). In other words, processor 620 counts the number of peak values for each peak value segment by determining which of the peak value segments segmented based on the one or more thresholds (in this embodiment, four) each of the plurality of peak values belongs to using the corrected relative relationship.

For example, each time the peak value is extracted, processor 620 determines which peak value segment among the plurality of peak value segments the extracted peak value belongs to using the corrected relative relationship. Then, processor 620 counts the number of peak values for each peak value segment.

(2-4-1. Setting the Peak Value Segments)

Next, the setting of the peak value segments will be described.

The plurality of peak value segments are set according to one or more thresholds (first threshold). In this embodiment, as illustrated in FIG. 8A, four peak value segments BS1 through BS4 delimited by four thresholds Vt1 through Vt4 are set. In other words, threshold Vti (i = 1 to 4) specify the boundaries between adjacent peak value segments.

Here, a peak value extracted from the detection signal and the diameter of a particle located in the detection area DA have a predetermined relative relationship.

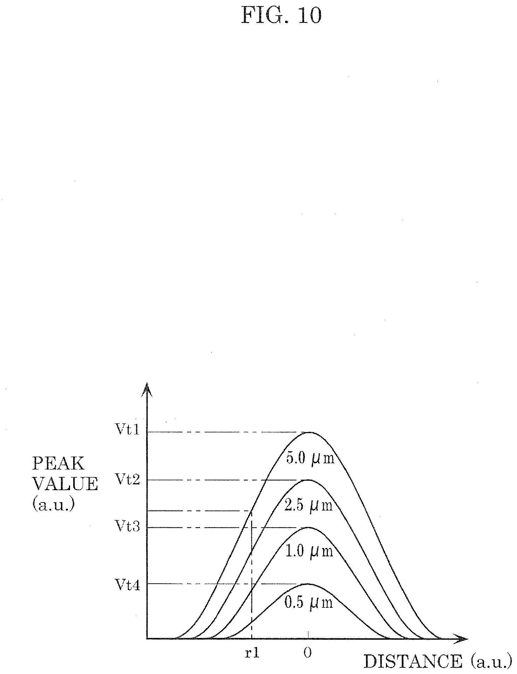

FIG. 10 illustrates one example of the relationship between the peak value for each particle diameter and distance. In FIG. 10, for illustrative purposes, the relationships between the peak values of 5.0 $\mu$m, 2.5 $\mu$m, 1.0 $\mu$m, and 0.5 $\mu$m particles and distances are shown. The peak values correspond to the intensity of the scattered light. The distance is measured from the center of detection area DA when the particle passes through detection area DA, that is to say, the distance when the particle is closest to the focal point of the light output from light projecting element 121. A distance of 0 occurs when the particle passes through the center of detection area DA.

Generally, in cases where the distances are equal, the larger the particle diameter is, the greater the peak value is, as illustrated in FIG. 10. However, the larger the particle diameter is, the greater the maximum peak value is. Further, as illustrated in FIG. 10, in cases where the particle diameters are equal, the shorter the distance from the center of detection area DA, the greater the intensity of light received is.

However, as illustrated in FIG. 10, for example, the peak value corresponding to a particle having a diameter of 5.0 $\mu$m that passes through detection area DA at a distance r1 from the center of detection area DA is less than the peak value of a particle having a diameter of 2.5 $\mu$m that passes through the center of detection area DA. In other words, it is difficult to directly extract the number of particles per diameter from the signal strength.

However, the content ratios of the plurality of particle diameter segments (to be described later) delimited by one or more thresholds (second threshold) in each of the plurality of peak value segments BS1 through BS4 can be calculated in advance using the sensitivity distribution illustrated in FIG. 10.

Therefore, in this embodiment, processor 620 estimates the number of particles in each of the plurality of particle diameter segments using the number of peak values determined for each of the plurality of peak value segments BS1 through BS4 and the content ratios of the plurality of particle diameter segments BPi for each of the plurality of peak value segments BS1 through BS4. Details regarding the content ratio will be described later.

In this embodiment, threshold Vti is set such that peak value segment Bsi includes particles having a diameter greater than or equal to a diameter corresponding to particle diameter segment BPi and does not include particles having a diameter less than a diameter corresponding to particle diameter segment BPi. For example, threshold Vti is set to the maximum peak value of the detection signal corresponding to the smallest particle among particles belonging to particle diameter segment BPi.

More specifically, in this embodiment, detected particles are segmented into four particle diameter segments BPi: greater than or equal to 5.0 $\mu$m; 2.5 $\mu$m to 5.0 $\mu$m; 1.0 $\mu$m to 2.5 pm; and 0.5 $\mu$m to 1.0 $\mu$m. Threshold Vt1 is set such that peak value segment BS1 includes particles having a diameter of 5.0 $\mu$m or greater and does not include particles of other diameters. Threshold Vt1 is set to, for example, the maximum value of the detection signal in particles having a diameter of 5.0 $\mu$m. Threshold Vt2 is set such that peak value segment BS2 includes particles having a diameter of 2.5 $\mu$m or greater and does not include particles having diameters lower than 2.5 $\mu$m. Threshold Vt2 is set to, for example, the maximum value of the detection signal in particles having a diameter of 2.5 $\mu$m. Threshold Vt3 is set such that peak value segment BS3 includes particles having a diameter of 1.0 $\mu$m or greater and does not include particles having diameters lower than 1.0 $\mu$m. Threshold Vt3 is set to, for example, the maximum value of the detection signal in particles having a diameter of 1.0 $\mu$m. Threshold Vt4 is set such that peak value segment BS4 includes particles having a diameter of 0.5 $\mu$m or greater.

Using peak value segments set in this manner, processor 620 determines which of the plurality of peak value segments BS1 through BS4 delimited by one or more (in this embodiment, 4) thresholds Vt1 through Vt4 each of the plurality of peak values extracted from the waveform of the detection signal belongs to.

(2-4-2. Correction)

Here, the detection signal, which is digital data generated by signal converter 610, is a value dependent on the sensitivity of particle detection sensor 1.

In other words, even when particles having the same diameter are introduced, when particle detection sensor 1 has a high sensitivity, the waveform of the detection signal is comparatively larger, as illustrated in FIG. 8B. On the other hand, when particle detection sensor 1 has a low sensitivity, the waveform of the detection signal is comparatively smaller. In other words, the size of the waveform of the detection signal depends on the design of optical system 20, the photoreception sensitivity of light receiving element 131, and the sensitivity of particle detection sensor 1, which depends on, for example, the sensitivity of the electrical components included in sensor 200 and signal converter 610.

Therefore, when particle diameter is calculated using the same thresholds Vt1 through Vt4 without referencing the sensitivity of particle detection sensor 1, there are concerns that the following problems may arise.

More specifically, when particle detection sensor 1 has a high sensitivity, there is concern that the plurality of peak values VS1 through VS4 extracted from the waveform of the detection signal will be erroneously determined to belong to a peak value segment larger than the peak value segment they should belong to. On the other hand, when particle detection sensor 1 has a low sensitivity, there is concern that the plurality of peak values VS1 through VS4 will be erroneously determined to belong to a peak value segment smaller than the peak value segment they should belong to.

When such an erroneous determination is made, it is difficult to accurately calculate the mass concentration of the particles contained in gas.

Therefore, in this embodiment, as described above, the relative relationship between the plurality of peak values extracted from the waveform of the detection signal and the thresholds that delimit the plurality of peak value segments BS1 through BS4 is corrected. More specifically, in this embodiment, the relative relationship is corrected by reading correction coefficient fk1 from memory 650 and correcting the thresholds.

(2-4-2-1. Initial Setting of Correction Coefficients)

First, the processing for the initial setting of correction coefficient fk1 in memory 650 will be described. For example, this correction coefficient fk1 is written during a manufacturing process of particle detection sensor 1.

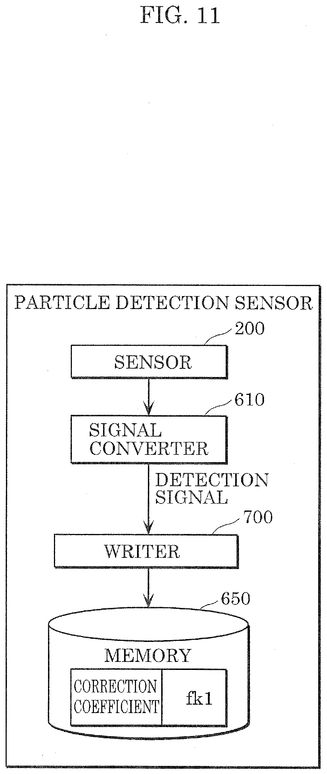

FIG. 11 is a block diagram for illustrating the process of initially setting the correction coefficient in memory 650, in a manufacturing process of particle detection sensor 1 according to this embodiment.

As illustrated in FIG. 11, in the manufacturing process, the writing of correction coefficient fk1 to memory 650 is performed by writer 700 connected to signal converter 610 and memory 650.

Based on the detection signal output from signal converter 610 when a reference particle having a predetermined diameter is introduced to detection area DA, writer 700 calculates correction coefficient fk1 dependent on the sensitivity of particle detection sensor 1, and writes the calculated correction coefficient fk1 to memory 650.

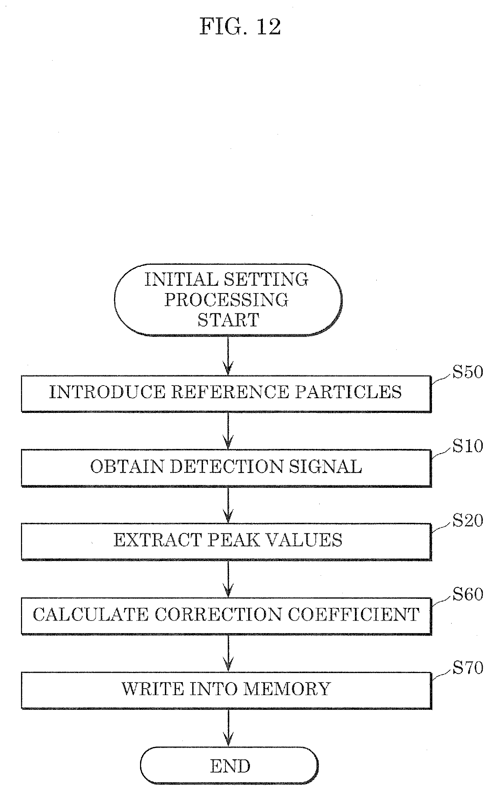

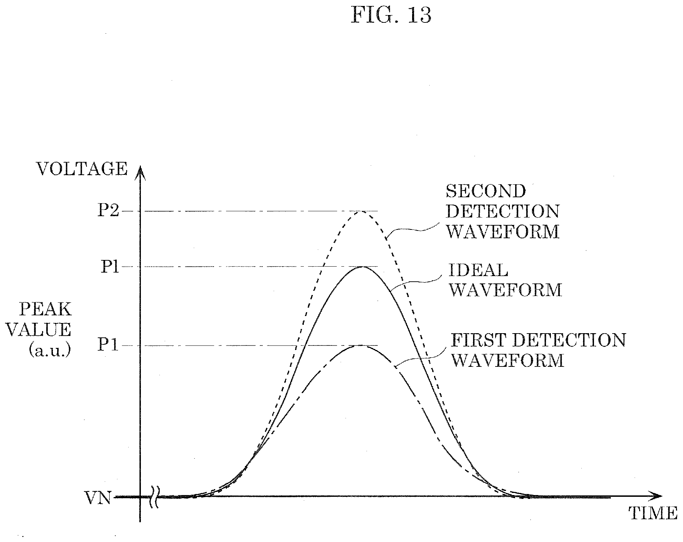

Hereinafter, processes for the initial setting of correction coefficient fk1 by writer 700 will be described with reference to FIG. 12 and FIG. 13. FIG. 12 is a flow chart illustrating the processes for the initial setting of correction coefficient fk1 performed by writer 700 in a manufacturing process. FIG. 13 is a graph for illustrating correction coefficient fk1 calculated by writer 700.

First, writer 700 introduces a reference particle having a predetermined diameter into housing 10 of sensor 200 (S50). In other words, a reference particle is introduced into detection area DA. Note that the introduction of the reference particle need not be performed by writer 700. For example, this may be performed by disposing sensor 200 inside a chamber filled with gas including the reference particle.

Next, writer 700 obtains the detection signal output from signal converter 610 in a state in which the reference particle has been introduced (S10), and then extracts the peak value from the waveform of the detection signal (S20). Then, writer 700 calculates correction coefficient fk1 based on the extracted peak value (S60), and writes the calculated correction coefficient fk1 to memory 650 (S70).

A standard particle of polystyrene latex (PSL) may be used as the reference particle having a single diameter. Moreover, a smoke particle generated by combustion to generate smoke by tobacco or a smoke particle generated by combustion to generate smoke by a cotton wick may be used as the reference particle having a diameter with a distribution.

For example, writer 700 calculates correction coefficient fk1 by dividing a difference between the extracted peak value and noise floor VN with a difference between an ideal peak value PI and noise floor VN.

In other words, when the detection signal has the first detection waveform illustrated in FIG. 13, that is to say, when the peak value obtained in the peak value extraction processing (S20 above) is P1, writer 700 calculates correction coefficient fk1 as (P1 - VN) / (PI - VN). With this, when the detection signal is relatively small, that is to say, when the sensitivity is relatively low, correction coefficient fk1 is calculated as a value lower than 1.

Similarly, when the detection signal has the second detection waveform illustrated in FIG. 13, that is to say, when the peak value obtained in the peak value extraction processing (S20 above) is P2, writer 700 calculates correction coefficient fk1 as (P2 - VN) / (PI - VN). With this, when the detection signal is relatively large, that is to say, when the sensitivity is relatively high, correction coefficient fk1 is calculated as a value greater than 1.

Here, the detection signal corresponds to the current output from sensor 200 and the current corresponds to the sensitivity of sensor 200. Therefore, the ideal peak value PI and the actual peak value correspond to the reference sensitivity of sensor 200 and the actual sensitivity of sensor 200.

Therefore, writer 700 calculates correction coefficient fk1 as a value less than 1 when the current output from sensor 200 is relatively low, that is to say, when the sensitivity is low. On the other hand, writer 700 calculates correction coefficient fk1 as a value greater than 1 when the current output from sensor 200 is relatively high, that is to say, when the sensitivity is high.

In this way, writer 700 writes correction coefficient fk1 dependent on the sensitivity of sensor 200 relative to the reference sensitivity to memory 650.

Note that the ideal peak value is not limited to when a reference particle is introduced into housing 10 and may be, for example, set to a design value of particle detection sensor 1.

Moreover, correction coefficient fk1 may be, for each of a plurality of sensors 200, an average or median value of peak values extracted when reference particles is introduced into housings 10.

Correction coefficient fk1 is written into memory 650 with the above described initial setting processing. Thus, the mass concentration of the particles contained in gas can be precisely calculated by correcting the relative relationship described above using correction coefficient fk1 calculated in this manner.

(2-4-2-2. Correction Processing Using the Correction Coefficient)

Hereinafter, processes performed in the correction processing (S32) will be described in detail.

As described above, processor 620 corrects thresholds Vt1 through Vt4 using correction coefficient fk1 read from memory 650.

With this, for example, with particle detection sensor 1 having a high sensitivity illustrated in FIG. 8B, each of the corrected thresholds Vt11 through Vt14 is greater than the corresponding pre-corrected thresholds Vt1 through Vt4. Therefore, it is possible to diminish the concern that the plurality of peak values VS1 through VS4 extracted from the waveform of the detection signal will be erroneously determined to belong to a peak value segment larger than the peak value segment they should belong to when particle detection sensor 1 has a high sensitivity.

On the other hand, for example, with particle detection sensor 1 having a low sensitivity illustrated in FIG. 8C, each of the corrected thresholds Vt21 through Vt24 is less than the corresponding pre-corrected thresholds Vt1 through Vt4. Therefore, it is possible to diminish the concern that the plurality of peak values VS1 through VS4 extracted from the waveform of the detection signal will be erroneously determined to belong to a peak value segment smaller than the peak value segment they should belong to when particle detection sensor 1 has a low sensitivity.

In other words, it is possible to determine with high precision, regardless of the sensitivity of particle detection sensor 1, which peak value segment among the plurality of peak value segments BS1 through BS4 a peak value extracted from the detection signal belongs to.

Here, processor 620 corrects the relative relationships between thresholds Vt1 through Vt4 and the plurality of peak values VS1 through VS4 by correcting each of thresholds Vt1 through Vt4 so as to maintain the ratio of the difference between the upper and bottom limits of each of the plurality of peak value segments BS1 through BS4 so as to be between the plurality of peak value segments BS1 through BS4.

Moreover, more specifically, processor 620 corrects each of thresholds Vt1 through Vt4 with reference to an arbitrary level in the detection signal (in this embodiment, with reference to noise floor VN).

For example, as described above, when the correction coefficient fk1 is set as the value $VS\alpha / VS\beta$, obtained by dividing the difference $VS\alpha$ between the peak value and the noise floor VN of detection signal by the difference $VS\beta$ between the peak value and noise floor VN of an ideal detection signal output from signal converter 610, processor 620 multiplies fk1 by the differences between each of thresholds Vt1 through Vt4 and noise floor VN and then adding noise floor VN to the multiplication result.

With this, the corrected thresholds Vt11 through Vt14 are each values corresponding to pre-corrected thresholds Vt1 through Vt4 corrected using noise floor VN as a reference voltage. Moreover, before and after the correction, the ratio of the difference between the upper and lower limits of each of the plurality of peak value segments BS1 through BS4 are maintained between the plurality of peak value segments BS1 through BS4.

Note that although processing for the calculation of each of corrected thresholds Vt11 through Vt14 when the sensitivity is large has herein been described, the same applies to the processing for the calculation of each of corrected thresholds Vt21 through Vt24 when the sensitivity is low.

In this way, processor 620 corrects the relative relationship between thresholds Vt1 through Vt4 and the plurality of peak values VS1 through VS4 based on the output from light receiving element 131 when a reference particle having a predetermined diameter is introduced into detection area DA.

(2-4-3. Peak Value Counting Processing)

Next, the processing for determining and counting the peak value segments as performed by processor 620 will be described. Processor 620 determines which peak value segment each of the plurality of peak values extracted from the waveform of the detection signal belongs to using the peak value segments delimited by the thresholds Vt1 through Vt4 corrected in the manner described above.

The determination of the peak value segment is performed by comparing the peak value to be determined with a plurality of corrected thresholds set as boundary values between adjacent peak value segments.

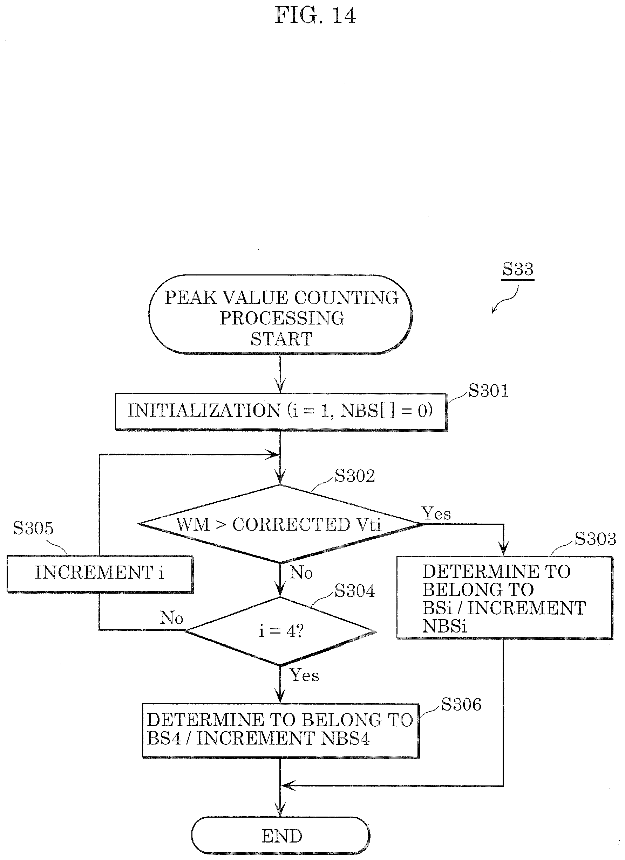

FIG. 14 is a flowchart illustrating one example of the processing order for determining the peak value segment for a peak value and counting peak values per peak value segment. First, processor 620 initializes various variables (S301). More specifically, processor 620 sets i to 1 (minimal threshold subscript value). Processor 620 further sets variable NBSk (k = 0 to a maximum peak value segment subscript value; in FIG. 14, the maximum peak value segment subscript value is 4) indicating the number of peak values per peak value segment to zero. Processor 620 compares the peak value (local maximum value) WM with the corrected threshold Vti (S302).

When processor 620 determines that peak value WM is greater than threshold Vti (yes in S302), processor 620 determines that peak value WM belongs to peak value segment BS(i-1), and increments NBS(i-1) (S303).

When processor 620 determines that peak value WM is less than or equal to corrected threshold Vti (no in S302), processor 620 determines whether or not comparison between peak value WM and all corrected thresholds Vti is finished (S304). Here, processor 620 determines that the comparison between peak value WM and all corrected thresholds Vti is finished when i = 4. When processor 620 determines that there is a threshold that has not yet been compared (no in S304), processor 620 increments i (S305) and transitions to step S302.

When processor 620 determines that the comparison between peak value WM and all corrected thresholds Vti is finished (yes in S304), processor 620 determines that peak value WM belongs to peak value segment BS4 and increments peak value count NBS4 of peak value segment BS4 (S306).

By performing the above processes, in FIG. 14, peak value VS1 is determined to belong to peak value segment BS1. Peak value VS2 is determined to belong to peak value segment BS2. Peak value VS3 is determined to belong to peak value segment BS3. Peak value VS4 is determined to belong to peak value segment BSN.

Steps S301 through 306 are performed for all peak values. The values NBS1 through NBS4 and NBSN at the point in time at which the processing is finished are the number of peak values in peak value segments BS1 through BS4 and BSN.

The peak value counting processing (S33) is repeatedly performed at time intervals in which the mass concentration is converted. Alternatively, the peak value count processed at given time intervals may be averaged.

Here, the diameter and number of particles 2 that pass through detection area DA may vary according to the amount of elapsed time. As such, there is concern that the number of peak values in peak value segments BS1 through BS4 and BSN will vary depending on the time intervals in which the mass concentration is converted. In particular, when the time intervals are short, the number of peak values in peak value segments BS1 through BS4 and BSN easily fluctuate, so there is concern that the calculation error of the mass concentration will increase.

Therefore, by averaging the peak value count processed at given time intervals, even when the time intervals at which mass concentration is converted are short, it is possible to estimate the mass concentration with high precision.

(2-4-4. Particle Count Estimation Processing)

As illustrated in FIG. 9, processor 620 estimates the number of particles in each particle diameter segment (S34) after performing the peak value counting processing (S33). More specifically, processor 620 estimates the number of particles in each of the plurality of particle diameter segments BPi using the number of peak values determined for each of the plurality of peak value segments BS1 through BS4 and BSN as well as the content ratios of the plurality of particle diameter segments BPi delimited by one or more (in this embodiment, four) thresholds (second threshold) in each of the plurality of peak value segments BS1 through BS4 and BSN.

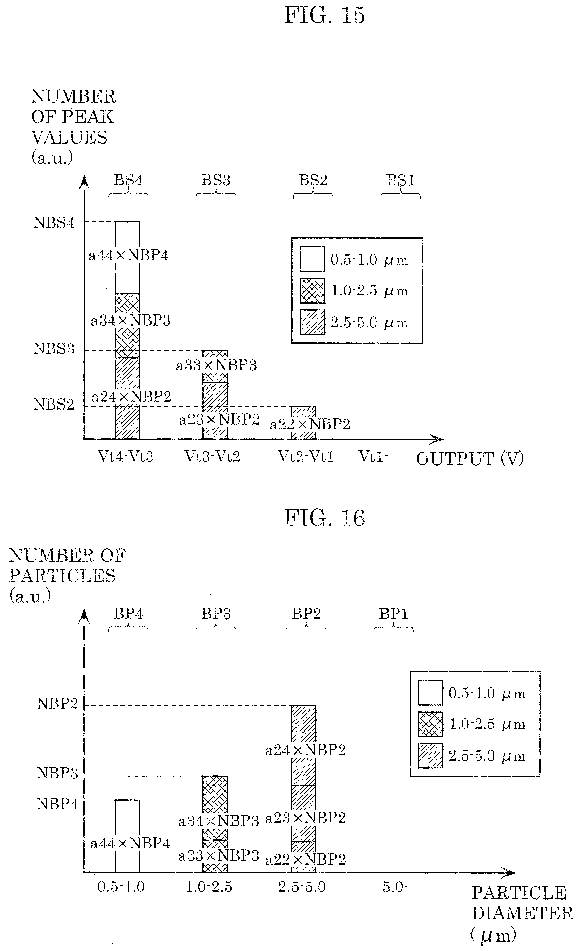

FIG. 15 illustrates one example of the peak value count for each peak value segment BS1 through BS4. Note that FIG. 15 also shows the number of peak values included in peak value segments BS1 through BS4 and corresponding to the particle diameter segments BP1 through BP4.

As illustrated in FIG. 15, for example, peak value segment BS4 includes a peak value for a particle having a diameter in particle diameter segment BP4 or larger. In other words, peak value segment BSi includes a peak value for a particle having a diameter that falls in particle diameter segment BPi or larger.

However, for example, in the case of particle diameter segment BP2, the ratio between peak value segments BS2 through BS4 of particle count NBP2, that is to say, the ratio of coefficients a22, a23, and a24 can be calculated in advance. As illustrated in FIG. 10, this is determined by the signal strength in accordance with the location that the particle passes through and due to the fact that the position of detection area DA through which the particle passes becomes uniform when a sufficient number of particles is detected.

Similarly, coefficients aii through ai(imax) can be uniquely calculated for each particle diameter segment BPi. imax is the number of peak value segments that processor 620 uses when measuring the number of particles in each of the plurality of particle diameter segments, and in this embodiment, is four.

With this, the content ratios of each of the plurality of particle diameter segments BP1 through BP4 in each of the plurality of peak value segments BS1 through BS4 are calculated. In other words, the content ratios in one peak value segment among the plurality of peak value segments BS1 through BS4 (for example, peak value segment BS3) are values based on the number of peak values (here, NBS3) determined for the one peak value segment, the number of peak values (here, NBS2) determined for each peak value segment larger than the one peak value segment (here, peak value segments BS1 and BS2), and the change in signal strength dependent on location in detection area DA.

Stated differently, the number of peak values NBSi determined to belong to the one peak value segment BSi includes peak values that appear due to particles whose diameters correspond to a particle diameter segment larger than the diameter corresponding to the one particle diameter segment BPi.

Thus, using the number of peak values (here, NBS3) determined to belong to one peak value segment among the plurality of peak value segments (for example, peak value segment BS3) and the change in signal strength dependent on location in detection area DA described above (see FIG. 10), processor 620 calculates the number of peak values (here a33×NBP3) corresponding to particles for one particle diameter segment among the plurality of particle diameter segments (here, BP3) and the number of peak values (a23×NBP2) corresponding to particles for a different particle diameter segment (here, particle diameter segment BP2) larger than the one particle diameter segment.

As illustrated in FIG. 16, processor 620 estimates the number of particles in each of the plurality of particle diameter segments (BP1 through BP4) by performing these processes for each of the plurality of peak value segments (BS1 through BS4).

FIG. 16 illustrates one example of particle count NBPi for each particle diameter segment BPi estimated using the above method.

In this way, processor 620 estimates the number of particles in each of the plurality of particle diameter segments BP1 through BP4 using the number of peak values determined for each of the plurality of peak value segments BS1 through BS4 and the content ratios of the plurality of particle diameter segments BP1 through BP4 in each of the plurality of peak value segments BS1 through BS4.

Note that in this embodiment, the number of peak value segments and the number of particle diameter segments are exemplified as being the same, but this example is not limiting.

Moreover, the above content ratio includes a case in which the ratio of an arbitrary particle diameter is 0. For example, in this embodiment, the content ratios of plurality of particle diameter segments BP1 through BP4 in peak value segment BS2 is a ratio of 1 for particle diameter segment BP2 and a ratio of 0 for particle diameter segments BP1, BP3, and BP4, but these content ratios are included in the above concept of the content ratios.

(2-4-5. Mass Concentration Calculation Processing)

Next, processor 620 calculates the mass concentration of the particles contained in gas using the number of particles for each of the plurality of particle diameter segments BP1 through BP4 estimated in the particle count estimation processing (S34), as illustrated in FIG. 9 (S35).

Mass concentration M of the particles contained in gas can be expressed as Expression 1 below, when the number of particles in particle diameter segment BPi is represented as NBPi and the coefficient based on the mass per particle in particle diameter segment BPi is represented as di.

[Math 1]

$$M = \sum_{i=1}^{4} di \times NBPi$$

Expression 1

Coefficient di may be, for example, the mass per particle segmented to particle diameter segment BPi itself, an average or mean mass of particles belonging to particle diameter segment BPi, or, for example, a representative value obtained by weighting the average or mean mass based on usage of particle detection sensor 1.

(3. Advantageous Effects, etc.)

Here, generally, as a method for adjusting the magnitude of the detection signals between individual particle detection sensor relative to the same particle diameter includes a method of analog adjustment of output gain using, for example, a volume resistor. However, such an analog adjustment method is extremely cumbersome and thus problematic.

In view of this, with particle detection sensor 1 according to this embodiment, processor 620 corrects the relative relationship between a plurality of peak values extracted from the waveform of the detection signal and one or more thresholds (in this embodiment, four thresholds Vt1 through Vt4), and calculates the mass concentration of particles in the gas by performing determination processing (peak value counting processing (S33) in this embodiment) for determining which of the plurality of peak value segments delimited by the one or more thresholds (in this embodiment, four peak value segments BS1 through BS4) each of the plurality of peak values belongs to using the corrected relative relationship.

This makes it possible to correct variations in sensitivity between particle detection sensors 1 without performing analog adjustment. This therefore makes it possible to greatly reduce, for example, costs associated with parts and adjustment, compared to when, for example, a volume resistor is used for analog correction, and also possible to achieve precise adjustment of the sensitivity of particle detection sensor 1 since the adjustment is performed digitally. As a result, since the peak value segments BS1 through BS4 to which the peak values extracted from the waveform of the detection signal belong can be identified with precision, the mass concentration can be estimated with precision. In other words, it is possible to improve particle detection precision.

Moreover, for example, processor 620 further performs estimation processing (S34) of estimating the number of particles in each of the plurality of particle diameter segments using the number of peak values determined for each of the plurality of peak value segments BS1 through BS4 by the determination processing as well as the content ratios of the plurality of particle diameter segments (in this embodiment, four particle diameter segment BP1 through BP4) delimited by one or more thresholds (in this embodiment, four thresholds of 0.5 μm, 1.0 μm, 2.5 μm, and 5.0 μm) (second threshold) in the plurality of peak value segments BS1 through BS4, and performs calculation processing (S35) of calculating the mass concentration using the number of particles for each of the plurality of particle diameter segments.

In this way, by using the content ratios of the plurality of particle diameter segments BP1 through BP4 in the plurality of peak value segments BS1 through BS4, the mass concentration can be estimated based on the number concentrations for the particle diameter segments BP1 through BP4. This makes it possible to precisely estimate the mass concentration without using a dust sampler. In other words, a compact design can be achieved and mass concentration can be precisely estimated at low cost. Further, since mass concentration can be estimated for each of the particle diameter segments BP1 through BP4, it is possible to precisely estimate mass concentration even when there is a change in particle diameter distribution. In other words, it is possible to improve particle detection precision.

Moreover, for example, processor 620 corrects the relative relationship by correcting the thresholds (first thresholds) so as to maintain the ratio of the difference between the upper and lower limits of each of the plurality of peak value segments BS1 through BS4 between the plurality of peak value segments BS1 through BS4.

Moreover, for example, in the determination processing, processor 620 corrects each of the thresholds (first thresholds) using an arbitrary level in the detection signal as a reference.

This makes it possible to inhibit the influence of noise and precisely adjust the relative relationship between the peak value and the thresholds (first thresholds). For example, when the level of the detection signal when a waveform corresponding to particles 2 does not appear in the detection signal is the reference level described above, influence from offset, which is noise generated by, for example, sensor 200 and signal converter 610, can be reduced, and the relative relationship can be adjusted. In other words, mass concentration can be precisely estimated by inhibiting influence from noise.

Moreover, for example, in the determination processing, processor 620 corrects the relative relationship based on the output from light receiving element 131 when a reference particle having a predetermined diameter is introduced into detection area DA.

This makes it possible to precisely correct variations in sensitivity between particle detection sensors 1 since the relative relationship is corrected based on an actual measured value.

Moreover, for example, particle detection sensor 1 includes memory 650 that stores correction coefficient fk1, and in the determination processing, processor 620 corrects the relative relationship by reading correction coefficient fk1 from memory 650.

With this, since all that is required is to only write correction coefficient fk1 for correcting the relative relationship into memory 650, there is no need to correct a program for calculating the mass concentration and write the program into processor 620 which is executed by, for example, a microcomputer. This makes it possible to greatly reduce the time required to adjust variations in sensitivity between particle detection sensors 1.

Moreover, for example, light projecting element 121 projects light having a peak wavelength in a range of from 500 nm to 700 nm, both inclusive, and one of the one or more thresholds (first thresholds) is a value corresponding to a particle diameter of 1.0 μm or less.

In this way, it is possible to increase the scattering of light by particles 2 having a fine diameter of 1.0 μm or less by setting the peak wavelength of light projected by light projecting element 121 to 700 nm or shorter. With this, threshold intervals can be decreased whereby the dynamic range of the circuit in particle detection sensor 1 can be decreased. Therefore, digital resolution can be increased. Moreover, since the sensitivity of light receiving element 131, which utilizes band gap, decreases as the wavelength decreases, it is possible to maintain the sensitivity of light receiving element 131 by setting the peak wavelength of the light projected by light projecting element 121 to 500 nm or longer. Therefore, it is possible to set the plurality of peak value segments at a high resolution while maintaining sensitivity and reducing the dynamic range of the circuit. In other words, since it is possible to precisely determine the number of fine particles having a diameter of 1.0 μm or less, it is possible to further precisely estimate the mass concentration.

Moreover, light receiving element 131 includes at least one of a photodiode and a phototransistor which have a sensitivity to light projected by light projecting element 121.

This makes it possible to achieve a low-cost light receiving element 131 and thus realize a low-cost particle detection sensor 1.

VARIATION 1

Note that in the above embodiment, particle detection sensor 1 includes memory 650 which stores correction coefficient fk1, and processor 620 corrects the relative relationship by reading correction coefficient fk1 from memory 650 in the determination processing. However, the method of correcting the relative relationship by the processor is not limited to this example.

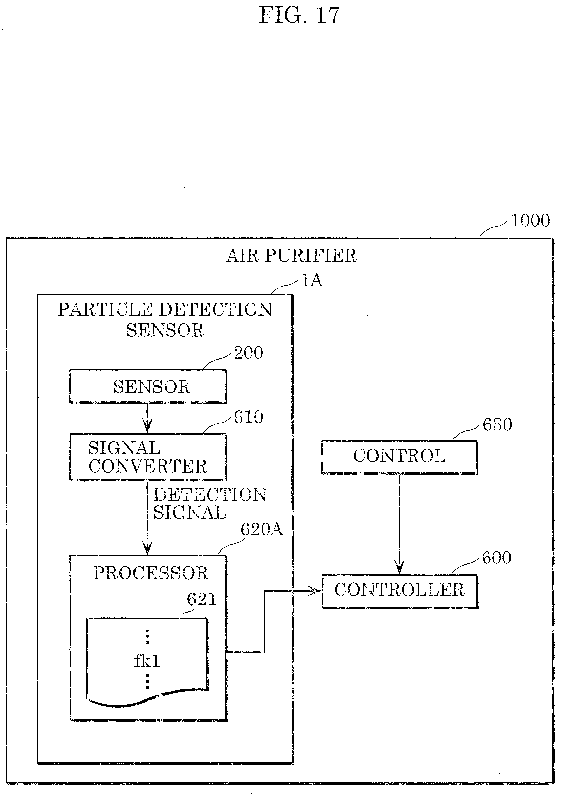

FIG. 17 is a block diagram illustrating one example of the configuration of an air purifier including particle detection sensor 1A according to Variation 1 of the embodiment.

Particle detection sensor 1A illustrated in FIG. 17 is substantially similar to particle detection sensor 1 according to the embodiment, but differs in that it does not include memory 650 and includes processor 620A instead of processor 620.

Processor 620A illustrated in FIG. 17 is embedded with code 621 including correction coefficient fk1, and may correct the above-described relative relationship by executing code 621 in the determination processing (the peak value counting processing (S33) in the embodiment).

This sort of particle detection sensor 1A according to this variation achieves the same advantageous effects as the embodiment. In other words, since the peak value segments to which the peak values extracted from the detection signal belong can be precisely identified, the mass concentration can be precisely estimated.

Moreover, by integrating code 621 including correction coefficient fk1 into processor 620A, there is no need for processor 620A to read correction coefficient fk1 from an external source such as a memory, which improves calculation processing speed.

VARIATION 2

Next, Variation 2 of the embodiment will be described.

In the above embodiment and Variation 1 thereof, the processor corrects the relative relationship between the peak value and the first threshold, and calculates the mass concentration using the corrected relative relationship. However, the processor may calculate the mass concentration without correcting the relative relationship. Hereinafter, a particle detection sensor including such as processor will be described.

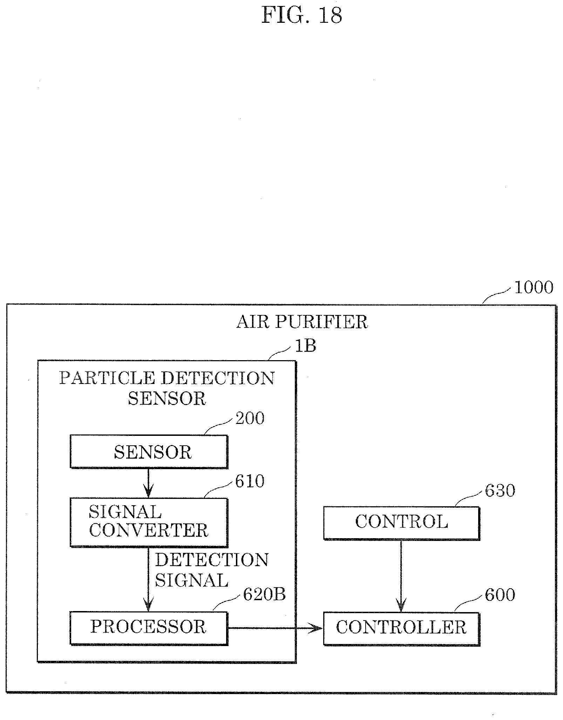

FIG. 18 is a block diagram illustrating one example of the configuration of air purifier 1000 including particle detection sensor 1B according to Variation 2 of the embodiment.

(Operations Performed by Particle Detection Sensor)

Next, operations performed by particle detection sensor 1B according to this variation will be described with focus on the differences from the above embodiment. More specifically, operations (processing) performed by processor 620B in this variation are different from those performed in the above embodiment.

(Operations Performed by the Processor)

Hereinafter operations performed by processor 620B according to this variation will be described with focus on the differences from the above embodiment.

As described above, the waveform of the analog signal output from light receiving element 131 includes waveform W1 having peak value VS1, waveform W2 having peak value VS2, waveform W3 having peak value VS3, and waveform W4 having peak value VS4. Further, the waveform includes noise waveform WN of noise floor VN.

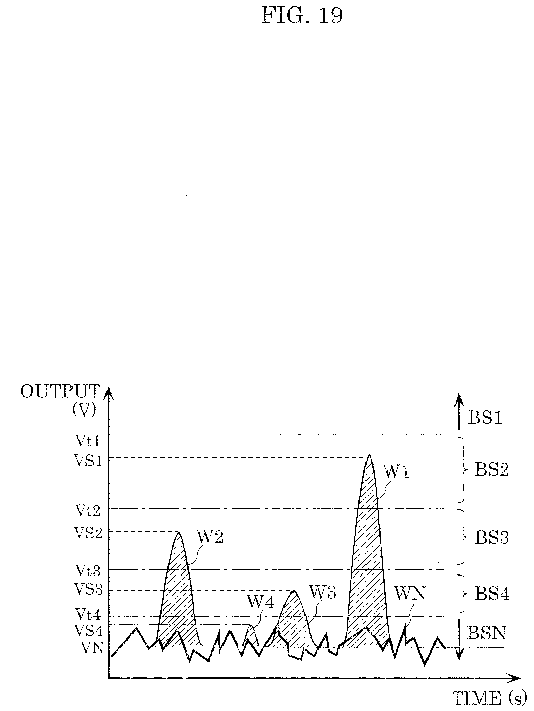

This sort of analog signal is, for example, filtered and analog-to-digital converted by signal converter 610 to convert the signal into a detection signal such as is shown in FIG. 19, and then obtained by processor 620B. FIG. 19 is a waveform diagram illustrating one example of the detection signal.

The detection signal illustrated in FIG. 19 is a signal obtained by sampling and quantizing the above described analog signal, and is, for example, 10-bit time-series digital data. Note that the detection signal has a step-shaped waveform, but in FIG. 19, the width of the step is illustrated as being extremely small (appearing as a curved line). A detection signal converted in this manner includes a waveform indicating the strength of the scattered light scattered by the particles and incident on light receiving element 131.

(Particle Detection Processing (Particle Detection Method))

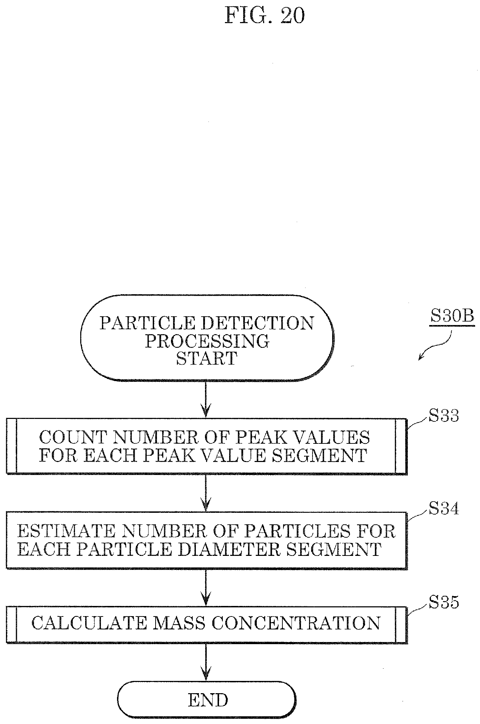

Hereinafter, detailed processes performed in the particle detection processing according to this variation will be described. FIG. 20 is a flow chart illustrating the particle detection processing (S30B) according to this variation.

Compared to the particle detection processing (S30) described in the above embodiment, the particle detection processing (S30B) illustrated in FIG. 20 performs the peak value counting processing (S33) without performing the reading processing (S31) and correction processing (S32) for correction coefficient fk1.

More specifically, in the particle detection processing, processor 620B counts the number of peak values extracted for each peak value segment (S31). In other words, processor 620B counts the number of peak values for each peak value segment by determining which of the peak value segments segmented based on one or more (in this embodiment, four) thresholds (first threshold) each of the plurality of peak values extracted from the waveform of the detection signal belongs to.

For example, each time a peak value is extracted, processor 620B determines which peak value segment among the plurality of peak value segments the extracted peak value belongs to. Then, processor 620B counts the number of peak values for each peak value segment.

(Setting the Peak Value Segments)

Since the setting of the peak value segments is substantially similar to the above embodiment, description thereof will be abridged.

Here, in this variation, threshold Vt4 is set so as to correspond to the peak value of the noise included in detection signal. In other words, the one or more (in this embodiment, four) thresholds (first threshold) include threshold Vt4 (hereinafter also referred to as noise threshold Vt4) that corresponds to the peak value of the noise included in the detection signal. In other words, threshold Vt4 is set such that results from noise in the detection signal are not included in peak value segment BS4.

Using peak value segments set in this manner, processor 620B determines which of the plurality of peak value segments BS1 through BS4 and BSN delimited by one or more (in this embodiment, 4) thresholds Vt1 through Vt4 each of the plurality of peak values extracted from the waveform of the detection signal belongs to.

(Particle Count Estimation Processing)

Since the particle count estimation processing is substantially similar to the above embodiment, description thereof will be abridged.

In this variation, processor 620B estimates the number of particles for each of the plurality of particle diameter segments BP1 through BP4 using (i) the number of peak values determined for, among the plurality of peak value segments BS1 through BS4 and BSN, peak value segments BS1 through BS4, which are the peak value segments other than peak value segment BSN, which is delimited as the upper limit of noise threshold Vt4, as well as (ii) the content ratio in each of the peak value segments BS1 through BS4.

(Mass Concentration Calculation Processing)

As illustrated in FIG. 20, processor 620B calculates the mass concentration (S35) of particles contained in gas using the number of particles in each of the plurality of particle diameter segments BP1 through BP4 estimated in the particle count estimation processing (S34).

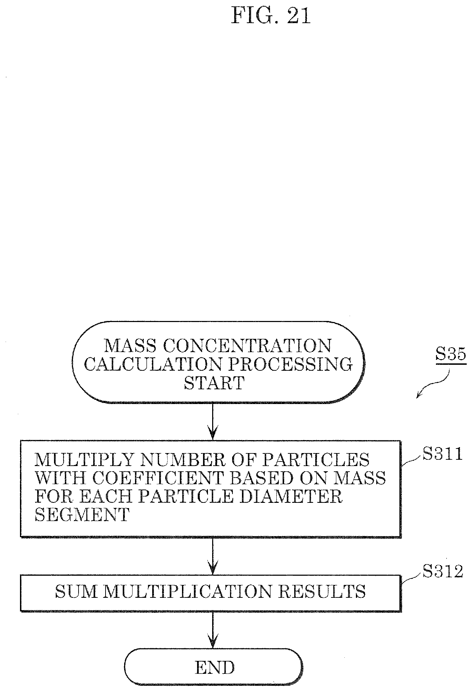

FIG. 21 is a flow chart illustrating detailed processes performed in the mass concentration calculation processing (S35).

As illustrated in FIG. 21, for each of the plurality of particle diameter segments BP1 through BP4, processor 620B multiplies the number of particles with a coefficient based on mass in the particle diameter segment (S311). More specifically, processor 620B multiplies, as the coefficient, a value based on the average mass in each of the plurality of particle diameter segments BP1 through BP4.

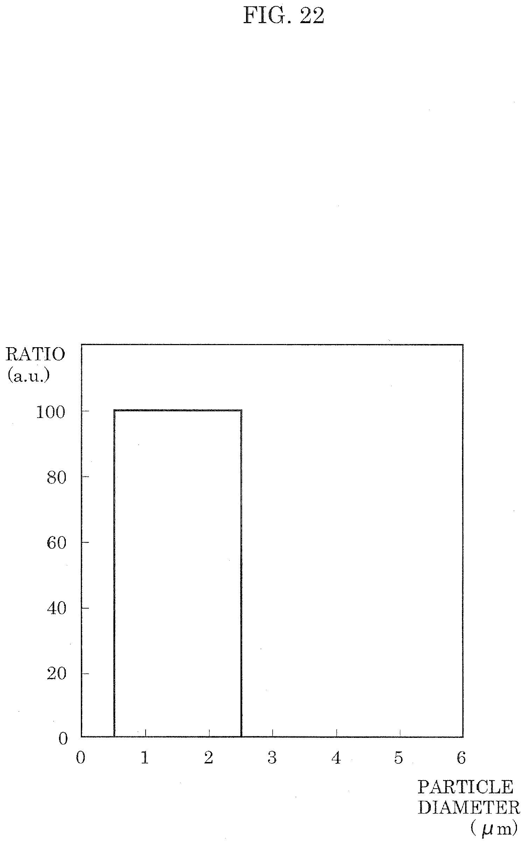

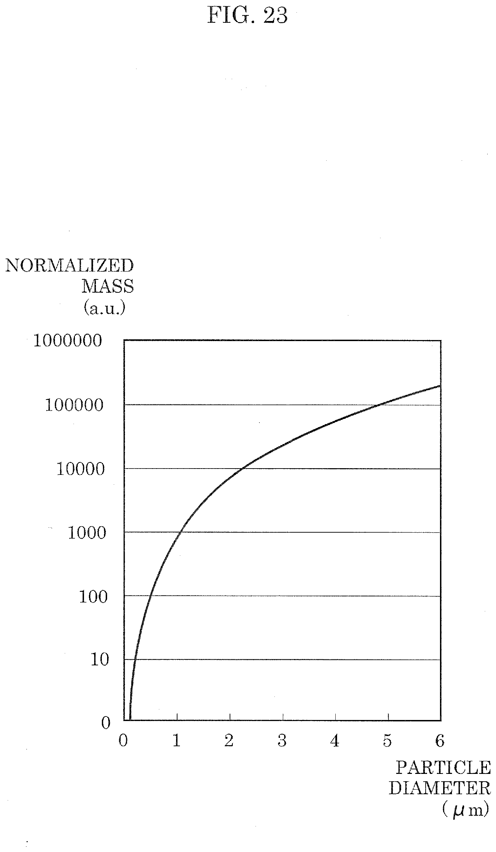

Here, the average mass in each particle diameter segment BP1 through BP4 will be described with reference to FIG. 22 and FIG. 23.

FIG. 22 is a graph illustrating one example of the presence ratio for each particle diameter according to this variation, and FIG. 23 is a graph illustrating one example of normalized particle mass according to the embodiment. Note that FIG. 22 shows a case in which the presence ratio for particles in a desired particle diameter range (in this embodiment, 0.5 $\mu$m to 2.5 $\mu$m) is constant. Moreover, FIG. 23 illustrates one example of normalized mass when the mass of a particle having a diameter of 0.1 $\mu$m is 1.

As illustrated in FIG. 22, when the presence ratio of particles in the desired particle diameter range is uniform, processor 620B, for example, for each of the particle diameter segments included in the desired particle diameter range, multiplies a value based on the average mass in the particle diameter segment as the coefficient with the number of particles in the particle diameter segment.

More specifically, when the desired particle diameter range is from 0.5 $\mu$m to 2.5 $\mu$m, the particle diameter range includes particle diameter segment BP3 having a particle diameter range of 1.0 $\mu$m to 2.5 $\mu$m and particle diameter segment BP4 having a particle diameter range of 0.5 $\mu$m to 1.0 $\mu$m Therefore, for particle diameter segment BP3, processor 620B multiples the number of particles NBP3 in particle diameter segment BP3 (see FIG. 16) with a coefficient based on the average mass in particle diameter segment BP3. Moreover, for particle diameter segment BP4, processor 620B multiples the number of particles NBP4 in particle diameter segment BP4 (see FIG. 16) with a coefficient based on the average mass in the particle diameter segment.

Here, the average mass in each particle diameter segment can be calculated using, for example, the normalized mass shown in FIG. 23. More specifically, the average mass for each particle diameter segment can be calculated by multiplying the mass of particles obtained in advance having a 0.1 μm diameter with a normalized mass corresponding to the particle diameter median value for the particle diameter segment.

In this way, processor 620B calculates the mass concentration for each of the plurality of particle diameter segments BP1 through BP4 by multiplying the number of particles in the particle diameter segment with a value based on the average mass in the particle diameter segment.

Then, processor 620B sums the mass concentrations calculated for the plurality of particle diameter segments BP1 through BP4. In other words, processor 620B sums the results of the multiplications of the number of particles with a coefficient based on the average mass for each of the plurality of particle diameter segments BP1 through BP4 (S312). With this, the mass concentration of the particles contained in gas is calculated.

In other words, when the above coefficient is di, mass concentration M of the particles contained in gas can be expressed by Expression 1 in the above embodiment using particle count NBPi for particle diameter segment BPi.

Here, when processor 620B calculates the mass concentration for particles contained in gas in the desired particle diameter range, processor 620B can calculate the mass concentration in the particle diameter range by summing the mass concentrations calculated for the particle diameter segments included in the desired particle diameter range.

Note that processor 620B may calculate the mass concentration for particles contained in gas in a particle diameter range including all particle diameter segments BP1 through BP4 by summing the above multiplication results for all particle diameter segments BP1 through BP4.

(Advantageous Effects, etc.)

As described above, with particle detection sensor 1B according to the embodiment, processor 620B performs: determination processing (peak value counting processing (S33) in this variation) of determining which of the plurality of peak value segments BS1 through BS4 and BSN delimited by one or more thresholds each of the peak values VS1 through VS4 extracted from the waveform of the detection signal belongs to; estimation processing (S34) of estimating the number of particles in each of the plurality of particle diameter segments Bpi using (i) the number of peak values determined for the plurality of peak value segments BS1 through BS4 and BSN and (ii) the content ratios of the plurality of particle diameter segments BP1 through BP4 in the plurality of peak value segments BS1 through BS4 and BSN; and calculation processing (S35) of calculating the mass concentration of particles contained in the gas.

In this way, by using the content ratios of the plurality of particle diameter segments BP1 through BP4 in the plurality of peak value segments BS1 through BS4 and BSN, the mass concentration can be estimated based on the number concentrations for the particle diameter segments BP1 through BP4. This makes it possible to precisely estimate the mass concentration without using a dust sampler. In other words, a compact design can be achieved and mass concentration can be precisely estimated at low cost. Further, since mass concentration can be estimated for each of the particle diameter segments BP1 through BP4, it is possible to precisely estimate mass concentration even when there is a change in particle diameter distribution. In other words, it is possible to improve particle detection precision.

Moreover, for example, the content ratio in one peak value segment among the plurality of peak value segments BS1 through BS4 (for example, peak value segment BS3) is a value based on the number of peak values (here, NBS3) determined for the one peak value segment, the number of peak values (here, NBS2) determined for each peak value segment larger than the one peak value segment (here, peak value segments BS1 and BS2), and the change in signal strength dependent on location in detection area DA.

With this, the content ratio can be calculated without performing complicated processing such as an inverse operation (deconvolution). Therefore, the mass concentration can be precisely calculated with a simple calculation.

Moreover, for example, thresholds Vt1 through Vt4 that delimit the plurality of peak value segments BS1 through BS4 and BSN include noise threshold Vt4 corresponding to the peak value of noise included in the detection signal, and in the estimation processing, processor 620B estimates the number of particles for each of the plurality of particle diameter segments BP1 through BP4 using (i) the number of peak values determined for, among the plurality of peak value segments BS1 through BS4 and BSN, peak value segments BS1 through BS4, which are the peak value segments other than peak value segment BSN, which is delimited as the upper limit of noise threshold Vt4, as well as (ii) the content ratio in each of the peak value segments BS1 through BS4.

Here, the waveform of the detection signal includes a noise waveform resulting from noise and a signal waveform resulting from particles in detection area DA. Here, signals resulting from small diameter particles and signals resulting from particles passing through a region of the detection area in which the optical sensitivity is low may be buried in the noise waveform. In this case, the noise waveform makes it difficult to precisely calculate the mass concentration.

Moreover, since the noise waveform includes optical and electrical components and varies according to temperature, interference, and degradation over time, depending on the application of particle detection sensor 1B, it is necessary to inhibit the influence the noise waveform has taking into account these changes in the noise waveform.

Therefore, processor 620B can calculate the mass concentration while inhibiting a reduction in precision due to noise included in the detection signal by providing peak value segment BSN delimited by an upper limit of noise threshold Vt4 corresponding to the noise peak value, and estimating, in the estimation processing, the number of particles in each of the plurality of particle diameter segments BP1 through BP4 using the number of peak values determined for each of the peak value segments BS1 through BS4 other than peak value segment BSN.

Moreover, for example, in the calculation processing, processor 620B calculates the mass concentration, for each of the plurality of particle diameter segments BP1 through BP4, by multiplying the number of particles in the particle diameter segment with a coefficient based on the average mass in the particle diameter segment.

With this, the mass concentration in each particle diameter segment can be calculated when the presence ratio of particles in each of the plurality of particle diameter segments BP1 through BP4 is constant. Here, the particle diameter range for the estimation of the mass concentration greatly changes depending on the application of particle detection sensor 1B. Thus, since the mass concentration can be estimated in a desired particle diameter range by calculating the mass concentrations for particle diameter segments BP1 through BP4, the applications in which particle detection sensor 1B can be used expand.

Moreover, for example, in the calculation processing, processor 620B calculates the mass concentration for particle diameter segments BP3 and BP4 included in the desired particle diameter range (in this embodiment, 0.5 $\mu$m to 2.5 $\mu$m), and calculates the mass concentration in the desired particle diameter range by summing the calculated mass concentrations.

As described above, the particle diameter range for the estimation of the mass concentration greatly changes depending on the application of particle detection sensor 1B. As such, it is possible to calculate the mass concentration in a particle diameter range dependent on one of various applications particle detection sensor 1B can be used in by summing the mass concentrations calculated for each of the particle diameter segments included in the desired particle diameter range.

VARIATION 3

In Variation 2 of the above embodiment, in the calculation processing, processor 620B calculates the mass concentration of particles contained in gas by multiplying the number of particles in each of the plurality of particle diameter segments with a coefficient based on the average mass in the particle diameter segment. However, for example, in the calculation processing, the processor may calculate the mass concentration of particles contained in gas by multiplying the number of particles in each of the plurality of particle diameter segments with a coefficient based on a representative mass based on the presence ratio of particles in the particle diameter segment.

Here, particulate matter (PM) includes, for example, PM2.5, which refers to particles having an aerodynamic diameter of 2.5 um or less.

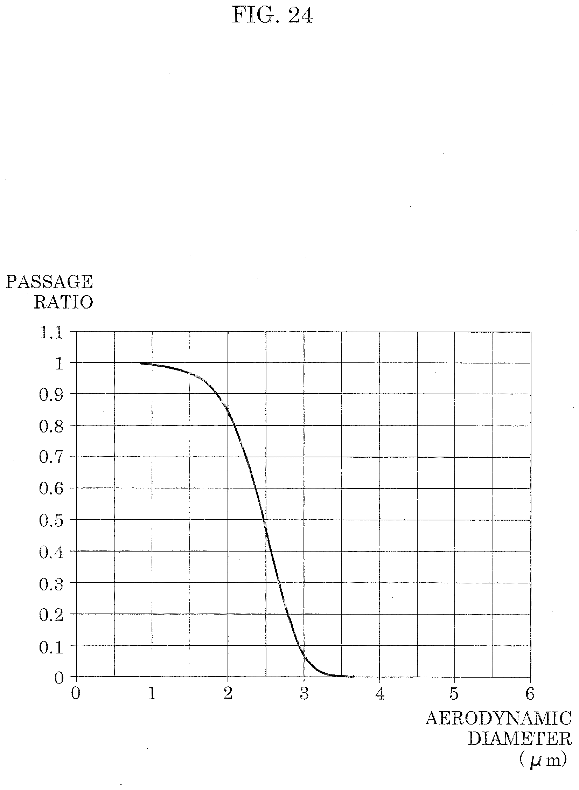

FIG. 24 is a graph illustrating the passage ratio characteristics for a typical PM2.5 particle apparatus. More specifically, PM2.5 is defined as "airborne particulate matter including particles extracted after removing particles larger than 2.5um in diameter by using a particle sizing device capable of separating particles having a diameter of 2.5 um or less at a rate of 50%," like is shown in FIG. 24.

Thus, when the mass concentration of particulate matter defined by aerodynamic diameter, such as PM10, PM2.5, and PM0.5, is estimated, the coefficient multiplied for each particle diameter segment is set based on a per-coefficient representative mass based on the rate of each diameter in the particle diameter range based on the above definition.

In other words, when the particle detection sensor according to this variation is used to obtain the mass concentration of PM2.5, in the calculation processing, the processor calculates the mass concentration for PM2.5 in the gas by multiplying the number of particles in each particle diameter segment with a coefficient based on a representative mass based on the presence ratio (in this variation, the passage ratio indicated in FIG. 24) of particles in the particle diameter segment.

Here, the representative mass in each particle diameter segment can be calculated using, for example, the presence ratio and normalized mass (see FIG. 23) of particles in the particle diameter segment. More specifically, the representative mass in each particle diameter segment can be calculated by multiplying a value obtained from the presence ratio and the normalized mass per particle diameter in each particle diameter segment with the mass for a particle having a diameter of 0.1 $\mu$m obtained in advance.

With the particle detection sensor according to this variation, similar to particle detection sensor 1B according to Variation 2 of the embodiment, since particle detection precision increases, the mass concentration of particles contained in gas can be precisely estimated.

VARIATION 4

Next, Variation 4 of the embodiment will be described.

In the above embodiment, processor 620 is described as performing peak search. In this case, from the viewpoint of reducing peak value error, the particle detection sensor is preferably configured as follows.

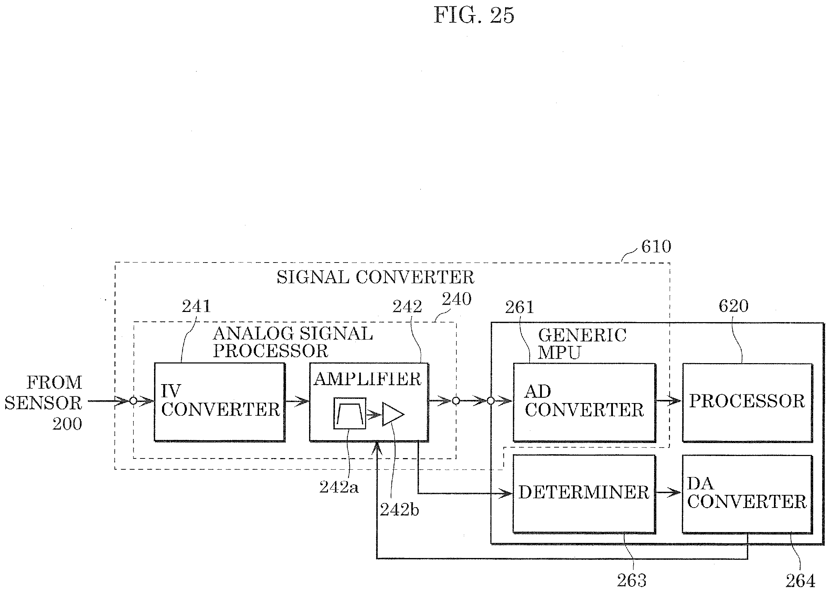

FIG. 25 is a block diagram illustrating one example of the configuration of part of the particle detection sensor according to this variation. More specifically, FIG. 25 illustrates the configurations of signal converter 610, processor 620, determiner 263, and DA converter 264.

As illustrated in FIG. 25, compared to particle detection sensor 1 according to the above embodiment, the particle detection sensor according to this variation further includes determiner 263 and DA converter 264.

Determiner 263 determines the magnitude relationship between the voltage signal amplified by amplifier 242 and a predetermined threshold. More specifically, determiner 263 is, for example, a comparator that compares the magnitude of the voltage signal amplified by amplifier 242 and the magnitude of the threshold, and outputs a signal indicating the result of the comparison. In this variation, when the output voltage of amplifier 242 (the voltage signal amplified by amplifier 242) is less than a reference voltage (predetermined threshold), determiner 263 outputs a value of 0, and when the output voltage of amplifier 242 is greater than the reference voltage, outputs a value of 1.

DA converter 264 is a voltage generator that outputs voltage generated using the determination result of determiner 263 to amplifier 242. More specifically, DA converter 264 monotonically increases or monotonically decreases the output voltage during a period until the determination result of determiner 263 changes, and maintains the output voltage during a period after the determination result of determiner 263 changes. In this variation, DA converter 264, for example, linearly increases the output voltage during a period in which the output of determiner 263 is 0, and maintains the output voltage during a period after the output of determiner 263 changes from 0 to 1. In other words, DA converter 264 does not change the output voltage during the period in which the output of determiner 263 is 1.

These functions performed by determiner 263 and DA converter 264 can be realized using any of a comparator, counter, DA converter module, etc., integrated in advance in the generic MPU.

Next, advantageous effects achieved by the particle detection sensor according to this variation as well as how this variation was arrived at will be described.

In general, with an operational amp used in, for example, an amplifier circuit, even when the input voltage is 0, a DC voltage of some value is found in the output voltage. This sort of DC voltage may affect the characteristics of, for example, the amplifier circuit, which can be problematic and reduce the particle diameter estimation precision by the particle detection sensor.

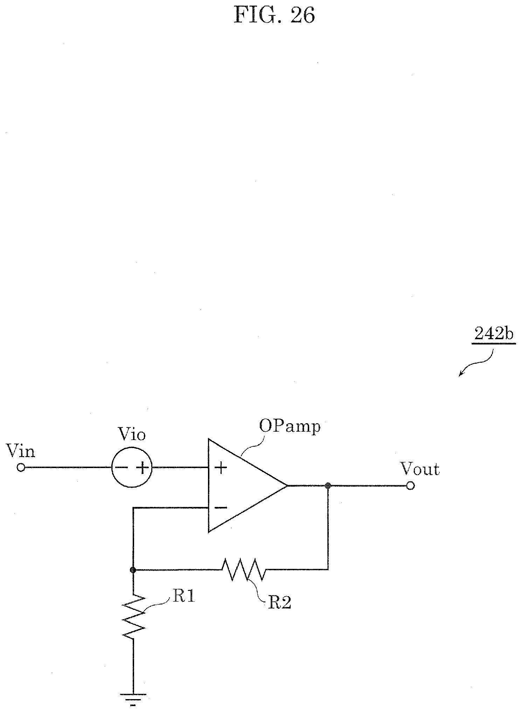

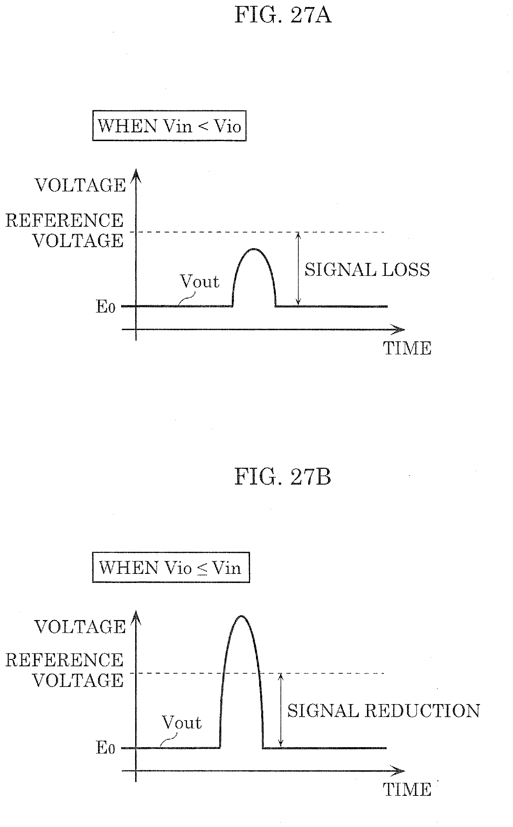

Hereinafter, this reduction in the estimation precision will be described in detail with reference to FIG. 26, FIG. 27A, and FIG. 27B.

FIG. 26 is a circuit diagram illustrating one example of the configuration of amplifier 242b. FIG. 27A and FIG. 27B are graphs illustrating output voltage Vout of amplifier 242b. More specifically, FIG. 27A illustrates a case in which input voltage Vin of amplifier 242b is less than input offset voltage Vio of operational amp OPamp, and FIG. 27B illustrates a case in which input voltage Vin of amplifier 242b is greater than or equal to input offset voltage Vio of operational amp OPamp. Note that in FIG. 26, for the purpose of illustration, input offset voltage Vio of operational amp OPamp is illustrated as voltage from a constant-voltage source external to operational amp OPamp.

As illustrated in FIG. 26, amplifier 242b includes, for example, operational amp OPamp, resistor R1, and resistor R2. Here, for example, when resistor R1 has a resistance of 1kΩ and resistor R2 has a resistance of 9kΩ, the voltage amplification rate (gain) of operational amp OPamp is increased tenfold. Therefore, when input offset voltage Vio is -10mV, output offset voltage Eo illustrated in FIG. 27A and FIG. 27B is -100mV.

Thus, output voltage Vout of amplifier 242b is a voltage offset by an amount equal to output offset voltage Eo from an amplified voltage of input voltage Vin.

More specifically, as illustrated in FIG. 27A, when input voltage Vin is less than input offset voltage Vio, output voltage Vout of amplifier 242b is less than a reference voltage (for example, 0V) as a result of being offset by an amount equal to output offset voltage Eo. Thus, in digital data generated by AD converter 261, signal loss occurs, making it difficult to estimate particle diameter.

Moreover, as illustrated in FIG. 27B, when input voltage Vin is greater than or equal to input offset voltage Vio, output voltage Vout of amplifier 242b is reduced (decreased) by an amount equal to output offset voltage Eo as a result of being offset by output offset voltage Eo. Thus, in digital data generated by AD converter 261, signal reduction occurs, making it difficult to precisely estimate particle diameter.

Therefore, in order to inhibit a decrease in particle diameter estimation precision, it is preferable to cancel out input offset voltage Vio of operational amp OPamp.

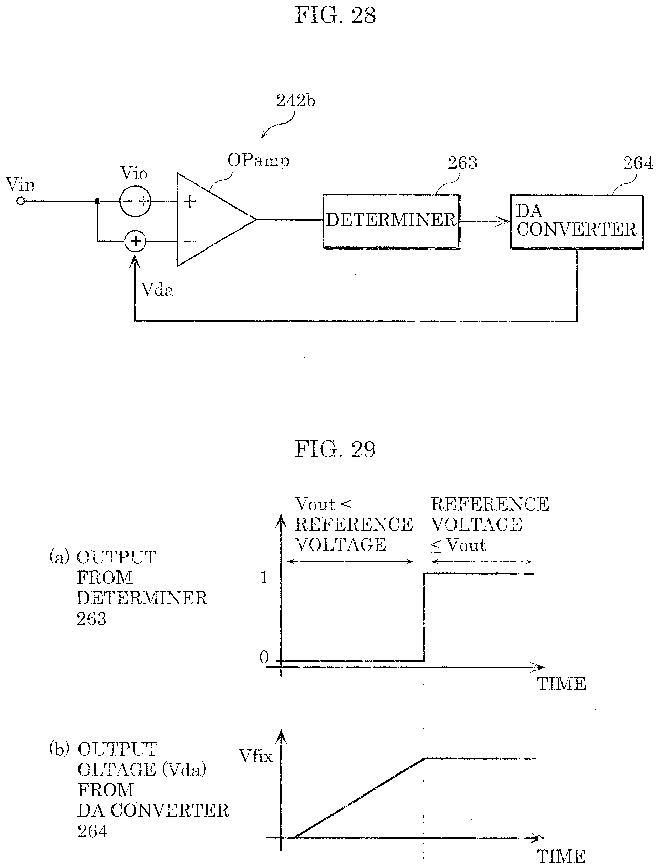

According to this variation, with the above configuration, it is possible to cancel out input offset voltage Vio. Hereinafter, operations for canceling out input offset voltage Vio will be described with reference to FIG. 28 and FIG. 29.

FIG. 28 is a schematic diagram schematically illustrating the connective relationship between amplifier 242b, determiner 263, and DA converter 264. FIG. 29 is a graph illustrating the output of determiner 263 and the output of DA converter 264. Note that in FIG. 28, among components included in amplifier 242b, only operational amp OPamp is illustrated; all other components are omitted. Moreover, in FIG. 28, for the purpose of illustration, input offset voltage Vio of operational amp OPamp is illustrated as voltage from a constant-voltage source external to operational amp OPamp, similar to FIG. 26.

As illustrated in FIG. 28, output voltage Vout of amplifier 242b (output voltage Vout of operational amp OPamp) is input into determiner 263, and determiner 263 outputs a signal indicating a comparison result of the input output voltage Vout and a reference voltage to DA converter 264. More specifically, determiner 263 compares output voltage Vout and the reference voltage, and as illustrated in FIG. 29, when output voltage Vout is less than the reference voltage, outputs 0, and when output voltage Vout is greater than or equal to the reference voltage, outputs 1.

DA converter 264 outputs voltage in accordance with the determination result of determiner 263 to amplifier 242. More specifically, as illustrated in FIG. 29, DA converter 264 increases its output voltage during the period in which output voltage Vout is determined to be less than the reference voltage by determiner 263, that is to say, during the period in which the output of determiner 263 is 0. On the other hand, DA converter 264 maintains (fixes) its output voltage during the period in which output voltage Vout is determined to be greater than or equal to the reference voltage by determiner 263, that is to say, during the period in which the output of determiner 263 is 1. Therefore, DA converter 264 maintains voltage Vfix during the period in which the output of determiner 263 is 1 and when the determination result by determiner 263 changes from 0 to 1.

In this variation, DA converter 264 inputs a voltage in accordance with the determination result by determiner 263 into, among two input terminals (non-inverting input terminal and inverting input terminal) of operational amp OPamp, the input terminal (herein referred to as an inverting input terminal) different than the input terminal into which input voltage Vin is input. With this, a voltage of input voltage Vin superimposed with output voltage Vda of DA converter 264 is applied to one of the input terminals of operational amp OPamp. As such, when output voltage Vda of DA converter 264 and input offset voltage Vio cancel each other out, output offset voltage Eo is 0.

Therefore, when the determination result by determiner 263 changes from 0 to 1, that is to say, when output voltage Vout reaches the reference voltage as a result of the increasing of output voltage Vda of DA converter 264, output offset voltage Eo is 0. Thus, input offset voltage Vio of operational amp OPamp can be canceled out by output voltage Vfix of DA converter 264.

Thus, by outputting output voltage Vfix to amplifier 242, input offset voltage Vio of operational amp OPamp can be canceled out. Therefore, after the canceling out of input offset voltage Vio, that is to say, in a period after the determination result by determiner 263 changes from 0 to 1, DA converter 264 can continuously cancel out input offset voltage Vio by outputting output voltage Vfix.

As described above, with the particle detection sensor according to this variation, input offset voltage Vio of operational amp OPamp can be cancelled out by outputting, to amplifier 242, voltage (in this variation output voltage Vfix) generated using the magnitude relationship between the voltage signal (in this variation output voltage Vout of operational amp OPamp) amplified by amplifier 242 and a predetermined threshold (in this variation the reference voltage). In other words, with this variation, input offset voltage Vio of operational amp OPamp can be cancelled out by performing feedback control by comparing output offset voltage Eo of operational amp OPamp with the reference voltage. This makes it possible to inhibit a reduction in particle diameter estimation precision by input offset voltage Vio of operational amp OPamp.

Note that in this variation, DA converter 264 is exemplified as linearly amplifying output voltage Vda, but DA converter 264 may monotonically increase output voltage Vda in a non-linear manner, and may monotonically decrease output voltage Vda in a linear or non-linear manner.

Moreover, the predetermined threshold is not limited to the reference voltage, and may be an arbitrary voltage set according to, for example, the noise floor of the voltage signal.

Moreover, in this variation, amplifier 242 is exemplified as including a single operational amp OPamp, but amplifier 242 may include a plurality of operational amps connected together in a cascade. In this case, it is sufficient if the input offset voltage for at least one operational amp is cancelled out. For example, the input offset voltage for all operational amps may be cancelled or the input offset voltage for the operational amp in the first stage position may be cancelled.

However, it is possible to effectively inhibit influence from the input offset voltage throughout amplifier 242 by cancelling the input offset voltage in an operational amp that is easily influenced by the input offset voltage, such as an operational amp into which a fine signal component is input. As such, it is preferable that the input offset voltage for the operational amp located in the first stage, that is to say, the operational amp located closest to light receiving element 131 be cancelled out.

Moreover, it is possible to effectively inhibit influence from the input offset voltage throughout amplifier 242 by cancelling out the input offset voltage in an operational amp susceptible to error due to the input offset voltage. As such, it is preferable that the input offset voltage for the operational amp having the highest gain be cancelled out.

Moreover, although the timing at which the cancelling of input offset voltage Vio is performed is not particularly limited, from the standpoint of accurately cancelling input offset voltage Vio, the cancelling is preferably performed in a period in which the current signal output from sensor 200 does not include a particle-dependent signal component. As such, for example, the cancelling is preferably performed in, for example, the initialization period when the particle detection sensor is powered on, in a period during which light projecting element 121 is turned off, or during a period up until heater device 60 reaches a stable temperature.

VARIATION 5

Next, Variation 5 of the embodiment will be described.

In the above embodiment, processor 620 is described as performing peak search. In this case even when the amount of particles in the gas is large, that is to say, even when the concentration of the particles is high, from the standpoint of maintaining precise particle diameter estimation, the particle detection sensor is preferably configured as follows.

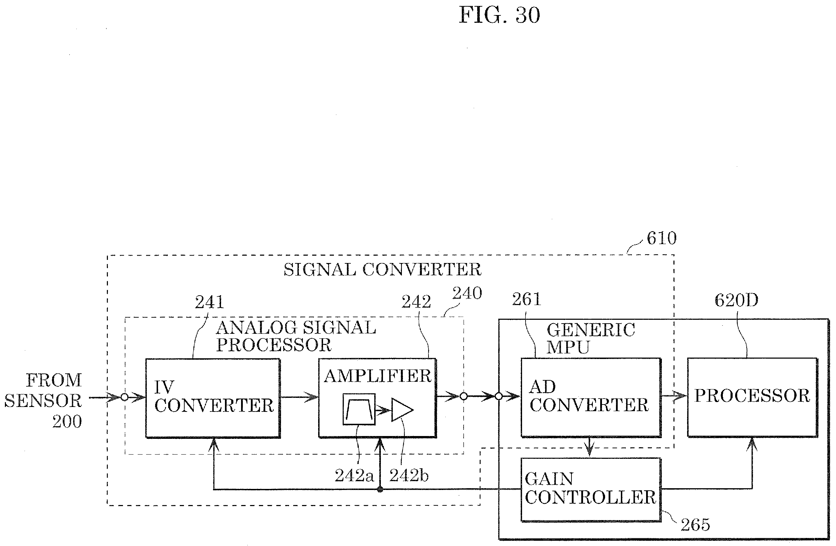

FIG. 30 is a block diagram illustrating one example of the configuration of part of the particle detection sensor according to this variation. More specifically, FIG. 30 illustrates the configurations of signal converter 610, processor 620D, and gain controller 265.

As illustrated in FIG. 30, compared to the particle detection sensor according to the above embodiment, the particle detection sensor according to this variation further includes gain controller 265 and includes processor 620D in place of processor 620.

Gain controller 265 controls the gain of at least one (in this variation, both) of IV converter 241 and amplifier 242 using digital data output from AD converter 261. More specifically, gain controller 265 controls the gain in accordance with whether or not the digital data as reached a predetermined threshold voltage (for example, a saturation voltage). More specifically, when the digital data reaches the threshold, gain controller 265 outputs a control signal that reduces the gain to IV converter 241 and amplifier 242. Moreover, gain controller 265 outputs information indicating the gain to processor 620D.

Note that gain controller 265 may control the gain of only one of IV converter 241 and amplifier 242.

For example, gain controller 265 controls the gain of IV converter 241 by adjusting the current-voltage conversion coefficient of IV converter 241 with a control signal. Moreover, gain controller 265 controls the gain of amplifier 242 by adjusting the voltage amplification rate of amplifier 242 with a control signal.

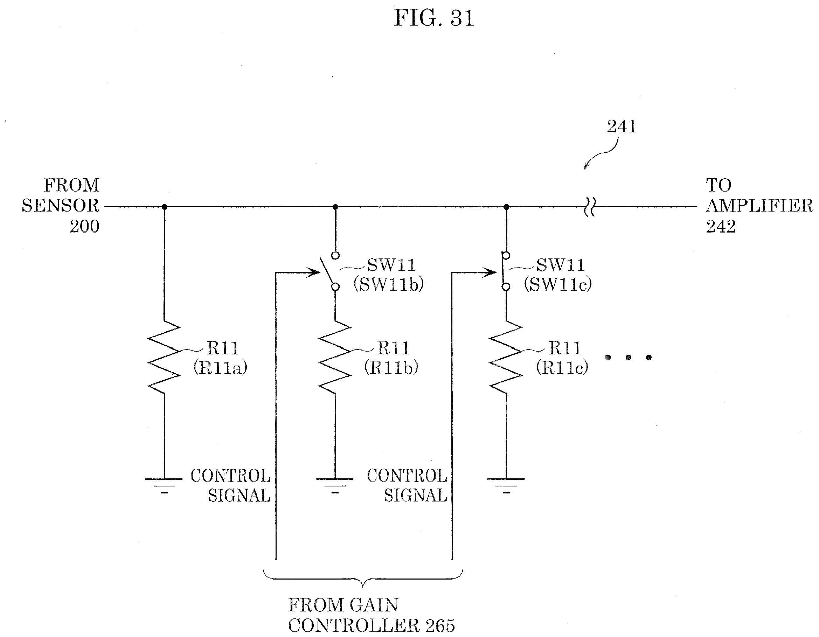

FIG. 31 is a circuit diagram illustrating one example of IV converter 241 according to this variation. Note that IV converter 241 illustrated in FIG. 31 may further include a resistor connected in series with sensor 200, and another resistor connected in parallel to resistors R1, for example, but such configurations are omitted from FIG. 31.

As illustrated in FIG. 31, IV converter 241 includes a plurality of resistors R11 connected in parallel (resistor Rlla through resistor R11c, for example) and switches SW11 (switches SWllb and SW11c) connected in series with at least some of the plurality of resistors R11 (in FIG. 31, resistor Rllb and resistor R11c). These switches SW11 can be turned on and off independently using the control signal from gain controller 265.

With such a configuration, the current-voltage conversion coefficient of IV converter 241 is adjusted by IV converter 241 switching on and off switches SW11 in accordance with the control signal from gain controller 265. More specifically, IV converter 241 has a smaller current-voltage conversion coefficient the greater the number of off switches SW11 there are.

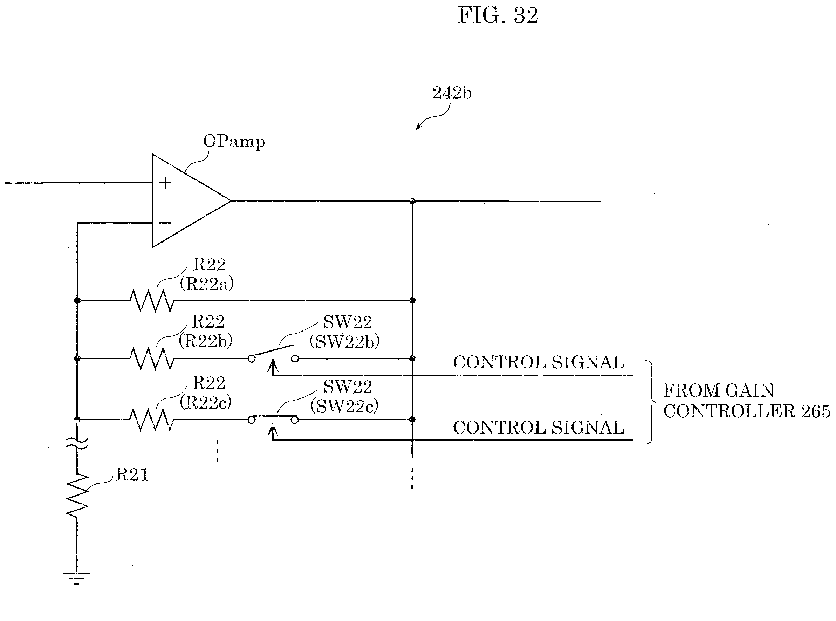

FIG. 32 is a circuit diagram illustrating one example of amplifier 242b according to this variation. Note that amplifier 242b illustrated in FIG. 32 may further include a resistor connected in series with an input terminal of operational amp OPamp, and another resistor connected in parallel to resistor R22, for example, but such configurations are omitted from FIG. 32.

As illustrated in FIG. 32, amplifier 242b includes operational amp OPamp, resistor R21, plurality of resistors R22 (resistor R22a through resistor R22c, for example) and at least one switch SW22 (switch SW22b and SW22c). More specifically, resistor R21 is inserted between the feedback loop of operational amp OPamp and the ground. The plurality of resistors R22 are connected together in parallel and inserted in the feedback loop of operational amp OPamp. Switches SW22 are connected in series to at least some of the plurality of resistors R22 (in FIG. 32, resistor R22b and resistor R22c) and can be turned on and off independently using the control signal from gain controller 265.

With such a configuration, the voltage amplification rate of amplifier 242b is adjusted by amplifier 242b switching on and off switches SW22 in accordance with the control signal from gain controller 265. More specifically, amplifier 242b has a smaller voltage amplification rate the greater the number of off switches SW22 there are.

In this way gain controller 265 can adjust the gains of IV converter 241 and amplifier 242. Moreover, this function of gain controller 265 can be realized using, for example, a comparator or counter integrated in the generic MPU.

Compared to processor 620 in the above embodiment, processor 620D calculates particle diameter further using information indicating gain output from gain controller 165 in the particle diameter calculation processing. More specifically, even when the magnitude of the current signal output from sensor 200 is the same, the digital value of the digital data decreases in accordance with a decrease in the gain. Then, processor 620D holds in advance a gain and a coefficient dependent on the gain, and corrects a plurality of thresholds for calculating particle diameter using the coefficient.

With this, processor 620D can appropriately calculate particle diameter in accordance with control of gain by gain controller 165. Note that processor 620D may calculate particle diameter by correcting the digital data using a coefficient dependent on gain.

Next, advantageous effects achieved by the particle detection sensor according to this variation as well as how this variation was arrived at will be described.

Typically, it is expected of particle detection sensors to be able to measure the diameter of various particles, from small diameter particles (fine particles) to larger diameter particles (coarse particles). However, when a particle detection sensor is adjusted so as to be capable of measuring fine particles, there is a concern that coarse particles will become immeasurable. In other words, since the current signal output from sensor 200 for coarse particles becomes bigger, there are times when an analog element such as the operational amp used in analog signal processor 240 becomes saturated and the digital data therefore saturates.

Moreover, when the particle concentration is high, since the current signal becomes bigger due to a plurality of particles sequentially entering sensor 200, just as in the case of coarse particles, the digital data can become saturated.

In such cases, since it is difficult to detect peak values in the digital data in accordance with peak values in the current signal, there is a problem in that the particle diameter estimation precision decreases.

Thus, in this variation, it is possible to detect peak values in the digital data even when the current signal output from sensor 200 is big by gain controller 265 controlling the gain of analog signal processor 240 using the digital data. In other words, in this variation, it is possible to measure particle diameter for both fine and coarse particles by performing automatic gain control (AGC) using gain controller 265.

Hereinafter, advantageous effects achieved by particle detection sensor according to this variation will be compared to instances when AGC is not performed by gain controller 265, and will be further described in detail.

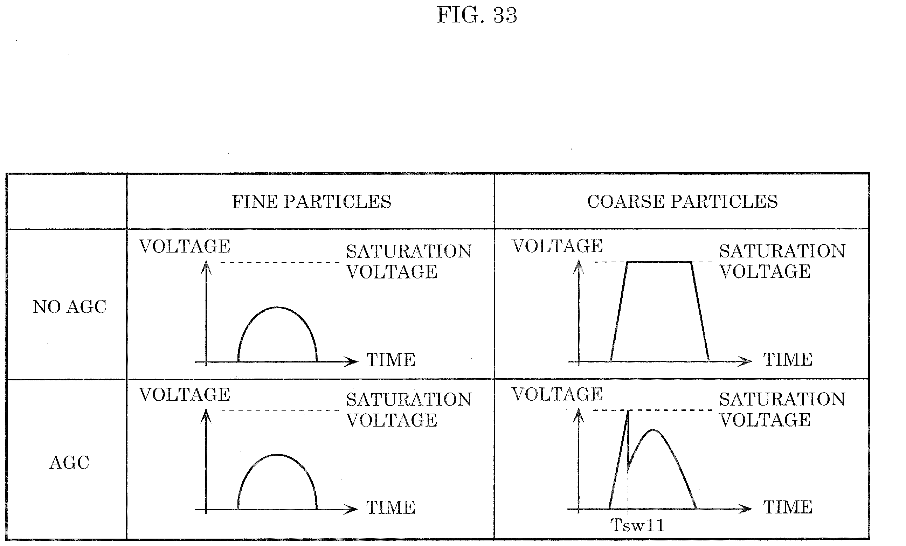

FIG. 33 schematically illustrates digital data when AGC is not performed by gain controller 265 (NO AGC in FIG. 33) and when AGC is performed by gain controller 265 (AGC in FIG. 33) for both fine and coarse particles.

As illustrated in FIG. 33, for fine particles, regardless of whether AGC is performed or not by gain controller 265, the peak value can be obtained.

However, for coarse particles, when AGC is not performed by gain controller 265, the digital data saturates, causing obtainment of the peak value to be problematic. In contrast, when AGC is performed by gain controller 265, when the digital data reaches a threshold voltage (a saturation voltage in this variation) (time Tsw1), it is possible to obtain a peak value unobtainable when AGC was not performed, by switching so as to reduce the gain.

As described above, with the particle detection sensor according to this variation, it is possible to obtain peak values in digital data for both fine and coarse particles by gain controller 265 controlling gain using digital data output from AD converter 261. Moreover, the same applies to when the concentration of particles is high; peak values in digital data can be obtained by gain controller 265 controlling gain. Thus, since it is possible to measure particle diameter using a peak value, reduction in particle diameter estimation precision can be inhibited.

Here, gain controller 265 may determine whether digital data has reached the saturation voltage by any given method; for example, gain controller 265 may determine this based on the success or failure of detection of a peak value in the digital data.

In other words, gain controller 265 may compare a digital value sample for determination purposes, and if the digital value continuously decreases in a predetermined subsequent number of samples, may determine detection of the peak value to be a success, and determine that the digital data has not reached the saturation voltage. On the other hand, gain controller 265 may determine detection of the peak value to be a failure in all other cases and determine that the digital data has reached the saturation voltage. Note that gain controller 265 may compare a digital value sample for determination purposes, and if the digital value has decreased more than a predetermined value in the immediately subsequent digital value sample, may determine detection of the peak value to be a success, and may determine detection of the peak value to be a failure in all other cases.

Note that in this variation, a threshold voltage at which gain controller 265 switches gain is used as the saturation voltage, but the threshold voltage is not limited to this example; the threshold voltage may be any arbitrary voltage equal to or less than the saturation voltage.

Moreover, gain controller 265 may increase gain in addition to decrease gain. For example, gain controller 265 may increase gain when the digital data does not reach a threshold voltage for a relatively long period of time (for example, 10 minutes). This makes it possible to precisely measure the diameters of fine particles. More specifically, since there is a trade-off between dynamic range and resolution in the diameter measurement by the particle detection sensor, it is possible to precisely measure the diameters of fine particles by increasing the gain.

Moreover, in this variation, gain controller 265 controls the gain using the digital data. However, gain controller 265 may control the gain without using the digital data by, for example, controlling the gain to a predetermined level. In other words, gain controller 265 may control analog signal processor 240 such that the gain of analog signal processor 240 reaches a preset gain. For example, gain controller 265 may control analog signal processor 240 such that the gain reaches a gain set based on the air pollution in a destination region of the particle detection sensor from the particle detection sensor factory.

With such a configuration, it is possible to standardize the configurations of IV converter 241 and amplifier 242 by controlling the gain using gain controller 265, making it possible to inhibit complex design and manufacturing steps with respect to the particle detection sensor. As the gain, for example, a relatively small value is set when the air pollution in the destination region of the particle detection sensor is high, and a relatively high value is set when the air pollution in the destination region is low.

Moreover, gain controller 265 may control gain in accordance with a user setting.

VARIATION 6

Next, Variation 6 of the embodiment will be described.

In Variation 5 of the above embodiment, voltaic saturation of digital data when the concentration of particles is high is described. However, when the concentration of particles is high, there may be an inconsistency (temporal saturation) between the changes in the current signal output from sensor 200 and the changes in the digital data resulting from the response from an analog element in the analog signal processor, such as a filter. This may cause a decrease in particle diameter detection precision.

Therefore, even when the concentration of particles is high, from the standpoint of inhibiting a reduction in particle diameter estimation, the particle detection sensor is preferably configured as follows.

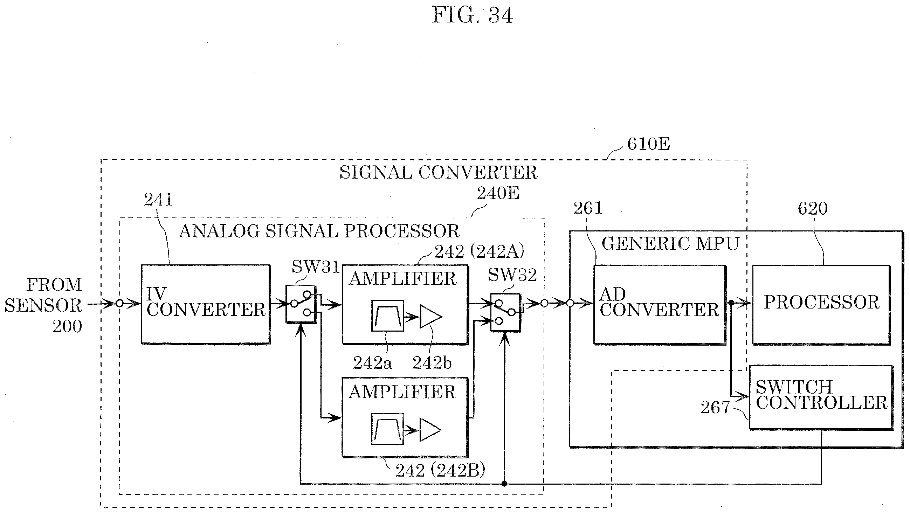

FIG. 34 is a block diagram illustrating one example of the configuration of part of the particle detection sensor according to this variation. More specifically, FIG. 34 illustrates the configurations of signal converter 610E, processor 620, and switch controller 267.

As illustrated in FIG. 34, compared to particle detection sensor 1 according to the above embodiment, the particle detection sensor according to this variation includes analog signal processor 240E including a plurality of amplifiers 242 in place of analog signal processor 240, and further includes switch controller 267.

Compared to analog signal processor 240, analog signal processor 240E includes a plurality of amplifiers 242 (in this embodiment, two amplifiers: amplifiers 242A and 242B), IV converter 241, and switch SW31 for connecting to one amplifier 242 among the plurality of amplifiers 242. Moreover, in this variation, analog signal processor 240E includes switch SW32 for connecting to one of the plurality of amplifiers 242 to AD converter 261.

Switch SW31 connects IV converter 241 to one amplifier 242 among the plurality of amplifiers 242 in accordance with a control signal from switch controller 267. Switch SW32 connects AD converter 261 to the one amplifier 242 in accordance with the control signal from switch controller 267.

Switch controller 267 switches between a first state in which one amplifier 242 among the plurality of amplifiers 242 is caused to amplify the voltage signal, and a second state in which a different amplifier 242 among the plurality of amplifiers 242 is caused to amplify the voltage signal. More specifically, switch controller 267 switches between the first and second states using time-series digital data sampled and quantized by AD converter 261. In this variation, switch controller 267 switches between the first and second states by switching between control signals which control the connectivity of switch SW31 and switch SW32. This function of switch controller 267 can be realized using, for example, a functional module, such as a comparator, integrated in the generic MPU.

In this way, with the particle detection sensor according to this embodiment, switch controller 267 switches between the plurality of amplifiers 242 to select which amplifier 242 amplifies the voltage signal.

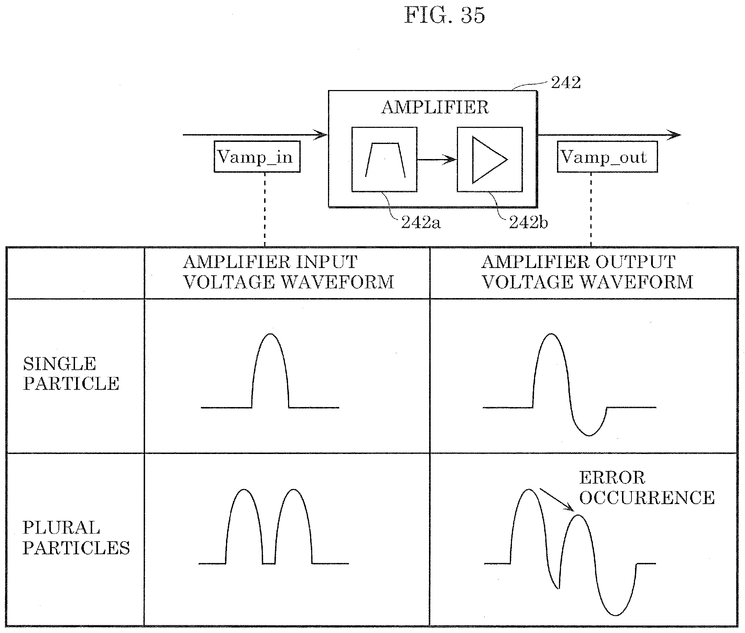

Next, operations performed by switch controller 267 as well as how this variation was arrived at will be described. FIG. 35 schematically illustrates, in a postulation in which switching is not performed by switch controller 267 and one amplifier 242 amplifies the voltage signal, waveforms for output voltage Vamp_out and waveforms for input voltage Vamp_in of the one amplifier 242 when one particle is introduced into detection area DA ("single particle" in FIG. 35) and when a plurality (for example, two) of the same particles are introduced into detection area DA ("plural particles" in FIG. 35).

As illustrated in FIG. 35, regarding the case in which a single particle is introduced into detection area DA, the waveform of output voltage Vamp_out includes an undershoot, that is to say, a disruption in the waveform manifesting as a downward protrusion to a low voltage. This undershoot does not appear in input voltage Vamp_in. An undershoot is caused by the response for an analog element in amplifier 242, such as a filter, making it difficult to prevent the occurrence of an undershoot itself.

There is concern that such an undershoot may lead to the following problems when a plurality of particles are introduced into detection area DA, that is to say, when a plurality of particles sequentially enter detection area DA due to a high concentration of particles being contained in the gas.

More specifically, as illustrated in FIG. 35, when a plurality of the same particles are introduced into detection area DA, the waveform of input voltage Vamp_in includes two pulse waveforms having the same peak value. In contrast, the waveform of output voltage Vamp_out includes two pulse waveforms having different peak values. This is because the temporal interval between the first pulse waveform and the subsequent pulse waveform is relatively short, causing an undershoot generated by the first pulse waveform to appear in the subsequent pulse waveform.

Thus, among two sequentially introduced particles having the same particle diameter, the subsequently introduced particle may have a lower peak value in the waveform of output voltage Vamp_out than the original peak value. In other words, output voltage Vamp_out may contain an error. In this case, the digital data AD converted by AD converter 261 also contains an error corresponding to the error in output voltage Vamp_out, leading to a reduction in particle diameter estimation precision.

In light of this, in this variation, a reduction in particle diameter estimation precision can be inhibited even when the particle concentration is high by switch controller 267 switching between which amplifier 242 amplifies the voltage signal.

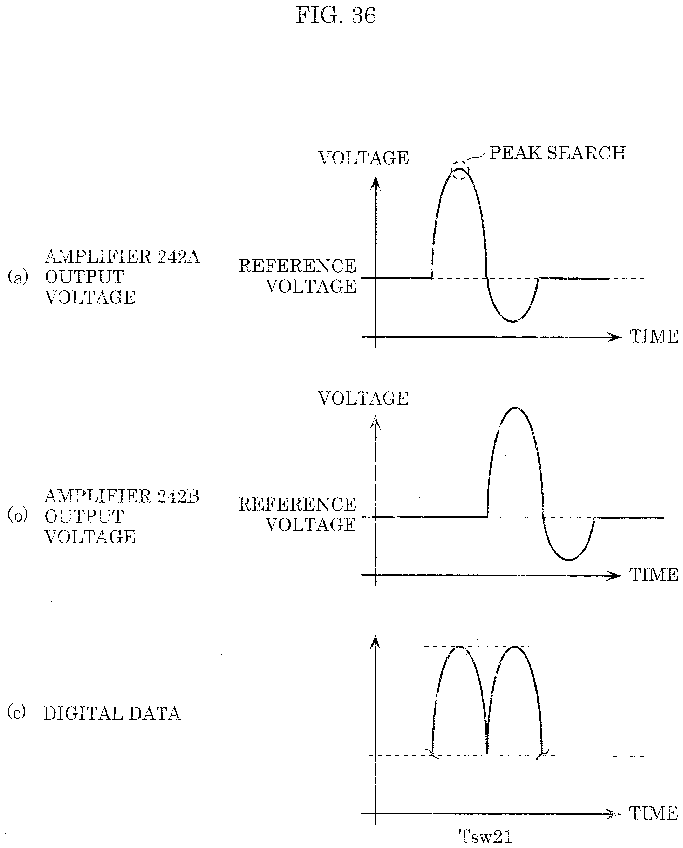

Hereinafter, the advantageous effects achieved by the particle detection sensor according to this variation and one example of an operation performed by switch controller 267 will be described with reference to FIG. 36.

FIG. 36 illustrates advantageous effects achieved by the particle detection sensor according to this variation. More specifically, FIG. 36 illustrates a case in which two particles having the same diameter are sequentially introduced into detection area DA. In FIG. 36, (a) illustrates a graph indicating output voltage of amplifier 242A, (b) illustrates a graph indicating output voltage of amplifier 242B, and (c) illustrates a graph indicating the digital data. Note that in FIG. 36, only the pulse waveforms corresponding to the particles are illustrated; other pulse waveforms, such as those corresponding to noise, are omitted.

First, switch controller 267 causes amplifier 242A among the plurality of amplifiers 242 to amplify the voltage signal. More specifically, switch controller 267 causes switch SW31 to connect IV converter 241 and amplifier 242A, and causes switch SW32 to connect amplifier 242A and AD converter 261.

With this, as illustrated in (a) in FIG. 36, when a particle is introduced into detection area DA, the waveform of the output voltage of amplifier 242A includes a pulse waveform corresponding to the particle.

Moreover, switch controller 267 detects the peak of the digital data by performing the peak search described in the above embodiment.

Then, after detecting the peak, at the point in time at which the digital data reaches a reference value (time Tsw21), that is to say, at the point in time at which the output voltage of amplifier 242A reaches a reference voltage, amplifier 242B is caused to amplify the voltage signal in place of amplifier 242A. In other words, at the point in time at which the digital data reaches the reference value, the first state in which amplifier 242A is caused to amplify the voltage signal switches to the second state in which amplifier 242B is caused to amplify the voltage signal. More specifically, switch controller 267 causes switch SW31 to connect IV converter 241 and amplifier 242B, and causes switch SW32 to connect amplifier 242B and AD converter 261.

With this, as illustrated in (b) in FIG. 36, regarding the latter of two particles having the same particle diameter and sequentially introduced into detection area DA, the waveform of the output voltage of amplifier 242B includes a pulse waveform corresponding to the latter particle as the waveform of the output voltage of amplifier 242B.

Therefore, as illustrated in (c) in FIG. 36, the digital data includes two pulse waveforms having the same peak value. With this, regarding the latter of the two introduced particles, particle diameter can be estimated while inhibiting a reduction in estimation precision.

As described above, with the particle detection sensor according to this variation, switch controller 267 switches between a first state in which one amplifier 242 (in this variation, amplifier 242A) among the plurality of amplifiers 242 is caused to amplify the voltage signal and a second state in which a different amplifier 242 (in this variation, amplifier 242B) among the plurality of amplifiers 242 is caused to amplify the voltage signal.

With this, the voltage signal amplified by the one amplifier 242 and the voltage signal amplified by the other amplifier 242 are independent signals that do not affect one another. Thus, even in a period in which an undershoot appears in the voltage signal amplified by the one amplifier 242, the voltage signal amplified by the other amplifier 242 is not affected by the undershoot. Therefore, by switching between the first and second states, it is possible to reduce a peak error in the pulse waveform even when the temporal interval between pulse waveforms is short due to a high concentration of particles. Thus, even when the concentration of particles is high, it is possible to inhibit a reduction in particle diameter estimation precision.

Note that in this variation, the particle detection sensor includes two amplifiers 242, but it is sufficient if a plurality of amplifiers 242 are provided. In other words, the particle detection sensor may include three or more amplifiers 242.

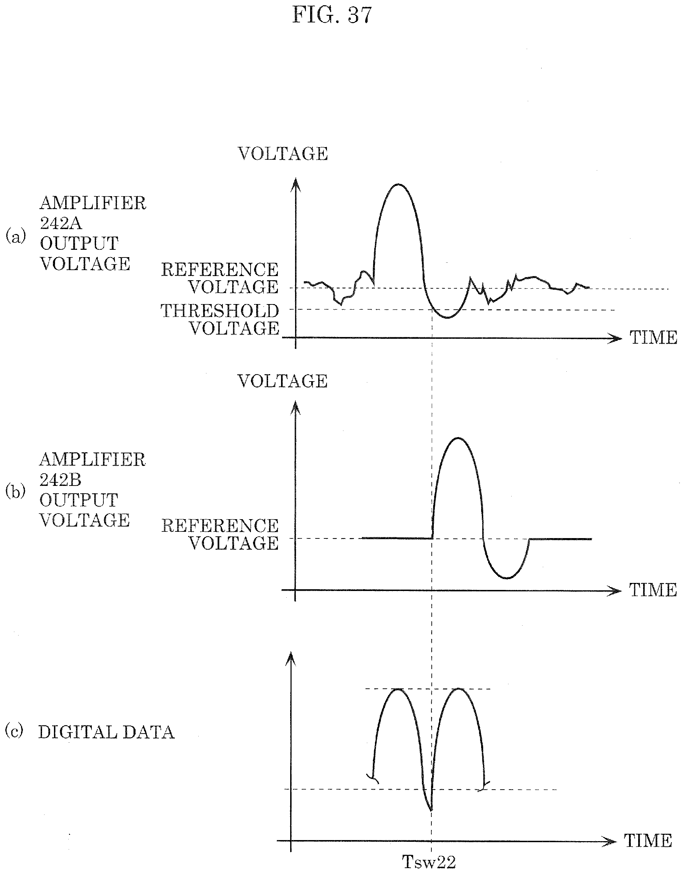

Moreover, in this variation, switch controller 267 is exemplified as switching from the first state to the second state at a point in time at which the digital data whose peak has been detected reaches a reference value (time Tsw21), but the timing of the switching by switch controller 267 is not limited to this example. For example, as illustrated in FIG. 37, the switching may be performed at a point in time at which a predetermined value different than the reference value is reached.

FIG. 37 illustrates advantageous effects achieved by another example of the particle detection sensor according to this variation. More specifically, similar to FIG. 36, FIG. 37 illustrates a case in which two particles having the same diameter are sequentially introduced into detection area DA. In FIG. 37, (a) illustrates a graph indicating output voltage of amplifier 242A, (b) illustrates a graph indicating output voltage of amplifier 242B, and (c) illustrates a graph indicating the digital data. Note that in (b) and (c) in FIG. 37, only the pulse waveforms corresponding to the particles are illustrated; other pulse waveforms, such as those corresponding to noise, are omitted.

At the point in time at which the digital data reaches a predetermined value (time Tsw22), that is to say, at the point in time at which the output voltage of amplifier 242A reaches a threshold voltage, switch controller 267 causes amplifier 242B to amplify the voltage signal in place of amplifier 242A. In other words, at the point in time described above, switch controller 267 switches from the first state in which amplifier 242A is caused to amplify the voltage signal to the second state in which amplifier 242B is caused to amplify the voltage signal.

Even with this configuration, as illustrated in (c) in FIG. 37, the digital data includes two pulse waveforms having the same peak value. Thus, the same advantageous effects described in this variation can be achieved.

Here, from the standpoint of inhibiting unnecessary switching by switch controller 267, the predetermined value is preferably a value corresponding to a voltage lower than the reference voltage by at least the noise amplitude. By selecting such a value, it is possible to inhibit unnecessary switching by switch controller 267 resulting from, for example, noise.

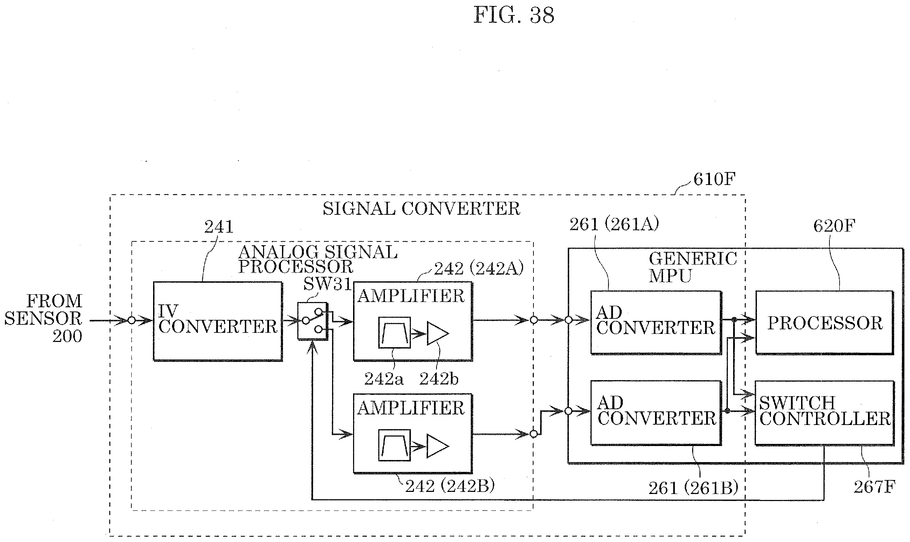

Moreover, in this variation, the particle detection sensor includes one AD converter 261 for the two amplifiers 242, but for example, as illustrated in FIG. 38, each amplifier 242 may be provided with its own AD converter 261.

FIG. 38 is a block diagram illustrating another example of the configuration of part of the particle detection sensor according to this variation. More specifically, FIG. 38 illustrates the configurations of signal converter 610F, processor 620F, and switch controller 267F.

Compared to the above particle detection sensor, the particle detection sensor illustrated in FIG. 38 includes a plurality of AD converters 261 (AD converters 261A and 261B), one for each amplifier 242 (amplifiers 242A and 242B), and does not include switch SW32.

Switch controller 267F according to this variation switches between the first and second states using time-series digital data sampled and quantized by AD converters 261. Note that switch controller 267F may include a switch function corresponding to the above-described switch SW32. Similar to switch controller 267, this function of switch controller 267F can be realized using, for example, a functional module of the generic MPU.

With this configuration as well, the voltage signal amplified by the one amplifier 242 (in this variation, amplifier 242A) and the voltage signal amplified by the other amplifier 242 are independent signals that do not affect one another. Therefore, even if there is a period of time in which the digital data sampled and quantized by the one AD converter 261 (here, AD converter 261A) includes an undershoot, the digital data sampled and quantized by the other AD converter 261 (here, AD converter 261B) will not be affected by the undershoot. As a result, this configuration can achieve the same advantageous effects as described for the above particle detection sensor.

Moreover, since amplifiers 242 include analog elements, there may be differences in properties between processors 620, such as differences in amplification rates, due to varied properties between the analog elements. In this case, even when particles having the same diameter are introduced into detection area DA, there is concern that the diameters calculated by processor 620 will not be the same. Therefore, even when the concentration of particles is high, from the perspective of maintaining particle diameter estimation precision, it is preferable that processor 620 include a plurality of correction coefficients corresponding to each amplifier 242, and calculate particle diameter using the correction coefficients. For example, processor 620 may include correction coefficients that decrease in size as the amplification rate of amplifiers 242 increases and correct a plurality of thresholds for calculating particle diameter using the correction coefficients.

(Other Embodiments, etc.)

Hereinbefore, the present invention has been described based on an embodiment and variations thereof, but the present invention is not limited to the above embodiment or variations.

For example, in the above embodiment and variations thereof, the processor corrects the relative relationship between the peak value and the thresholds by coercing the thresholds delimiting the plurality of peak value segments BS1 through BS4. However, the method of correcting the relative relationship by the processor is not limited to this example.

For example, in the determination processing, the processor may correct the relative relationship by correcting each extracted peak value. Moreover, in this case, each peak value may be corrected using an arbitrary level in the detection signal (for example, noise floor VN) as a reference.

This sort of particle detection sensor achieves the same advantageous effects as the embodiment. In other words, since the peak value segments to which the peak values extracted from the detection signal belong can be precisely discriminated, the mass concentration can be precisely estimated.

Moreover, in the above embodiment and variations, particles are segmented into four particle diameter segments BPi: greater than or equal to 5.0 μm; 2.5 μm to 5.0 μm; 1.0 μm to 2.5 μm; and 0.5 μm to 1.0 μm, but this example is not limiting. The number and ranges of the particle diameter segments may be arbitrarily set according to, for example, what kind of device the particle detection sensor is installed in.

Similarly, the peak value segment may be arbitrarily set in accordance with the particle diameter segment settings or, for example, the precision of the particle detection sensor.

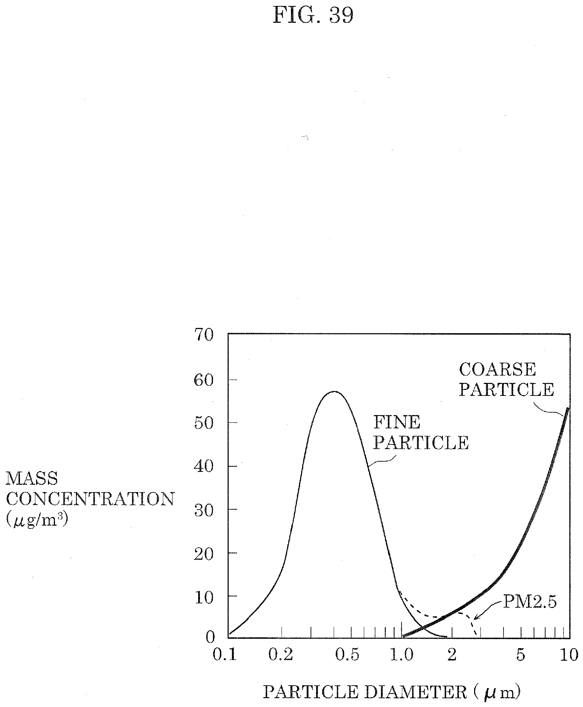

FIG. 39 is a graph illustrating an urban air quality particle distribution.

Since the particle distribution for PM2.5 has a distribution like the one illustrated in FIG. 39, in, for example, a particle detection sensor having a lower particle detection limit of 0.3 μm, when calculating the mass concentration for PM2.5, the particle diameter segments may be set to 0.3 to 0.4 μm, 0.4 to 0.6 μm, 0.6 to 2.5 μm, and 2.5 μm and higher.

Moreover, for example, the number of particle diameter segments and the number of peak value segments do not necessarily need to be the same.

Moreover, in the above descriptions, light projecting element 121 is exemplified as projecting light having a peak wavelength in a range of from 500 nm to 700 nm, both inclusive, but the light projected by light projecting element 121 is not limited to this example and may have a peak wavelength in a range of from 700 nm to 1000 nm, both inclusive,.

Moreover, the timing of the correction of the relative relationship is not limited. In other words, the processor may correct the relative relationship only once before the peak value counting processing (S33), and, alternatively, may correct the relative relationship each time a peak value is extracted from the detection signal.

Moreover, the processor according to the above embodiment and variations thereof and/or the elements included in the generic MPU according to the above embodiment and variations thereof may be configured as dedicated hardware o may be realized by executing a software program suitable for the element. Each structural element may be realized as a result of a program execution unit of a CPU or processor or the like loading and executing a software program stored in a storage medium such as a hard disk or a semiconductor memory chip.

Moreover, in Variation 2 of the above embodiment, the one or more thresholds (first thresholds) that delimit the plurality of peak value segments may include an arbitrary number of thresholds set at arbitrary intervals in accordance with a particle diameter distribution to be measured. Similarly, the one or more thresholds (second thresholds) that delimit the plurality of particle diameter segments may include an arbitrary number of thresholds set at arbitrary intervals in accordance with a particle diameter distribution to be measured.

In this way, it is possible to set the first threshold and the second threshold in advance without performing, for example, an inverse operation (deconvolution), by setting the first threshold and the second threshold in accordance with a particle diameter distribution to be measured (for example, a PM2.5 particle distribution). Therefore, the mass concentration can be precisely calculated with simple calculation processing in a short amount of measuring time.

Note that the first threshold and the second threshold may both include an arbitrary number of thresholds set at arbitrary intervals in accordance with a particle diameter distribution to be measured, and, alternatively, one of the first threshold and the second threshold may set in this manner.

Moreover, in the above embodiment and variations thereof, the medium that includes the particles is exemplified as a gas (air), but may be a medium other than a gas (for example, a liquid such as water).

Moreover, in the above embodiment and variations thereof, the configuration of the sensor is not limited to the above described examples; it is acceptable so long as the sensor includes a light projecting element and a light receiving element, and detects particles in the gas by the light receiving element receiving scattered light from the light projecting element that has been scattered by particles in the detection area DA. With this configuration as well, a particle detection sensor including such a particle detection sensor can measure the diameter of a particle in a gas.

The configuration of the amplifier is not limited to the configuration described above; it is acceptable if IV converter 241 at least amplifies the voltage signal output from IV converter 241 in a predetermined band. In other words, the amplifier need not include bandpass filter 242a, and may include, for example, a highpass filter or lowpass filter. Moreover, amplifier 242b may be provided at one or a plurality of stages.

The configuration of the generic MPU is not limited to the configuration described above; it is acceptable if the generic MPU at least includes AD converter 261 that samples and quantifies the voltage signal amplified by amplifier 242. Even with such a configuration, the particle detection sensor including such a generic MPU can perform waveform analysis, for example, using the digital data generated by AD converter 261, and can analyze various aspects about particles included in the gas. Thus, it is possible to measure particle diameter.

For example, the generic MPU may detect and remove noise from the voltage signal by using an FFT (Fast Fourier Transform) on the digital data generated by AD converter 261.

Moreover, in this embodiment, processor 620 is not limited to the above description; it is acceptable if processor 620 at least calculates (computes) the diameter of a particle using digital data and a correction coefficient. For example, processor 620 may calculate a peak value in the digital data, correct the peak value using the calculated peak value and correction coefficient fk1 stored in memory 650, and calculate the diameter of the particle using the corrected peak value.

Moreover, the correction coefficient is not limited to a coefficient generated by being written in a manufacturing process, and may be, for example, a coefficient generated every time a predetermined time period elapses after sensor 200 is tuned on. In this way, using correction coefficients generated after sensor 200 is turned on makes it possible for particle detection sensor 1 to inhibit degradation in particle diameter calculation precision resulting from, for example, degradation of parts in sensor 200.

Moreover, in the above descriptions, the correction coefficient stored in memory 650 is exemplified as a coefficient based on a value calculated according to current output from sensor 200 when a reference particle is introduced into detection area DA, but this example is not limiting. It is sufficient if the correction coefficient is at least in accordance with the sensitivity of sensor 200 installed in the particle detection sensor in which memory 650 is installed. For example, the correction coefficient may be in accordance with the sensitivity of sensor 200 for an average sensitivity of a plurality of particle detection sensors.

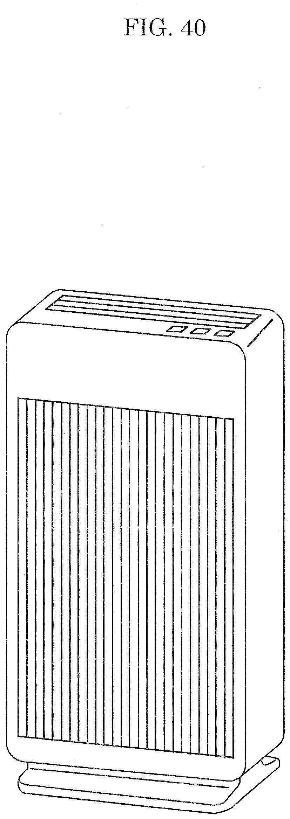

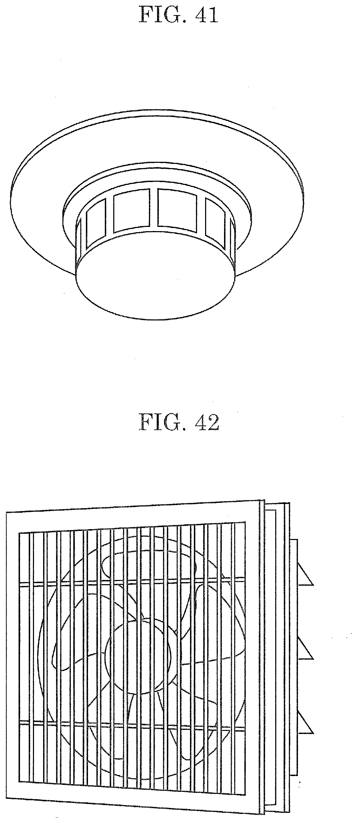

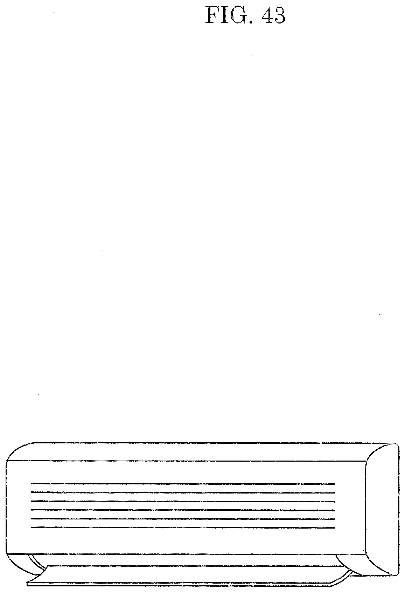

For example, in the above embodiment and variations, the particle detection sensor is described as being included in, for example, the air purifier illustrated in FIG. 40, but this example is not limiting. The particle detection sensor may be installed in, for example, a dust sensor, the smoke detector illustrated in FIG. 41, the ventilation fan illustrated in FIG. 42, an air conditioning unit such as the air conditioner illustrated in FIG. 43, or some other arbitrary device.

Variation 5 of the embodiment may be combined with Variation 6 of the embodiment to control the gain for each of the plurality of amplifiers 242.

REFERENCE MARKS IN THE DRAWINGS

| | |
|---|---|
| 1, 1A, 1B | particle detection sensor |
| 2, | particle |
| 121 | light projecting element |
| 131 | light receiving element |
| 241 | IV converter |
| 242, 242A, 242B | amplifier |
| 261, 261A, 261B | AD converter |
| 620, 620A, 620B, 620D, 620F | processor |
| 650 | memory |
| DA | detection area |

**Claims**

1. A particle detection sensor (1) that detects particles in a gas, the particle detection sensor (1) comprising:

a light projecting element (121);
a light receiving element (131) that receives scattered light, the scattered light being light from the light projecting element (121) that has been scattered by the particles in a detection area (DA); and
a processor (620) that calculates a mass concentration of the particles in the gas using a detection signal indicating an output from the light receiving element (131),
wherein the processor (620) performs:

determination processing of determining which of a plurality of peak value segments (BS1, BS2, BS3, BS4) delimited by one or more first thresholds (Vt1, Vt2, Vt3, Vt4) each of a plurality of peak values (VS1, VS2, VS3, VS4) extracted from a waveform (W1, W2, W3, W4) of the detection signal belongs to;
estimation processing of estimating a total number of the particles in each of a plurality of particle diameter segments (BP1, BP2, BP3, BP4) delimited by one or more second thresholds using a total number of the plurality of peak values (VS1, VS2, VS3, VS4) determined for each of the plurality of peak value segments (BS1, BS2, BS3, BS4) by the determination processing and a content ratio of each of the plurality of particle diameter segments (BP1, BP2, BP3, BP4) in each of the plurality of peak value segments (BS1, BS2, BS3, BS4), wherein the content ratios in one peak value segment (BS1, BS2, BS3, BS4) among the plurality of peak value segments (BS1, BS2, BS3, BS4) are values based on the total number of the plurality of peak values (VS1, VS2, VS3, VS4) determined for the one peak value segment (BS1, BS2, BS3, BS4), the total number of the plurality of peak values (VS1, VS2, VS3, VS4) determined for each of the plurality of peak value segments (BS1, BS2, BS3, BS4) larger than the one peak value segment (BS1, BS2, BS3, BS4), and a change in signal strength in accordance with position in the detection area (DA);

calculation processing of calculating the mass concentration using the total number of the particles in each of the plurality of particle diameter segments (BP1, BP2, BP3, BP4);
wherein in the determination processing, the processor (620):

corrects a relative relationship between the plurality of peak values (VS1, VS2, VS3, VS4) extracted from the waveform (W1, W2, W3, W4) of the detection signal and the one or more first thresholds (Vt1, Vt2, Vt3, Vt4) by correcting the one or more first thresholds (Vt1, Vt2, Vt3, Vt4) by using a correction coefficient (fk1), and calculates the mass concentration by performing the determination processing of determining which of a plurality of peak value segments (BS1, BS2, BS3, BS4) delimited by the one or more first thresholds (Vt1, Vt2, Vt3, Vt4) each of the plurality of peak values (VS1, VS2, VS3, VS4) belongs to using the corrected relative relationship; and
corrects the relative relationship by correcting each of the one or more first thresholds (Vt1, Vt2, Vt3, Vt4) so as to maintain a ratio of difference between upper and lower limits of each of the plurality of peak value segments (BS1, BS2, BS3, BS4) between the plurality of peak value segments (BS1, BS2, BS3, BS4).

2. The particle detection sensor (1) according to claim 1, wherein
at least one of: (i) the one or more first thresholds (Vt1, Vt2, Vt3, Vt4) and (ii) the one or more second thresholds includes an arbitrary number of thresholds set at arbitrary intervals in accordance with a particle diameter distribution to be measured.

3. The particle detection sensor (1) according to claim 1 or 2, wherein
the one or more first thresholds (Vt1, Vt2, Vt3, Vt4) include a noise threshold corresponding to a noise peak value included in the detection signal, and
in the estimation processing, the processor (620):
estimates the total number of the particles in each of the plurality of particle diameter segments (BP1, BP2, BP3, BP4) using the total number of the plurality of peak values (VS1, VS2, VS3, VS4) determined for each of the plurality of peak value segments (BS1, BS2, BS3, BS4) excluding a peak value segment (BS1, BS2, BS3, BS4) whose upper limit is determined by the noise threshold and the content ratios in each of the plurality of peak value segments (BS1, BS2, BS3, BS4) excluding the peak value segment (BS1, BS2, BS3, BS4) whose upper limit is determined by the noise threshold.

4. The particle detection sensor (1) according to any one of claims 1 to 3, wherein
in the calculation processing, the processor (620):
calculates the mass concentration by multiplying, for each of the plurality of particle diameter segments (BP1, BP2, BP3, BP4), the total number of the particles in the particle diameter segment (BP1, BP2, BP3, BP4) with a coefficient based on an average mass in the particle diameter segment (BP1, BP2, BP3, BP4).

5. The particle detection sensor (1) according to any one of claims 1 to 4, wherein
in the calculation processing, the processor (620):
calculates the mass concentration by multiplying, for each of the plurality of particle diameter segments (BP1, BP2, BP3, BP4), the total number of the particles in the particle diameter segment (BP1, BP2, BP3, BP4) with a coefficient based on a representative mass based on a presence ratio of the particles in the particle diameter segment (BP1, BP2, BP3, BP4).

6. The particle detection sensor (1) according to any one of claims 1 to 5, wherein
in the calculation processing, the processor (620):
calculates the mass concentration in each of the plurality of particle diameter segments (BP1, BP2, BP3, BP4) in a desired particle diameter range, and calculates the mass concentration in the desired particle diameter range by summing the calculated mass concentrations.

7. The particle detection sensor (1) according to claim 1, wherein
in the determination processing, the processor (620):
corrects each of the one or more first thresholds (Vt1, Vt2, Vt3, Vt4) using an arbitrary level in the detection signal as a reference.

8. The particle detection sensor (1) according to claim 1, wherein
in the determination processing, the processor (620):

corrects the relative relationship by correcting each of the extracted plurality of peak values (VS1, VS2, VS3, VS4).

9. The particle detection sensor (1) according to claim 8, wherein
in the determination processing, the processor (620):
corrects each of the plurality of peak values (VS1, VS2, VS3, VS4) using an arbitrary level in the detection signal as a reference.

10. The particle detection sensor (1) according to any one of claims 1 to 9, wherein
in the determination processing, the processor (620):
corrects the relative relationship based on the output from the light receiving element (131) when a reference particle having a predetermined diameter is introduced into the detection area (DA).

11. The particle detection sensor (1) according to any one of claims 1 to 10, wherein
the light projecting element (121) projects light having a peak wavelength in a range of from 500 nm to 700 nm, both inclusive, and
one of the one or more first thresholds (Vt1, Vt2, Vt3, Vt4) is a value corresponding to a particle diameter of 1.0 $\mu$m or less.

12. The particle detection sensor (1) according to any one of claims 1 to 11, further comprising:

an IV converter that generates a voltage signal by converting current output from the light receiving element (131) into voltage;
an amplifier that amplifies the voltage signal in a predetermined band; and
an AD converter that samples and quantizes the voltage signal amplified by the amplifier.

13. The particle detection sensor (1) according to any one of claims 1 to 12, further comprising:

a memory storing a correction coefficient dependent on a sensitivity of the particle detection sensor (1),
wherein the correction coefficient is a value calculated based on current output from the light receiving element (131) when a standard particle having a predetermined diameter is introduced into the detection area (DA), and
the processor (620) corrects the relative relationship using the correction coefficient.

**Patentansprüche**

1. Partikeldetektionssensor (1), der Partikel in einem Gas detektiert, wobei der Partikeldetektionssensor (1) umfasst:

ein Lichtprojektionselement (121);
ein Lichtempfangselement (131), das gestreutes Licht empfängt, wobei das gestreute Licht Licht von dem Lichtprojektionselement (121) ist, das von den Partikeln in einem Detektionsbereich (DA) gestreut wurde; und
einen Prozessor (620), der eine Massenkonzentration der Partikel in dem Gas unter Verwendung eines Detektionssignals berechnet, das eine Ausgabe von dem Lichtempfangselement (131) angibt,
wobei der Prozessor (620) durchführt:

Bestimmungsverarbeitung des Bestimmens, zu welchem einer Mehrzahl von Spitzenwertsegmenten (BS1, BS2, BS3, BS4), die durch einen oder mehrere erste Schwellenwerte (Vt1, Vt2, Vt3, Vt4) begrenzt sind, jeder einer Mehrzahl von Spitzenwerten (VS1, VS2, VS3, VS4) gehört, die aus einer Wellenform (W1, W2, W3, W4) des Detektionssignals extrahiert werden;
Schätzverarbeitung des Schätzens einer Gesamtzahl an Partikeln in jedem einer Mehrzahl von Partikeldurchmessersegmenten (BP1, BP2, BP3, BP4), die durch einen oder mehrere zweite Schwellenwerte begrenzt sind, unter Verwendung einer Gesamtzahl der Mehrzahl von Spitzenwerten (VS1, VS2, VS3, VS4), die für jedes der Mehrzahl von Spitzenwertsegmenten (BS1, BS2, BS3, BS4) durch die Bestimmungsverarbeitung bestimmt werden, und eines Inhaltsverhältnisses jedes der Mehrzahl von Partikeldurchmessersegmenten (BP1, BP2, BP3, BP4) in jedem der Mehrzahl von Spitzenwertsegmenten (BS1, BS2, BS3, BS4), wobei die Inhaltsverhältnisse in einem Spitzenwertsegment (BS1, BS2, BS3, BS4) unter der Mehrzahl von Spitzenwertsegmenten (BS1, BS2, BS3, BS4) Werte sind, die auf der Gesamtzahl der Mehrzahl von Spitzenwerten (VS1, VS2, VS3, VS4), die für das eine Spitzenwertsegment (BS1, BS2, BS3, BS4) bestimmt werden, wobei die Gesamtzahl der Mehrzahl von Spitzenwerten (VS1, VS2, VS3, VS4), die für jedes der Mehrzahl von Spitzenwertsegmenten (BS1, BS2, BS3, BS4) bestimmt werden, größer ist als das eine Spitzenwertsegment (BS1, BS2, BS3, BS4), und einer Änderung der Signalstärke gemäß der Position in dem Detektionsbereich (DA) basieren;

Berechnungsverarbeitung der Berechnung der Massenkonzentration unter Verwendung der Gesamtzahl der Partikel in jedem der Mehrzahl von Partikeldurchmessersegmenten (BP1, BP2, BP3, BP4);

wobei bei der Bestimmungsverarbeitung der Prozessor (620):

eine relative Beziehung zwischen der Mehrzahl von Spitzenwerten (VS1, VS2, VS3, VS4), die aus der Wellenform (W1, W2, W3, W4) des Detektionssignals extrahiert werden, und dem einen oder mehreren ersten Schwellenwerten (Vt1, Vt2, Vt3, Vt4) korrigiert, indem er den einen oder die mehreren ersten Schwellenwerte (Vt1, Vt2, Vt3, Vt4) unter Verwendung eines Korrekturkoeffizienten (fk1) korrigiert, und die Massenkonzentration durch Durchführen der Bestimmungsverarbeitung des Bestimmens, zu welchem der Mehrzahl von Spitzenwertsegmenten (BS1, BS2, BS3, BS4), die durch den einen oder die mehreren ersten Schwellenwerte (Vt1, Vt2, Vt3, Vt4) begrenzt sind, jeder der Mehrzahl von Spitzenwerten (VS1, VS2, VS3, VS4) gehört, unter Verwendung der korrigierten relativen Beziehung berechnet; und

die relative Beziehung durch Korrigieren jedes des einen oder der mehreren ersten Schwellenwerte (Vt1, Vt2, Vt3, Vt4) dahingehend korrigiert, ein Differenzverhältnis zwischen oberen und unteren Grenzen jedes der Mehrzahl von Spitzenwertsegmenten (BS1, BS2, BS3, BS4) zwischen der Mehrzahl von Spitzenwertsegmenten (BS1, BS2, BS3, BS4) beizubehalten.

2.  Partikeldetektionssensor (1) nach Anspruch 1, wobei
zumindest eines von: (i) der eine oder die mehreren ersten Schwellenwerte (Vt1, Vt2, Vt3, Vt4) und (ii) der eine oder die mehreren zweiten Schwellenwerte eine beliebige Anzahl von Schwellenwerten enthält, die in willkürlichen Intervallen gemäß einer zu messenden Partikeldurchmesserverteilung festgelegt sind.

3.  Partikeldetektionssensor (1) nach Anspruch 1 oder 2, wobei
der eine oder die mehreren ersten Schwellenwerte (Vt1, Vt2, Vt3, Vt4) einen Rauschgrenzwert enthalten, der einem in dem Detektionssignal enthaltenen Rauschspitzenwert entspricht, und
bei der Schätzverarbeitung der Prozessor (620):
die Gesamtzahl an Partikeln in jedem der Mehrzahl von Partikeldurchmessersegmenten (BP1, BP2, BP3, BP4) unter Verwendung der Gesamtzahl der Mehrzahl von Spitzenwerten (VS1, VS2, VS3, VS4), die für jedes der Mehrzahl von Spitzenwertsegmenten (BS1, BS2, BS3, BS4) bestimmt werden, mit Ausnahme eines Spitzenwertsegments (BS1, BS2, BS3, BS4), dessen Obergrenze durch den Rauschgrenzwert bestimmt wird, und der Inhaltsverhältnisse in jedem der Mehrzahl von Spitzenwertsegmenten (BS1, BS2, BS3, BS4) schätzt, mit Ausnahme des Spitzenwertsegments (BS1, BS2, BS3, BS4), dessen Obergrenze durch den Rauschgrenzwert bestimmt wird.

4.  Partikeldetektionssensor (1) nach einem der Ansprüche 1 bis 3, wobei
bei der Berechnungsverarbeitung der Prozessor (620):
die Massenkonzentration durch Multiplizieren, für jedes der Mehrzahl von Partikeldurchmessersegmenten (BP1, BP2, BP3, BP4), der Gesamtzahl der Partikel in dem Partikeldurchmessersegment (BP1, BP2, BP3, BP4) mit einem Koeffizienten basierend auf einer durchschnittlichen Masse in dem Partikeldurchmessersegment (BP1, BP2, BP3, BP4) berechnet.

5.  Partikeldetektionssensor (1) nach einem der Ansprüche 1 bis 4, wobei
bei der Berechnungsverarbeitung der Prozessor (620):
die Massenkonzentration durch Multiplizieren, für jedes der Mehrzahl von Partikeldurchmessersegmenten (BP1, BP2, BP3, BP4), der Gesamtzahl der Partikel in dem Partikeldurchmessersegment (BP1, BP2, BP3, BP4) mit einem Koeffizienten basierend auf einer repräsentativen Masse basierend auf einem Anwesenheitsverhältnis der Partikel in dem Partikeldurchmessersegment (BP1, BP2, BP3, BP4) berechnet.

6.  Partikeldetektionssensor (1) nach einem der Ansprüche 1 bis 5, wobei
bei der Berechnungsverarbeitung der Prozessor (620):
die Massenkonzentration in jedem der Mehrzahl von Partikeldurchmessersegmenten (BP1, BP2, BP3, BP4) in einem gewünschten Partikeldurchmesserbereich berechnet und die Massenkonzentration in dem gewünschten Partikeldurchmesserbereich durch Summieren der berechneten Massenkonzentrationen berechnet.

7.  Partikeldetektionssensor (1) nach Anspruch 1, wobei

bei der Bestimmungsverarbeitung der Prozessor (620):
jeden des einen oder der mehreren ersten Schwellenwerte (Vt1, Vt2, Vt3, Vt4) unter Verwendung eines beliebigen Pegels in dem Detektionssignal als eine Referenz korrigiert.

8. Partikeldetektionssensor (1) nach Anspruch 1, wobei
bei der Bestimmungsverarbeitung der Prozessor (620):
die relative Beziehung durch Korrigieren jedes der extrahierten Mehrzahl von Spitzenwerten (VS1, VS2, VS3, VS4) korrigiert.

9. Partikeldetektionssensor (1) nach Anspruch 8, wobei
bei der Bestimmungsverarbeitung der Prozessor (620):
jeden der Mehrzahl von Spitzenwerten (VS1, VS2, VS3, VS4) unter Verwendung eines beliebigen Pegels in dem Detektionssignal als eine Referenz korrigiert.

10. Partikeldetektionssensor (1) nach einem der Ansprüche 1 bis 9, wobei
bei der Bestimmungsverarbeitung der Prozessor (620):
die relative Beziehung basierend auf der Ausgabe von dem Lichtempfangselement (131) korrigiert, wenn ein Referenzpartikel mit einem vorbestimmten Durchmesser in den Detektionsbereich (DA) eingebracht wird.

11. Partikeldetektionssensor (1) nach einem der Ansprüche 1 bis 10, wobei
das Lichtprojektionselement (121) Licht mit einer Spitzenwellenlänge in einem Bereich von 500 nm bis 700 nm, beide einschließlich, projiziert, und einer des einen oder der mehreren ersten Schwellenwerte (Vt1, Vt2, Vt3, Vt4) ein Wert ist, der einem Partikeldurchmesser von 1,0 $\mu$m oder weniger entspricht.

12. Partikeldetektionssensor (1) nach einem der Ansprüche 1 bis 11, ferner umfassend:

einen IV-Wandler, der ein Spannungssignal erzeugt, indem er von dem Lichtempfangselement (131) ausgegebenen Strom in Spannung umwandelt;
einen Verstärker, der das Spannungssignal in einem vorbestimmten Band verstärkt; und
einen AD-Wandler, der das von dem Verstärker verstärkte Spannungssignal abtastet und quantisiert.

13. Partikeldetektionssensor (1) nach einem der Ansprüche 1 bis 12, ferner umfassend:

einen Speicher, der einen Korrekturkoeffizienten speichert, der von einer Empfindlichkeit des Partikeldetektionssensors (1) abhängt,
wobei der Korrekturkoeffizient ein Wert ist, der basierend auf dem von dem Lichtempfangselement (131) ausgegebenen Strom berechnet wird, wenn ein Standardpartikel mit einem vorbestimmten Durchmesser in den Detektionsbereich (DA) eingebracht wird, und
der Prozessor (620) die relative Beziehung unter Verwendung des Korrekturkoeffizienten korrigiert.

## Revendications

1. Capteur de détection de particules (1) qui détecte des particules dans un gaz, le capteur de détection de particules (1) comprenant :

un élément de projection de lumière (121) ;
un élément de réception de lumière (131) qui reçoit de la lumière dispersée, la lumière dispersée étant de la lumière provenant de l'élément de projection de lumière (121) qui a été dispersée par les particules dans une zone de détection (DA) ; et
un processeur (620) qui calcule une concentration massique des particules dans le gaz en utilisant un signal de détection indiquant une sortie de l'élément de réception de lumière (131),
dans lequel le processeur (620) réalise :

un traitement de détermination consistant à déterminer auquel d'une pluralité de segments de valeur de crête (BS1, BS2, BS3, BS4) délimités par un ou plusieurs premiers seuils (Vt1, Vt2, Vt3, Vt4) chacune d'une pluralité de valeurs de crête (VS1, VS2, VS3, VS4) extraites d'une forme d'onde (W1, W2, W3, W4) du signal de détection appartient ;

un traitement d'estimation consistant à estimer un nombre total des particules dans chacun d'une pluralité de segments de diamètre particulaire (BP1, BP2, BP3, BP4) délimités par un ou plusieurs seconds seuils en utilisant un nombre total de la pluralité de valeurs de crête (VS1, VS2, VS3, VS4) déterminées pour chacun de la pluralité de segments de valeur de crête (BS1, BS2, BS3, BS4) par le traitement de détermination et un rapport de teneur de chacun de la pluralité de segments de diamètre particulaire (BP1, BP2, BP3, BP4) dans chacun de la pluralité de segments de valeur de crête (BS1, BS2, BS3, BS4), dans lequel les rapports de teneur dans un segment de valeur de crête (BS1, BS2, BS3, BS4) parmi la pluralité de segments de valeur de crête (BS1, BS2, BS3, BS4) sont des valeurs basées sur le nombre total de la pluralité de valeurs de crête (VS1, VS2, VS3, VS4) déterminées pour le segment de valeur de crête en question (BS1, BS2, BS3, BS4), le nombre total de la pluralité de valeurs de crête (VS1, VS2, VS3, VS4) déterminées pour chacun de la pluralité de segments de valeur de crête (BS1, BS2, BS3, BS4) étant supérieur au segment de valeur de crête en question (BS1, BS2, BS3, BS4), et un changement d'intensité de signal conformément à la position dans la zone de détection (DA) ;
un traitement de calcul consistant à calculer la concentration massique en utilisant le nombre total des particules dans chacun de la pluralité de segments de diamètre particulaire (BP1, BP2, BP3, BP4) ;
dans lequel dans le traitement de détermination, le processeur (620) :

corrige une relation relative entre la pluralité de valeurs de crête (VS1, VS2, VS3, VS4) extraites de la forme d'onde (W1, W2, W3, W4) du signal de détection et le ou les premiers seuils (Vt1, Vt2, Vt3, Vt4) en corrigeant le ou les premiers seuils (Vt1, Vt2, Vt3, Vt4) en utilisant un coefficient de correction (fk1), et calcule la concentration massique en réalisant le traitement de détermination consistant à déterminer auquel d'une pluralité de segments de valeur de crête (BS1, BS2, BS3, BS4) délimités par le ou les premiers seuils (Vt1, Vt2, Vt3, Vt4) chacune d'une pluralité de valeurs de crête (VS1, VS2, VS3, VS4) appartient en utilisant la relation relative corrigée ; et
corrige la relation relative en corrigeant chacun du ou des premiers seuils (Vt1, Vt2, Vt3, Vt4) de manière à maintenir un rapport de différence entre des limites supérieure et inférieure de chacun de la pluralité de segments de valeur de crête (BS1, BS2, BS3, BS4) entre la pluralité de segments de valeur de crête (BS1, BS2, BS3, BS4).

2.   Capteur de détection de particules (1) selon la revendication 1, dans lequel au moins un de : (i) le ou les premiers seuils (Vt1, Vt2, Vt3, Vt4) et (ii) le ou les seconds seuils incluent un nombre arbitraire de seuils définis à des intervalles arbitraires conformément à une distribution de diamètres particulaires devant être mesurée.

3.   Capteur de détection de particules (1) selon la revendication 1 ou 2, dans lequel le ou les premiers seuils (Vt1, Vt2, Vt3, Vt4) incluent un seuil de bruit correspondant à une valeur de crête de bruit inclue dans le signal de détection, et dans le traitement d'estimation, le processeur (620) :
estime le nombre total des particules dans chacun de la pluralité de segments de diamètre particulaire (BP1, BP2, BP3, BP4) en utilisant le nombre total de la pluralité de valeurs de crête (VS1, VS2, VS3, VS4) déterminées pour chacun de la pluralité de segments de valeur de crête (BS1, BS2, BS3, BS4) en excluant un segment de valeur de crête (BS1, BS2, BS3, BS4) dont la limite supérieure est déterminée par le seuil de bruit et les rapports de teneur dans chacun de la pluralité de segments de valeur de crête (BS1, BS2, BS3, BS4) en excluant le segment de valeur de crête (BS1, BS2, BS3, BS4) dont la limite supérieure est déterminée par le seuil de bruit.

4.   Capteur de détection de particules (1) selon l'une quelconque des revendications 1 à 3, dans lequel
dans le traitement de calcul, le processeur (620) :
calcule la concentration massique en multipliant, pour chacun de la pluralité de segments de diamètre particulaire (BP1, BP2, BP3, BP4), le nombre total des particules dans le segment de diamètre particulaire (BP1, BP2, BP3, BP4) avec un coefficient basé sur une masse moyenne dans le segment de diamètre particulaire (BP1, BP2, BP3, BP4).

5.   Capteur de détection de particules (1) selon l'une quelconque des revendications 1 à 4, dans lequel
dans le traitement de calcul, le processeur (620) :
calcule la concentration massique en multipliant, pour chacun de la pluralité de segments de diamètre particulaire (BP1, BP2, BP3, BP4), le nombre total des particules dans le segment de diamètre particulaire (BP1, BP2, BP3, BP4) avec un coefficient basé sur une masse représentative basée sur un rapport de présence des particules dans le segment de diamètre particulaire (BP1, BP2, BP3, BP4).

6.   Capteur de détection de particules (1) selon l'une quelconque des revendications 1 à 5, dans lequel

dans le traitement de calcul, le processeur (620) :
calcule la concentration massique dans chacun de la pluralité de segments de diamètre particulaire (BP1, BP2, BP3, BP4) dans une plage de diamètre particulaire souhaitée, et calcule la concentration massique dans la plage de diamètre particulaire souhaitée en additionnant les concentrations massiques calculées.

7. Capteur de détection de particules (1) selon la revendication 1, dans lequel
dans le traitement de détermination, le processeur (620) :
corrige chacun du ou des premiers seuils (Vt1, Vt2, Vt3, Vt4) en utilisant un niveau arbitraire dans le signal de détection comme une référence.

8. Capteur de détection de particules (1) selon la revendication 1, dans lequel
dans le traitement de détermination, le processeur (620) :
corrige la relation relative en corrigeant chacune de la pluralité extraite de valeurs de crête (VS1, VS2, VS3, VS4).

9. Capteur de détection de particules (1) selon la revendication 8, dans lequel
dans le traitement de détermination, le processeur (620) :
corrige chacune de la pluralité de valeurs de crête (VS1, VS2, VS3, VS4) en utilisant un niveau arbitraire dans le signal de détection comme une référence.

10. Capteur de détection de particules (1) selon l'une quelconque des revendications 1 à 9, dans lequel
dans le traitement de détermination, le processeur (620) :
corrige la relation relative en fonction de la sortie provenant de l'élément de réception de lumière (131) lorsqu'une particule de référence ayant un diamètre prédéterminé est introduite dans la zone de détection (DA).

11. Capteur de détection de particules (1) selon l'une quelconque des revendications 1 à 10, dans lequel
l'élément de projection de lumière (121) projette de la lumière ayant une longueur d'onde de crête dans une plage allant de 500 nm à 700 nm, les deux incluses, et
un du ou des premiers seuils (Vt1, Vt2, Vt3, Vt4) est une valeur correspondant à un diamètre particulaire de 1,0 $\mu$m ou moins.

12. Capteur de détection de particules (1) selon l'une quelconque des revendications 1 à 11, comprenant en outre :

un convertisseur IT qui génère un signal de tension en convertissant du courant sorti de l'élément de réception de lumière (131) en tension ;
un amplificateur qui amplifie le signal de tension dans une bande prédéterminée ; et
un convertisseur AN qui échantillonne et quantifie le signal de tension amplifié par l'amplificateur.

13. Capteur de détection de particules (1) selon l'une quelconque des revendications 1 à 12, comprenant en outre :

une mémoire stockant un coefficient de correction dépendant d'une sensibilité du capteur de détection de particules (1),
dans lequel le coefficient de correction est une valeur calculée en fonction du courant sorti de l'élément de réception de lumière (131) lorsqu'une particule standard ayant un diamètre prédéterminé est introduite dans la zone de détection (DA), et
le processeur (620) corrige la relation relative en utilisant le coefficient de correction.

# FIG. 1

1000

**AIR PURIFIER**

1

**PARTICLE DETECTION SENSOR**

200

**SENSOR**

610

**SIGNAL CONVERTER**

DETECTION SIGNAL

630

**CONTROL**

620

**PROCESSOR**

600

**CONTROLLER**

650

**MEMORY**

| CORRECTION COEFFICIENT | fk1 |
| --- | --- |

37

FIG. 2

# FIG. 3

FIG. 4

EP 3 214 429 B1

FIG. 5

# FIG. 6

```
                    ┌──────────────┐
                    │    START     │
                    └──────┬───────┘
                           │
                           ▼
          ┌────────────────────────────────┐  ⟋ S10
          │    OBTAIN DETECTION SIGNAL      │
          └────────────────┬───────────────┘
                           │
                           ▼
          ┌────────────────────────────────┐  ⟋ S20
          │      EXTRACT PEAK VALUES        │
          └────────────────┬───────────────┘
                           │
                           ▼
          ┌────────────────────────────────┐  ⟋ S30
          │       DETECT PARTICLES          │
          └────────────────┬───────────────┘
                           │
                           ▼
                    ┌──────────────┐
                    │     END      │
                    └──────────────┘
```

FIG. 7

## FIG. 8A

## FIG. 8B

## FIG. 8C

FIG. 9

```
     ┌─────────────────────────────┐          S30
     │    PARTICLE DETECTION        │
     │      PROCESSING              │
     │        START                │
     └─────────────────────────────┘
                   │
                   ▼
     ┌─────────────────────────────┐  S31
     │  READ CORRECTION COEFFICIENT │
     │  FROM MEMORY                 │
     └─────────────────────────────┘
                   │
                   ▼
     ┌─────────────────────────────┐  S32
     │    PERFORM CORRECTION        │
     └─────────────────────────────┘
                   │
                   ▼
     ┌─────────────────────────────┐  S33
     │  COUNT NUMBER OF  PEAK       │
     │  VALUES FOR EACH THRESHOLD   │
     │  SEGMENT                     │
     └─────────────────────────────┘
                   │
                   ▼
     ┌─────────────────────────────┐  S34
     │  ESTIMATE NUMBER OF PARTICLES│
     │  FOR EACH PARTICLE DIAMETER  │
     │  SEGMENT                     │
     └─────────────────────────────┘
                   │
                   ▼
     ┌─────────────────────────────┐  S35
     │  CALCULATE MASS CONCENTRATION│
     └─────────────────────────────┘
                   │
                   ▼
          ┌─────────────────┐
          │      END        │
          └─────────────────┘
```

FIG. 10

FIG. 11

# FIG. 12

```
        ┌─────────────────────┐
        │   INITIAL SETTING   │
        │     PROCESSING      │
        │       START         │
        └─────────────────────┘
                  │
                  ▼
    ┌───────────────────────────────┐  S50
    │  INTRODUCE REFERENCE PARTICLES │
    └───────────────────────────────┘
                  │
                  ▼
    ┌───────────────────────────────┐  S10
    │    OBTAIN DETECTION SIGNAL     │
    └───────────────────────────────┘
                  │
                  ▼
    ┌───────────────────────────────┐  S20
    │      EXTRACT PEAK VALUES       │
    └───────────────────────────────┘
                  │
                  ▼
    ┌───────────────────────────────┐  S60
    │ CALCULATE CORRECTION COEFFICIENT│
    └───────────────────────────────┘
                  │
                  ▼
    ┌───────────────────────────────┐  S70
    │       WRITE INTO MEMORY        │
    └───────────────────────────────┘
                  │
                  ▼
        ┌─────────────────────┐
        │         END         │
        └─────────────────────┘
```

# FIG. 13

VOLTAGE

SECOND DETECTION WAVEFORM

IDEAL WAVEFORM

FIRST DETECTION WAVEFORM

PEAK VALUE (a.u.)

P2

Pl

P1

VN

TIME

EP 3 214 429 B1

# FIG. 14

S33

PEAK VALUE COUNTING
PROCESSING
START

INITIALIZATION (i = 1, NBS[ ] = 0) — S301

S302

WM > CORRECTED Vti — Yes

S305

INCREMENT i

No

S304

No — i = 4?

S303

DETERMINE TO
BELONG TO
BSi / INCREMENT
NBSi

Yes

S306

DETERMINE TO BELONG TO
BS4 / INCREMENT NBS4

END

FIG. 15

FIG. 16

# FIG. 17

1000

AIR PURIFIER

1A

PARTICLE DETECTION
SENSOR

200

SENSOR

610

SIGNAL
CONVERTER

DETECTION
SIGNAL

620A

PROCESSOR

621

fk1

630

CONTROL

600

CONTROLLER

# FIG. 18

1000

**AIR PURIFIER**

1B

**PARTICLE DETECTION SENSOR**

200

| SENSOR |

610

| SIGNAL CONVERTER |

DETECTION SIGNAL

620B

| PROCESSOR |

630

| CONTROL |

600

| CONTROLLER |

FIG. 19

FIG. 20

```
      ┌─────────────────────────┐
      │   PARTICLE DETECTION    │          S30B
      │      PROCESSING         │
      │        START            │
      └───────────┬─────────────┘
                  │
                  ▼
  ┌──────────────────────────────────┐      S33
  │  COUNT NUMBER OF PEAK VALUES      │
  │  FOR EACH PEAK VALUE SEGMENT      │
  └────────────────┬─────────────────┘
                   │
                   ▼
  ┌──────────────────────────────────┐      S34
  │  ESTIMATE NUMBER OF PARTICLES FOR │
  │  EACH PARTICLE DIAMETER SEGMENT   │
  └────────────────┬─────────────────┘
                   │
                   ▼
  ┌──────────────────────────────────┐      S35
  │   CALCULATE MASS CONCENTRATION    │
  └────────────────┬─────────────────┘
                   │
                   ▼
           ┌───────────────┐
           │      END      │
           └───────────────┘
```

FIG. 21

```
        ┌─────────────────────────────┐
        │    MASS CONCENTRATION       │          S35
        │  CALCULATION PROCESSING     │
        │           START             │
        └─────────────────────────────┘
                       │
                       ▼
   ┌──────────────────────────────────┐   S311
   │ MULTIPLY NUMBER OF PARTICLES     │
   │ WITH COEFFICIENT BASED ON MASS   │
   │ FOR EACH PARTICLE DIAMETER       │
   │ SEGMENT                          │
   └──────────────────────────────────┘
                       │
                       ▼
   ┌──────────────────────────────────┐   S312
   │    SUM MULTIPLICATION RESULTS    │
   └──────────────────────────────────┘
                       │
                       ▼
            ┌─────────────────┐
            │      END        │
            └─────────────────┘
```

# FIG. 22

FIG. 23

FIG. 24

PASSAGE
RATIO

AERODYNAMIC
DIAMETER
($\mu$m)

FIG. 25

EP 3 214 429 B1

EP 3 214 429 B1

# FIG. 26

61

## FIG. 27A

WHEN Vin < Vio

VOLTAGE

REFERENCE
VOLTAGE

Vout

E0

SIGNAL LOSS

TIME

## FIG. 27B

WHEN Vio ≤ Vin

VOLTAGE

REFERENCE
VOLTAGE

Vout

E0

SIGNAL REDUCTION

TIME

# FIG. 28

242b

Vin

Vio

OPamp

+

−

DETERMINER  263

DA CONVERTER  264

Vda

# FIG. 29

(a) OUTPUT FROM DETERMINER 263

Vout < REFERENCE VOLTAGE

REFERENCE VOLTAGE ≤ Vout

1

0

TIME

(b) OUTPUT OLTAGE (Vda) FROM DA CONVERTER 264

Vfix

TIME

# FIG. 30

# FIG. 31

FROM
SENSOR
200

TO
AMPLIFIER
242

241

SW11
(SW11b)

SW11
(SW11c)

R11
(R11a)

R11
(R11b)

R11
(R11c)

CONTROL
SIGNAL

CONTROL
SIGNAL

FROM GAIN
CONTROLLER 265

EP 3 214 429 B1

FIG. 32

EP 3 214 429 B1

FIG. 33

| | FINE PARTICLES | COARSE PARTICLES |
|---|---|---|
| NO AGC | | |
| AGC | | |

FIG. 34

EP 3 214 429 B1

FIG. 35

FIG. 36

(a) AMPLIFIER 242A OUTPUT VOLTAGE

VOLTAGE

PEAK SEARCH

REFERENCE VOLTAGE

TIME

(b) AMPLIFIER 242B OUTPUT VOLTAGE

VOLTAGE

REFERENCE VOLTAGE

TIME

(c) DIGITAL DATA

TIME

Tsw21

# FIG. 37

VOLTAGE

(a) AMPLIFIER 242A OUTPUT VOLTAGE

REFERENCE VOLTAGE

THRESHOLD VOLTAGE

TIME

VOLTAGE

(b) AMPLIFIER 242B OUTPUT VOLTAGE

REFERENCE VOLTAGE

TIME

(c) DIGITAL DATA

TIME

Tsw22

FIG. 38

EP 3 214 429 B1

FIG. 39

FIG. 40

## FIG. 41

## FIG. 42

FIG. 43

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2388569 A1

- JP 3731338 B